(19) **Europäisches Patentamt / European Patent Office / Office européen des brevets**

(11) **EP 4 718 790 A1**

(12) **EUROPEAN PATENT APPLICATION**
published in accordance with Art. 153(4) EPC

(43) Date of publication:
01.04.2026 Bulletin 2026/14

(21) Application number: 24830645.8

(22) Date of filing: 21.06.2024

(51) International Patent Classification (IPC):
*H04L 25/02* (2006.01)    *H04L 5/00* (2006.01)

(52) Cooperative Patent Classification (CPC):
H04L 5/00; H04L 25/02; H04L 27/26; H04W 84/12

(86) International application number:
PCT/CN2024/100659

(87) International publication number:
WO 2025/002000 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310810353

(71) Applicant: Huawei Technologies Co., Ltd.
Shenzhen, Guangdong 518129 (CN)

(72) Inventors:
• MAO, Zhi
Shenzhen, Guangdong 518129 (CN)
• LIU, Chenchen
Shenzhen, Guangdong 518129 (CN)
• LI, Ying
Shenzhen, Guangdong 518129 (CN)
• GAN, Ming
Shenzhen, Guangdong 518129 (CN)

(74) Representative: Gill Jennings & Every LLP
The Broadgate Tower
20 Primrose Street
London EC2A 2ES (GB)

(54) **COMMUNICATION METHOD AND DEVICE**

(57) Disclosed are a communication method and apparatus, applied to the field of communication technologies. They are applicable to wireless local area network systems supporting IEEE 802.11 series protocols such as a next-generation Wi-Fi protocol of 802.11ax, for example, 802.11be, Wi-Fi 7 or EHT, and a next generation of 802.11be, Wi-Fi 8, UHR, Wi-Fi AI, or millimeter wave (MMW); and also applicable to WPAN systems, sensing systems, and the like supporting UWB. A first communication apparatus generates a PPDU, and sends the PPDU. A second communication apparatus receives the PPDU, and performs channel estimation based on an LTF sequence. The PPDU includes an LTF carrying the LTF sequence. The LTF sequence corresponds to a bandwidth of the PPDU. The LTF sequence is determined based on a basic LTF sequence. The LTF sequence is a sequence in a 2x mode. The LTF sequence can effectively reduce a channel estimation error.

FIG. 3

EP 4 718 790 A1

## Description

This application claims priority to Chinese Patent Application No. 202310810353.7, filed with the China National Intellectual Property Administration on June 30, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

In recent years, wireless traffic has increased at an ultra-high speed, and users have increasingly high requirements for communication service quality, such as low latency and ultra-high reliability. As a key technology for carrying wireless traffic services, a wireless local area network (wireless local area network, WLAN) is continuously developing and evolving to meet increasingly high requirements of users for wireless transmission. To improve throughput of a next-generation wireless local area network system, a major challenge at a physical layer is how to accurately perform channel estimation. For example, a long training field (long training field, LTF) in a physical layer (physical, PHY) protocol data unit (PHY protocol data unit, PPDU) may provide a receiver with a means to estimate a multiple-input multiple-output (multi-input multi-output, MIMO) channel in the WLAN system.

Different LTFs may use different LTF sequences, that is, the LTF is determined based on an LTF sequence. Currently, a maximum bandwidth supported in the Institute of Electrical and Electronics Engineers (institute of electrical and electronics engineers, IEEE) 802.be standard is 320 MHz. In other words, a maximum bandwidth supported by the LTF sequence is 320 MHz.

Therefore, how to design the LTF sequence for the next-generation WLAN system is an important task.

## SUMMARY

Embodiments of this application provide a communication method and apparatus. When a bandwidth of a PPDU is greater than 320 MHz, an LTF sequence is provided. The LTF sequence can effectively reduce a peak-to-average power ratio (peak-to-average power ratio, PAPR) of an LTF signal in a large-bandwidth scenario, to effectively reduce a channel estimation error.

According to a first aspect, an embodiment of this application provides a communication method. The method may be applied to a first communication apparatus. The first communication apparatus may be a Wi-Fi device or applied to a Wi-Fi chip or module. The method includes:
generating a physical layer protocol data unit PPDU, where the PPDU includes a long training field LTF carrying an LTF sequence, a length of the LTF sequence corresponds to a bandwidth of the PPDU, the LTF sequence is determined based on a basic LTF sequence corresponding to a basic subchannel, the bandwidth of the PPDU is greater than 320 MHz, and the LTF sequence is a sequence in a 2x mode; and sending the PPDU.

The LTF sequence provided in embodiments of this application can effectively reduce a PAPR of an LTF signal in a large-bandwidth scenario, to effectively reduce a signal estimation error.

According to a second aspect, an embodiment of this application provides a communication method. The method may be applied to a second communication apparatus. The second communication apparatus may be a Wi-Fi device or applied to a Wi-Fi chip or module. The method includes:
receiving a physical layer protocol data unit PPDU, where the PPDU includes a long training field LTF carrying an LTF sequence, a length of the LTF sequence corresponds to a bandwidth of the PPDU, the LTF sequence is determined based on a basic LTF sequence corresponding to a basic subchannel, the bandwidth of the PPDU is greater than 320 MHz, and the LTF sequence is a sequence in a 2x mode; and performing channel estimation based on the LTF sequence.

With reference to the first aspect or the second aspect, in a possible implementation, the LTF sequence is determined based on a sequence corresponding to a unit subchannel. The sequence corresponding to the unit subchannel is determined based on the basic LTF sequence.

With reference to the first aspect or the second aspect, in a possible implementation, a modulus value of a rotation factor of the sequence corresponding to the unit subchannel is 1. A bandwidth of the unit subchannel is any one of 20 MHz and 40 MHz.

With reference to the first aspect or the second aspect, in a possible implementation, the LTF sequence is determined based on the sequence corresponding to the unit subchannel and a rotation factor sequence. The rotation factor sequence is a sequence formed by rotation factors.

With reference to the first aspect or the second aspect, in a possible implementation, that the modulus value of the rotation factor of the sequence corresponding to the unit subchannel is 1 includes: the rotation factor of the sequence corresponding to the unit subchannel is 1 or -1.

With reference to the first aspect or the second aspect, in a possible implementation, the LTF sequence is obtained based on periodic extension and phase reversal of the sequence corresponding to the unit subchannel in frequency domain. A quantity of times the periodic extension is performed is equal to a length of the rotation factor sequence. 1 in the rotation factor sequence corresponds to not performing phase reversal on the sequence corresponding to the unit subchannel. -1 in the rotation factor sequence corresponds to performing phase reversal on the sequence corresponding to the unit subchannel.

With reference to the first aspect or the second aspect, in a possible implementation, the length of the rotation factor sequence is determined by the bandwidth of the PPDU and the bandwidth of the unit subchannel.

With reference to the first aspect or the second aspect, in a possible implementation, the rotation factor sequence meets at least one of the following:

in the rotation factor sequence, values of a first group of elements are the same as values of a second group of elements, positions of the second group of elements are symmetrical to positions of the first group of elements with a central position of the rotation factor sequence as a symmetry axis, the first group of elements include a $(2 \times i - 1)^{th}$ element and a $(2 \times i)^{th}$ element, and i is less than or equal to 1/2 of the length of the rotation factor sequence; and in the rotation factor sequence, values of a third group of elements are opposite to values of a fourth group of elements, positions of the third group of elements are symmetrical to positions of the fourth group of elements with the central position of the rotation factor sequence as the symmetry axis, the third group of elements include a $(2 \times j - 1)^{th}$ element and a $(2 \times j)^{th}$ element, j is less than or equal to 1/2 of the length of the rotation factor sequence, and i is not equal to j.

With reference to the first aspect or the second aspect, in a possible implementation, the bandwidth of the PPDU is 640 MHz. The LTF sequence includes any one of the following:

$$\pm\{LTF_{80MHz\_2x}(1:245), \quad LTF_{80MHz\_2x}(246:500), \quad 0, \quad -LTF_{80MHz\_2x}(502:756), \quad -LTF_{80MHz\_2x}(757:1001), 0_{23},$$

$$-LTF_{80MHz\_2x}(1:245), \quad -LTF_{80MHz\_2x}(246:500), \quad 0, \quad -LTF_{80MHz\_2x}(502:756), \quad -LTF_{80MHz\_2x}(757:1001), 0_{23},$$

$$-LTF_{80MHz\_2x}(1:245), \quad -LTF_{80MHz\_2x}(246:500), \quad 0, \quad LTF_{80MHz\_2x}(502:756), \quad LTF_{80MHz\_2x}(757:1001), 0_{23},$$

$$-LTF_{80MHz\_2x}(1:245), \quad -LTF_{80MHz\_2x}(246:500), \quad 0, \quad -LTF_{80MHz\_2x}(502:756), \quad -$$

$LTF_{80MHz\_2x}(757:1001)$, $0_{23}$,

$-LTF_{80MHz\_2x}(1:245)$, $\quad -LTF_{80MHz\_2x}(246:500)$, $\quad 0$, $\quad LTF_{80MHz\_2x}(502:756)$, $LTF_{80MHz\_2x}(757:1001)$, $0_{23}$,

$LTF_{80MHz\_2x}(1:245)$, $\quad LTF_{80MHz\_2x}(246:500)$, $\quad 0$, $\quad LTF_{80MHz\_2x}(502:756)$, $LTF_{80MHz\_2x}(757:1001)$, $0_{23}$,

$LTF_{80MHz\_2x}(1:245)$, $\quad LTF_{80MHz\_2x}(246:500)$, $\quad 0$, $\quad LTF_{80MHz\_2x}(502:756)$, $LTF_{80MHz\_2x}(757:1001)$, $0_{23}$,

$-LTF_{80MHz\_2x}(1:245)$, $\quad -LTF_{80MHz\_2x}(246:500)$, $\quad 0$, $\quad LTF_{80MHz\_2x}(502:756)$, $LTF_{80MHz\_2x}(757:1001)\}$;

$\pm\{LTF_{80MHz\_2x}(1:245)$, $\quad LTF_{80MHz\_2x}(246:500)$, $\quad 0$, $\quad LTF_{80MHz\_2x}(502:756)$, $LTF_{80MHz\_2x}(757:1001)$, $0_{23}$,

$-LTF_{80MHz\_2x}(1:245)$, $\quad -LTF_{80MHz\_2x}(246:500)$, $\quad 0$, $\quad LTF_{80MHz\_2x}(502:756)$, $LTF_{80MHz\_2x}(757:1001)$, $0_{23}$,

$LTF_{80MHz\_2x}(1:245)$, $\quad -LTF_{80MHz\_2x}(246:500)$, $\quad 0$, $\quad -LTF_{80MHz\_2x}(502:756)$, $LTF_{80MHz\_2x}(757:1001)$, $0_{23}$,

$-LTF_{80MHz\_2x}(1:245)$, $\quad LTF_{80MHz\_2x}(246:500)$, $\quad 0$, $\quad -LTF_{80MHz\_2x}(502:756)$, $LTF_{80MHz\_2x}(757:1001)$, $0_{23}$,

$-LTF_{80MHz\_2x}(1:245)$, $\quad LTF_{80MHz\_2x}(246:500)$, $\quad 0$, $\quad -LTF_{80MHz\_2x}(502:756)$, $LTF_{80MHz\_2x}(757:1001)$, $0_{23}$,

$LTF_{80MHz\_2x}(1:245)$, $\quad -LTF_{80MHz\_2x}(246:500)$, $\quad 0$, $\quad -LTF_{80MHz\_2x}(502:756)$, $LTF_{80MHz\_2x}(757:1001)$, $0_{23}$,

$-LTF_{80MHz\_2x}(1:245)$, $\quad -LTF_{80MHz\_2x}(246:500)$, $\quad 0$, $\quad LTF_{80MHz\_2x}(502:756)$, $LTF_{80MHz\_2x}(757:1001)$, $0_{23}$,

$LTF_{80MHz\_2x}(1:245)$, $\quad LTF_{80MHz\_2x}(246:500)$, $\quad 0$, $\quad LTF_{80MHz\_2x}(502:756)$, $LTF_{80MHz\_2x}(757:1001)\}$;

$\pm\{LTF_{80MHz\_2x}(1:245)$, $\quad LTF_{80MHz\_2x}(246:500)$, $\quad 0$, $\quad LTF_{80MHz\_2x}(502:756)$, $LTF_{80MHz\_2x}(757:1001)$, $0_{23}$,

$-LTF_{80MHz\_2x}(1:245)$, $\quad -LTF_{80MHz\_2x}(246:500)$, $\quad 0$, $\quad -LTF_{80MHz\_2x}(502:756)$, $-$ $LTF_{80MHz\_2x}(757:1001)$, $0_{23}$,

$-LTF_{80MHz\_2x}(1:245)$, $\quad -LTF_{80MHz\_2x}(246:500)$, $\quad 0$, $\quad -LTF_{80MHz\_2x}(502:756)$, $-$ $LTF_{80MHz\_2x}(757:1001)$, $0_{23}$,

$-LTF_{80MHz\_2x}(1:245)$, $\quad -LTF_{80MHz\_2x}(246:500)$, $\quad 0$, $\quad LTF_{80MHz\_2x}(502:756)$, $LTF_{80MHz\_2x}(757:1001)$, $0_{23}$,

$LTF_{80MHz\_2x}(1:245)$, $\quad LTF_{80MHz\_2x}(246:500)$, $\quad 0$, $\quad -LTF_{80MHz\_2x}(502:756)$, $-$ $LTF_{80MHz\_2x}(757:1001)$, $0_{23}$,

$LTF_{80MHz\_2x}(1:245)$, $\quad$ $LTF_{80MHz\_2x}(246:500)$, $\quad$ 0, $\quad$ $LTF_{80MHz\_2x}(502:756)$, $LTF_{80MHz\_2x}(757:1001)$, $0_{23}$,

$\quad$ $LTF_{80MHz\_2x}(1:245)$, $\quad$ $LTF_{80MHz\_2x}(246:500)$, $\quad$ 0, $\quad$ $LTF_{80MHz\_2x}(502:756)$, $LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $-LTF_{80MHz\_2x}(757:1001)\}$; or

$\quad$ $\pm\{LTF_{80MHz\_2x}(1:245)$, $\quad$ $LTF_{80MHz\_2x}(246:500)$, $\quad$ 0, $\quad$ $LTF_{80MHz\_2x}(502:756)$, $LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $-LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $-LTF_{80MHz\_2x}(757:1001)$, $0_{23}$,

$\quad$ $LTF_{80MHz\_2x}(1:245)$, $\quad$ $LTF_{80MHz\_2x}(246:500)$, $\quad$ 0, $\quad$ $-LTF_{80MHz\_2x}(502:756)$, $-LTF_{80MHz\_2x}(757:1001)$, $0_{23}$,

$\quad$ $LTF_{80MHz\_2x}(1:245)$, $\quad$ $LTF_{80MHz\_2x}(246:500)$, $\quad$ 0, $\quad$ $-LTF_{80MHz\_2x}(502:756)$, $-LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $-LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $-LTF_{80MHz\_2x}(757:1001)$, $0_{23}$,

$\quad$ $LTF_{80MHz\_2x}(1:245)$, $\quad$ $LTF_{80MHz\_2x}(246:500)$, $\quad$ 0, $\quad$ $LTF_{80MHz\_2x}(502:756)$, $LTF_{80MHz\_2x}(757:1001)\}$.

$LTF_{80MHz\_2x}(1:245)$ represents $1^{st}$ to $245^{th}$ elements in a sequence $LTF_{80MHz\_2x}$. $LTF_{80MHz\_2x}(246:500)$ represents $246^{th}$ to $500^{th}$ elements in the sequence $LTF_{80MHz\_2x}$. $LTF_{80MHz\_2x}(502:756)$ represents $502^{nd}$ to $756^{th}$ elements in the sequence $LTF_{80MHz\_2x}$. $LTF_{80MHz\_2x}(757:1001)$ represents $757^{th}$ to $1001^{st}$ elements in the sequence $LTF_{80MHz\_2x}$. The sequence $LTF_{80MHz\_2x}$ is a basic LTF sequence in the 2x mode. $0_{23}$ represents that 23 consecutive elements in the LTF sequence are 0.

With reference to the first aspect or the second aspect, in a possible implementation, the bandwidth of the PPDU is 480 MHz. The LTF sequence includes any one of the following:

$\quad$ $\pm\{LTF_{80MHz\_2x}(1:245)$, $\quad$ $LTF_{80MHz\_2x}(246:500)$, $\quad$ 0, $\quad$ $-LTF_{80MHz\_2x}(502:756)$, $-LTF_{80MHz\_2x}(757:1001)$, $0_{23}$,

$\quad$ $LTF_{80MHz\_2x}(1:245)$, $\quad$ $LTF_{80MHz\_2x}(246:500)$, $\quad$ 0, $\quad$ $LTF_{80MHz\_2x}(502:756)$, $LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $-$

$LTF_{80MHz\_2x}(757:1001), 0_{23},$

$-LTF_{80MHz\_2x}(1:245),$ $-LTF_{80MHz\_2x}(246:500),$ $0,$ $-LTF_{80MHz\_2x}(502:756),$ $-$ $LTF_{80MHz\_2x}(757:1001), 0_{23},$

$LTF_{80MHz\_2x}(1:245),$ $LTF_{80MHz\_2x}(246:500),$ $0,$ $LTF_{80MHz\_2x}(502:756),$ $LTF_{80MHz\_2x}(757:1001), 0_{23},$

$LTF_{80MHz\_2x}(1:245),$ $LTF_{80MHz\_2x}(246:500),$ $0,$ $-LTF_{80MHz\_2x}(502:756),$ $-$ $LTF_{80MHz\_2x}(757:1001)\};$ or

$\pm\{-LTF_{80MHz\_2x}(1:245),$ $-LTF_{80MHz\_2x}(246:500),$ $0,$ $LTF_{80MHz\_2x}(502:756),$ $LTF_{80MHz\_2x}(757:1001), 0_{23},$

$LTF_{80MHz\_2x}(1:245),$ $LTF_{80MHz\_2x}(246:500),$ $0,$ $LTF_{80MHz\_2x}(502:756),$ $LTF_{80MHz\_2x}(757:1001), 0_{23},$

$LTF_{80MHz\_2x}(1:245),$ $LTF_{80MHz\_2x}(246:500),$ $0,$ $LTF_{80MHz\_2x}(502:756),$ $LTF_{80MHz\_2x}(757:1001), 0_{23},$

$LTF_{80MHz\_2x}(1:245),$ $-LTF_{80MHz\_2x}(246:500),$ $0,$ $-LTF_{80MHz\_2x}(502:756),$ $-$ $LTF_{80MHz\_2x}(757:1001), 0_{23},$

$LTF_{80MHz\_2x}(1:245),$ $LTF_{80MHz\_2x}(246:500),$ $0,$ $-LTF_{80MHz\_2x}(502:756),$ $-$ $LTF_{80MHz\_2x}(757:1001), 0_{23},$

$-LTF_{80MHz\_2x}(1:245),$ $LTF_{80MHz\_2x}(246:500),$ $0,$ $LTF_{80MHz\_2x}(502:756),$ $-$ $LTF_{80MHz\_2x}(757:1001)\}.$

$LTF_{80MHz\_2x}(1:245)$ represents 1st to 245th elements in a sequence $LTF_{80MHz\_2x}.$ $LTF_{80MHz\_2x}(246:500)$ represents 246th to 500th elements in the sequence $LTF_{80MHz\_2x}.$ $LTF_{80MHz\_2x}(502:756)$ represents 502nd to 756th elements in the sequence $LTF_{80MHz\_2x}.$ $LTF_{80MHz\_2x}(757:1001)$ represents 757th to 1001st elements in the sequence $LTF_{80MHz\_2x}.$ The sequence $LTF_{80MHz\_2x}$ is a basic LTF sequence in the 2x mode. $0_{23}$ represents that 23 consecutive elements in the LTF sequence are 0.

According to a third aspect, an embodiment of this application provides a communication method. The method may be applied to a first communication apparatus. The first communication apparatus may be a Wi-Fi device or applied to a Wi-Fi chip or module. The method includes:

mapping a sequence segment that is in an LTF sequence and that corresponds to a position of a resource unit (resource unit, RU)/multiple resource unit (multiple resource Units, MRU) to a subcarrier in the RU/MRU based on a bandwidth, a size of the RU/MRU, and the position of the RU/MRU; and sending the LTF sequence, where the RU/MRU is located in the bandwidth, and the RU/MRU includes a plurality of consecutive subcarriers; or
mapping a sequence segment that is in an LTF sequence and that corresponds to a position of a subcarrier in an RU/MRU included in a bandwidth to the subcarrier in the RU/MRU based on the bandwidth; and sending the LTF sequence, where the RU/MRU is located in the bandwidth, and the RU/MRU includes a plurality of consecutive subcarriers.

With reference to the third aspect, in a possible implementation, when the bandwidth is greater than 320 MHz, an LTF sequence in a 2x mode is any one of the following:

$\pm\{\text{LTF}_{80\text{MHz\_2x}}(1:245),\quad \text{LTF}_{80\text{MHz\_2x}}(246:500),\quad 0,\quad -\text{LTF}_{80\text{MHz\_2x}}(502:756),\quad -\text{LTF}_{80\text{MHz\_2x}}(757:1001), 0_{23},$

$-\text{LTF}_{80\text{MHz\_2x}}(1:245),\quad -\text{LTF}_{80\text{MHz\_2x}}(246:500),\quad 0,\quad -\text{LTF}_{80\text{MHz\_2x}}(502:756),\quad -\text{LTF}_{80\text{MHz\_2x}}(757:1001), 0_{23},$

$-\text{LTF}_{80\text{MHz\_2x}}(1:245),\quad -\text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001), 0_{23},$

$-\text{LTF}_{80\text{MHz\_2x}}(1:245),\quad -\text{LTF}_{80\text{MHz\_2x}}(246:500),\quad 0,\quad -\text{LTF}_{80\text{MHz\_2x}}(502:756),\quad -\text{LTF}_{80\text{MHz\_2x}}(757:1001), 0_{23},$

$-\text{LTF}_{80\text{MHz\_2x}}(1:245),\quad -\text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001), 0_{23},$

$\text{LTF}_{80\text{MHz\_2x}}(1:245),\quad \text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001), 0_{23},$

$\text{LTF}_{80\text{MHz\_2x}}(1:245),\quad \text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001), 0_{23},$

$-\text{LTF}_{80\text{MHz\_2x}}(1:245),\quad -\text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001)\};$

$\pm\{\text{LTF}_{80\text{MHz\_2x}}(1:245),\quad \text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001), 0_{23},$

$-\text{LTF}_{80\text{MHz\_2x}}(1:245),\quad -\text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001), 0_{23},$

$\text{LTF}_{80\text{MHz\_2x}}(1:245),\quad -\text{LTF}_{80\text{MHz\_2x}}(246:500),\quad 0,\quad -\text{LTF}_{80\text{MHz\_2x}}(502:756),\quad \text{LTF}_{80\text{MHz\_2x}}(757:1001), 0_{23},$

$-\text{LTF}_{80\text{MHz\_2x}}(1:245),\quad \text{LTF}_{80\text{MHz\_2x}}(246:500),\quad 0,\quad -\text{LTF}_{80\text{MHz\_2x}}(502:756),\quad \text{LTF}_{80\text{MHz\_2x}}(757:1001), 0_{23},$

$-\text{LTF}_{80\text{MHz\_2x}}(1:245),\quad \text{LTF}_{80\text{MHz\_2x}}(246:500),\quad 0,\quad -\text{LTF}_{80\text{MHz\_2x}}(502:756),\quad \text{LTF}_{80\text{MHz\_2x}}(757:1001), 0_{23},$

$\text{LTF}_{80\text{MHz\_2x}}(1:245),\quad -\text{LTF}_{80\text{MHz\_2x}}(246:500),\quad 0,\quad -\text{LTF}_{80\text{MHz\_2x}}(502:756),\quad \text{LTF}_{80\text{MHz\_2x}}(757:1001), 0_{23},$

$-\text{LTF}_{80\text{MHz\_2x}}(1:245),\quad -\text{LTF}_{80\text{MHz\_2x}}(246:500),\quad 0,\quad \text{LTF}_{80\text{MHz\_2x}}(502:756),\quad \text{LTF}_{80\text{MHz\_2x}}(757:1001), 0_{23},$

$\text{LTF}_{80\text{MHz}\_2x}(1:245),$ $\text{LTF}_{80\text{MHz}\_2x}(246:500),$ 0, $\text{LTF}_{80\text{MHz}\_2x}(502:756),$ $\text{LTF}_{80\text{MHz}\_2x}(757:1001)\};$

$\pm\{\text{LTF}_{80\text{MHz}\_2x}(1:245),$ $\text{LTF}_{80\text{MHz}\_2x}(246:500),$ 0, $\text{LTF}_{80\text{MHz}\_2x}(502:756),$ $\text{LTF}_{80\text{MHz}\_2x}(757:1001), 0_{23},$

$-\text{LTF}_{80\text{MHz}\_2x}(1:245),$ $-\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$-\text{LTF}_{80\text{MHz}\_2x}(1:245),$ $-\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$-\text{LTF}_{80\text{MHz}\_2x}(1:245),$ $-\text{LTF}_{80\text{MHz}\_2x}(246:500),$ 0, $\text{LTF}_{80\text{MHz}\_2x}(502:756),$ $\text{LTF}_{80\text{MHz}\_2x}(757:1001), 0_{23},$

$\text{LTF}_{80\text{MHz}\_2x}(1:245),$ $\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$\text{LTF}_{80\text{MHz}\_2x}(1:245),$ $\text{LTF}_{80\text{MHz}\_2x}(246:500),$ 0, $\text{LTF}_{80\text{MHz}\_2x}(502:756),$ $\text{LTF}_{80\text{MHz}\_2x}(757:1001), 0_{23},$

$\text{LTF}_{80\text{MHz}\_2x}(1:245),$ $\text{LTF}_{80\text{MHz}\_2x}(246:500),$ 0, $\text{LTF}_{80\text{MHz}\_2x}(502:756),$ $\text{LTF}_{80\text{MHz}\_2x}(757:1001), 0_{23},$

$-\text{LTF}_{80\text{MHz}\_2x}(1:245),$ $-\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001)\};$

$\pm\{\text{LTF}_{80\text{MHz}\_2x}(1:245),$ $\text{LTF}_{80\text{MHz}\_2x}(246:500),$ 0, $\text{LTF}_{80\text{MHz}\_2x}(502:756),$ $\text{LTF}_{80\text{MHz}\_2x}(757:1001), 0_{23},$

$-\text{LTF}_{80\text{MHz}\_2x}(1:245),$ $-\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$-\text{LTF}_{80\text{MHz}\_2x}(1:245),$ $-\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$\text{LTF}_{80\text{MHz}\_2x}(1:245),$ $\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$\text{LTF}_{80\text{MHz}\_2x}(1:245),$ $\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$-\text{LTF}_{80\text{MHz}\_2x}(1:245),$ $-\text{LTF}_{80\text{MHz}\_2x}(246:500),$ 0, $-\text{LTF}_{80\text{MHz}\_2x}(502:756),$ $-\text{LTF}_{80\text{MHz}\_2x}(757:1001), 0_{23},$

$\text{LTF}_{80\text{MHz}\_2x}(1:245),$ $\text{LTF}_{80\text{MHz}\_2x}(246:500),$ 0, $\text{LTF}_{80\text{MHz}\_2x}(502:756),$ $\text{LTF}_{80\text{MHz}\_2x}(757:1001)\};$

$\pm\{\text{LTF}_{80\text{MHz}\_2x}(1:245),$ $\text{LTF}_{80\text{MHz}\_2x}(246:500),$ 0, $-\text{LTF}_{80\text{MHz}\_2x}(502:756),$ $-$

$LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$-LTF_{80MHz\_2x}(1:245), \quad -LTF_{80MHz\_2x}(246:500), \quad 0, \quad -LTF_{80MHz\_2x}(502:756), \quad -LTF_{80MHz\_2x}(757:1001), 0_{23},$

$-LTF_{80MHz\_2x}(1:245), \quad -LTF_{80MHz\_2x}(246:500), \quad 0, \quad -LTF_{80MHz\_2x}(502:756), \quad -LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad LTF_{80MHz\_2x}(246:500), \quad 0, \quad -LTF_{80MHz\_2x}(502:756), \quad -LTF_{80MHz\_2x}(757:1001)\};$ or

$\pm\{-LTF_{80MHz\_2x}(1:245), \quad -LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad -LTF_{80MHz\_2x}(246:500), \quad 0, \quad -LTF_{80MHz\_2x}(502:756), \quad -LTF_{80MHz\_2x}(757:1001), 0_{23},$

$LTF_{80MHz\_2x}(1:245), \quad LTF_{80MHz\_2x}(246:500), \quad 0, \quad -LTF_{80MHz\_2x}(502:756), \quad -LTF_{80MHz\_2x}(757:1001), 0_{23},$

$-LTF_{80MHz\_2x}(1:245), \quad LTF_{80MHz\_2x}(246:500), \quad 0, \quad LTF_{80MHz\_2x}(502:756), \quad -LTF_{80MHz\_2x}(757:1001)\}.$

$LTF_{80MHz\_2x}(1:245)$ represents 1st to 245th elements in a sequence $LTF_{80MHz\_2x}$. $LTF_{80MHz\_2x}(246:500)$ represents 246th to 500th elements in the sequence $LTF_{80MHz\_2x}$. $LTF_{80MHz\_2x}(502:756)$ represents 502nd to 756th elements in the sequence $LTF_{80MHz\_2x}$. $LTF_{80MHz\_2x}(757:1001)$ represents 757th to 1001st elements in the sequence $LTF_{80MHz\_2x}$. The sequence $LTF_{80MHz\_2x}$ is a basic LTF sequence in the 2x mode. $0_{23}$ represents that 23 consecutive elements in the LTF sequence are 0.

With reference to the third aspect, in a possible implementation, mapping the sequence segment that is in the LTF sequence and that corresponds to the position of the resource unit (resource unit, RU)/multiple resource unit (multiple resource Units, MRU) to the subcarrier in the RU/MRU based on the bandwidth, the size of the RU/MRU, and the position of the RU/MRU includes:

mapping the sequence segment that is in the LTF sequence and that corresponds to the position of the RU/MRU to the subcarrier in the RU/MRU based on the bandwidth, a matrix corresponding to pilot rotation, the size of the RU/MRU, and the position of the RU/MRU.

The LTF sequence provided in embodiments of this application considers both various RUs or MRUs that may appear in a PPDU and pilot rotation (for example, a P matrix or an R matrix), so that the LTF sequence can be effectively applied to various cases in which a bandwidth of the PPDU is greater than 320 MHz, and compatible with various RUs, MRUs, or the like that exist in a protocol such as 802.11be or 802.11bn.

With reference to the third aspect, in a possible implementation, mapping the sequence segment that is in the LTF sequence and that corresponds to the position of the subcarrier in the RU/MRU included in the bandwidth to the subcarrier in the RU/MRU based on the bandwidth includes:

mapping the sequence segment that is in the LTF sequence and that corresponds to the position of the subcarrier in the RU/MRU included in the bandwidth to the subcarrier in the RU/MRU based on the bandwidth and a sequence corresponding to pilot rotation.

According to a fourth aspect, an embodiment of this application provides a communication method. The method may be applied to a second communication apparatus. The second communication apparatus may be a Wi-Fi device or applied to a Wi-Fi chip or module. The method includes:

receiving an LTF sequence; and determining an LTF sequence corresponding to an RU/MRU based on a bandwidth, a size of the RU/MRU, and a position of the RU/MRU, where the LTF sequence is used to estimate a channel of the RU/MRU, the RU/MRU is located in the bandwidth, and the RU/MRU includes a plurality of consecutive subcarriers; or receiving an LTF sequence; and determining an LTF sequence corresponding to an RU/MRU based on a bandwidth and a position of a subcarrier in an RU/MRU included in the bandwidth, where the RU/MRU is located in the bandwidth, and the RU/MRU includes a plurality of consecutive subcarriers.

When the bandwidth is greater than 320 MHz, an LTF sequence in a 2x mode is shown in the third aspect.

With reference to the fourth aspect, in a possible implementation, determining the LTF sequence corresponding to the RU/MRU based on the bandwidth, the size of the RU/MRU, and the position of the RU/MRU includes: determining the LTF sequence corresponding to the RU/MRU based on the bandwidth, a matrix corresponding to pilot rotation, the size of the RU/MRU, and the position of the RU/MRU.

With reference to the fourth aspect, in a possible implementation, determining the LTF sequence corresponding to the RU/MRU based on the bandwidth and the position of the subcarrier in the RU/MRU included in the bandwidth includes: determining the LTF sequence corresponding to the RU/MRU based on the bandwidth, a matrix corresponding to pilot rotation, and the position of the subcarrier in the RU/MRU included in the bandwidth.

According to a fifth aspect, an embodiment of this application provides a first communication apparatus, configured to perform the method according to the first aspect, the third aspect, or any possible implementation. The first communication apparatus includes units that perform the method according to the first aspect, the third aspect, or any possible implementation.

According to a sixth aspect, an embodiment of this application provides a second communication apparatus, configured to perform the method according to the second aspect, the fourth aspect, or any possible implementation. The second communication apparatus includes units that perform the method according to the second aspect, the fourth aspect, or any possible implementation.

According to a seventh aspect, an embodiment of this application provides a first communication apparatus. The first communication apparatus includes a processor, configured to perform the method according to the first aspect, the third aspect, or any possible implementation. The processor is configured to execute a program stored in a memory. When the program is executed, the method according to the first aspect, the third aspect, or any possible implementation is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together. For example, the first communication apparatus may be a chip.

In a possible implementation, the first communication apparatus further includes a transceiver. The transceiver is configured to receive information or send information.

According to an eighth aspect, an embodiment of this application provides a second communication apparatus. The second communication apparatus includes a processor, configured to perform the method according to the second aspect, the fourth aspect, or any possible implementation. The processor is configured to execute a program stored in a memory. When the program is executed, the method according to the second aspect, the fourth aspect, or any possible implementation is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated together. For example, the second communication apparatus may be a chip.

In a possible implementation, the second communication apparatus further includes a transceiver. The transceiver is configured to receive information or send information.

According to a ninth aspect, an embodiment of this application provides a first communication apparatus. The first communication apparatus includes a logic circuit and an interface. The logic circuit is coupled to the interface. The interface is configured to input and/or output information. The logic circuit is configured to perform the method according to the first aspect, the third aspect, or any possible implementation.

In a possible implementation, that the interface is configured to output the information includes: the interface is configured to output a PPDU. For example, the logic circuit is configured to generate the PPDU.

According to a tenth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to the second aspect, the fourth aspect, or any possible implementation.

In a possible implementation, that the interface is configured to input the information includes: the interface is configured to input a PPDU. For example, the logic circuit is configured to parse the PPDU.

According to an eleventh aspect, an embodiment of this application provides a computer-readable storage medium. The computer-readable storage medium is configured to store a computer program. When the computer program is run on a computer, the method according to the first aspect, the second aspect, the third aspect, the fourth aspect, or any possible implementation is performed.

According to a twelfth aspect, an embodiment of this application provides a computer program product. The computer program product includes a computer program or computer code. When the computer program or the computer code is run on a computer, the method according to the first aspect, the second aspect, the third aspect, the fourth aspect, or any possible implementation is performed.

According to a thirteenth aspect, an embodiment of this application provides a computer program. When the computer program is run on a computer, the method according to the first aspect, the second aspect, the third aspect, the fourth aspect, or any possible implementation is performed.

According to a fourteenth aspect, an embodiment of this application provides a communication system. The communication system includes a first communication apparatus and a second communication apparatus.

In a possible implementation, the first communication apparatus is configured to perform the method according to the first aspect or any possible implementation of the first aspect, and the second communication apparatus is configured to perform the method according to the second aspect or any possible implementation of the second aspect.

In another possible implementation, the first communication apparatus is configured to perform the method according to the third aspect or any possible implementation of the third aspect, and the second communication apparatus is configured to perform the method according to the fourth aspect or any possible implementation of the fourth aspect.

**BRIEF DESCRIPTION OF DRAWINGS**

FIG. 1 is a diagram of an architecture of a communication system according to an embodiment of this application;
FIG. 2a is a diagram of a format of a PPDU according to an embodiment of this application;
FIG. 2b is a diagram of a format of a PPDU according to an embodiment of this application;
FIG. 3 is a schematic flowchart of a communication method according to an embodiment of this application;
FIG. 4a to FIG. 4g are diagrams of MRUs according to an embodiment of this application;
FIG. 5a to FIG. 5d are diagrams of MRUs according to an embodiment of this application;
FIG. 6 is a diagram of a structure of a communication apparatus according to an embodiment of this application;
FIG. 7a and FIG. 7b are diagrams of structures of communication apparatuses according to an embodiment of this application; and
FIG. 8 is a diagram of a structure of a communication apparatus according to an embodiment of this application.

**DESCRIPTION OF EMBODIMENTS**

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, devices, or the like that include a series of steps or units are not limited to the listed steps or units, but optionally further include unlisted steps, units, or the like, or optionally further include other steps or units inherent to these processes, methods, products, devices, or the like.

"Embodiments" mentioned in this specification mean that particular features, structures, or characteristics described with reference to embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between associated objects. "At least one of the following items (pieces)" or a similar expression thereof means any combination of these items. For example, at least one of a, b, or c may represent: a, b, c, "a and b", "a and c", "b and c", or "a, b, and c".

Embodiments of this application provide a communication method and apparatus. An LTF sequence applied to a PPDU in the communication method can effectively reduce a PAPR of an LTF signal in a large-bandwidth scenario, to effectively reduce a signal estimation error. The LTF sequence can be effectively applied to a case in which a bandwidth of the PPDU is greater than 320 MHz. The LTF sequence provided in embodiments of this application considers both various RUs or MRUs that may appear in a PPDU and pilot rotation (for example, a P matrix or an R matrix), so that the LTF sequence can be effectively applied to various cases in which a bandwidth of the PPDU is greater than 320 MHz, and compatible with various RUs, MRUs, or the like that exist in a protocol such as 802.11be or 802.11bn. The consideration of various RUs or MRUs prevents an excessively high PAPR of a user on any RU or MRU from affecting transmission performance when the user performs wireless communication, to effectively reduce a requirement for a linear power amplifier and improve throughput performance of a single user.

The following describes a communication system in embodiments of this application.

The technical solutions provided in embodiments of this application may be applied to a WLAN system, for example, Wi-Fi. For example, the method provided in embodiments of this application may be applied to IEEE 802.11 series protocols, such as the 802.11a/b/g protocol, the 802.11n protocol, the 802.11ac protocol, the 802.11ax protocol, the 802.11be protocol, the 802.11bn protocol, or a next-generation protocol. Examples are not enumerated herein. The technical solutions provided in embodiments of this application may be further applied to a wireless personal area network (wireless personal area network, WPAN) based on millimeter wave (millimeter wave, MMW) and ultra wideband (ultra wideband, UWB) technologies. For example, the method provided in embodiments of this application may be applied to IEEE 802.15 series protocols, such as the 802.15.4a protocol, the 802.15.4z protocol, the 802.15.4ab protocol, or a future-generation UWB WPAN protocol. Examples are not enumerated herein. The technical solutions provided in embodiments of this application may be further applied to the following communication systems, for example, an internet of things (internet of things, IoT) system, a vehicle to X (vehicle to X, V2X) system, a narrowband internet of things (narrowband internet of things, NB-IoT) system, a long term evolution (long term evolution, LTE) system, a 5th-generation (5th-generation, 5G) communication system, and a new communication system emerging in future communication development.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, stadiums and exhibition halls, cfor the first timert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, a wearable device such as augmented reality (augmented reality, AR) or virtual reality (virtual reality, VR)), a smart device (for example, a printer, a projector, a loudspeaker, or a speaker) in a smart office, an internet of vehicles device in the internet of vehicles, an infrastructure (for example, a vending machine, a self-service navigation console in a shopping mall or supermarket, a self-service cashier, or a self-service ordering machine) in a daily life scenario, a device in a large sports and music venue, or the like.

Although embodiments of this application mainly use a WLAN as an example, especially a network applied to IEEE 802.11 series standards, embodiments of this application may support Wi-Fi 8, which may also be referred to as ultra-high reliability (ultra high reliability, UHR) or ultra-high reliability and throughput (ultra high reliability and throughput, UHRT). Examples are not enumerated herein. Various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

In a possible implementation, the method provided in embodiments of this application may be implemented by a communication apparatus in a communication system. For example, the communication apparatus may be an access point (access point, AP) or a station (station, STA).

The access point is an apparatus having a wireless communication function, supports communication or sensing by using a WLAN protocol, has a function of communicating with or sensing another device (for example, a non-AP STA or another access point) in a WLAN, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having the wireless communication function may be an entire device, or may be a chip, a processing system, a functional module, or the like installed in an entire device. The device in which the chip, the processing system, or the functional module is installed may implement a method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application.

The STA is an apparatus having a wireless communication function, supports communication or sensing by using a WLAN protocol, and has a capability of communicating with or sensing another non-AP STA or access point in a WLAN. In a WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, a functional module, or the like installed in an entire device. The device in which the chip, the processing system, or the functional module is installed may implement a method and a function in embodiments of this application under control of the chip, the processing system, or the functional module. For example, the STA may be a wireless communication chip, a wireless sensor, a wireless communication terminal, or the like, and may also be referred to as a user. For another example, the STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, or the like. Certainly, the STA may alternatively be a chip, a processing system, or a module in the foregoing devices in various forms, to implement a method and a function in embodiments of this application.

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, or between STAs. The communication protocol may include IEEE 802.11 series protocols, for example, the 802.11n/802.11ac/802.11ax/802.11be/802.11bn protocol. Certainly, protocols subsequent to 802.11bn may also be supported.

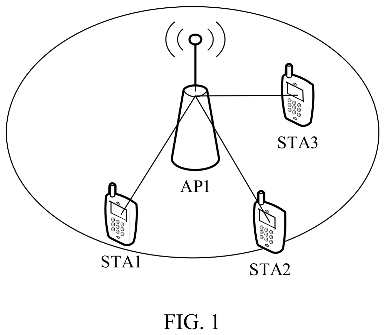

FIG. 1 is a diagram of an architecture of a communication system according to an embodiment of this application. The communication system may include one or more APs and one or more STAs. FIG. 1 shows one access point AP1 and three stations STA1, STA2, and STA3. For example, the method provided in embodiments of this application may be applied to data communication between one AP and one or more STAs (for example, communication between AP1 and STA1 or communication of AP1 with STA1 and STA2 shown in FIG. 1), communication between APs (for example, communication between AP2 and AP1 shown in FIG. 1), or communication between STAs (for example, communication between STA2 and STA3 shown in FIG. 1). The method provided in embodiments of this application may be applied to but not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

It can be understood that in FIG. 1, an example in which the STA is a mobile phone and the AP is a router is used. This does not mean that types of the AP and the STA in embodiments of this application are limited. In addition, FIG. 1 shows only one AP and three STAs as an example. There may be more or less APs or STAs. This is not limited in embodiments of this application.

From different perspectives of sending a PPDU and receiving a PPDU, in the following content, a first communication apparatus may be understood as a communication apparatus that sends a PPDU, and a second communication apparatus may be understood as a communication apparatus that receives a PPDU. In an example, the first communication apparatus and the second communication apparatus may be Wi-Fi chips, modules, processing systems, or the like disposed in different Wi-Fi devices. In another example, the first communication apparatus may be an AP, and the second communication apparatus may be a STA. In another example, both the first communication apparatus and the second communication apparatus may be STAs or APs. In another example, the first communication apparatus may be a STA, and the second communication apparatus may be an AP. In another example, at least one of the first communication apparatus and the second communication apparatus may be a multi-link device (multi-link device, MLD) or the like. Examples are not enumerated in embodiments of this application. For example, the multi-link device (multi-link device, MLD) means that the device simultaneously has a plurality of stations (for example, APs or non-AP STAs), which operate on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like installed in an entire device. The device in which the chip, the processing system, or the module is installed may implement a method and a function in embodiments of this application under control of the chip, the processing system, or the module. The multi-link device may implement wireless communication in compliance with 802.11 series protocols, to communicate with another device. The another device may be a multi-link device, or may not be a multi-link device. Frequency bands on which the multi-link device operates may include but are not limited to sub 1 GHz, 2.4 GHz, 5 GHz, 6 GHz, and the like. Examples are not enumerated herein.

It may be understood that in embodiments of this application, the method provided in embodiments of this application is described by using two sides: the first communication apparatus and the second communication apparatus. However, in a process in which the first communication apparatus and the second communication apparatus transmit a PPDU, the PPDU may be further forwarded through another apparatus, such as forwarding the PPDU between the first communication apparatus and the second communication apparatus through a forwarding apparatus. An apparatus other than the first communication apparatus and the second communication apparatus is not limited in embodiments of this application.

The following describes a communication method provided in embodiments of this application.

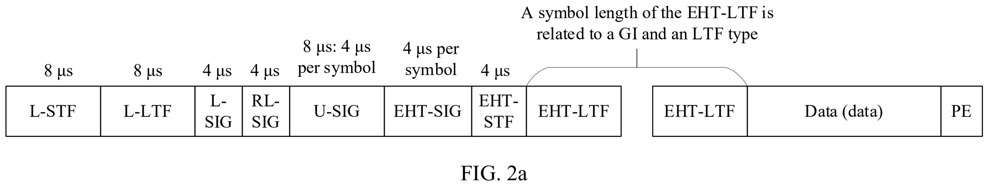

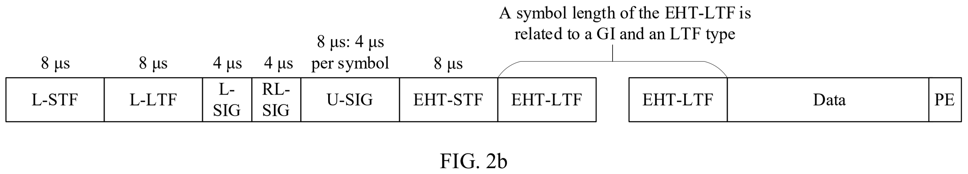

To meet requirements such as higher throughput and larger coverage, the IEEE 802.11be standard defines two PPDU formats: an extremely high throughput multi-user physical layer protocol data unit (EHT multi-user PHY protocol data unit, EHT MU PPDU) and an extremely high throughput trigger-based physical layer protocol data unit (EHT trigger-based PPDU, EHT TB PPDU). For example, FIG. 2a is a diagram of a structure of an EHT MU PPDU, and FIG. 2b is a diagram of a structure of an EHT TB PPDU.

As shown in FIG. 2a, the EHT MU PPDU may include a legacy short training field (legacy short training field, L-STF), a legacy long training field (legacy long training field, L-LTF), a legacy signal (legacy signal, L-SIG) field, a repeated legacy signal (repeated legacy signal, RL-SIG) field, a universal signal (universal signal, U-SIG) field, an EHT-SIG field, an EHT-STF, an EHT-LTF, a data (data) field, a packet extension (packet extension, PE) field, and the like. As shown in FIG. 2b, the EHT TB PPDU includes an L-STF, an L-LTF, an L-SIG field, an RL-SIG field, a U-SIG field, an EHT-STF, an EHT-LTF, a data field, a PE field, and the like. The EHT-LTF may be used by a receive end (namely, a communication apparatus that receives the PPDU) to perform channel estimation. A time length shown in FIG. 2a and FIG. 2b is duration of the field, or is a length of an orthogonal frequency division multiplexing (Orthogonal Frequency Division Multiplexing, OFDM) symbol corresponding to the field. Each field shown in FIG. 2a or FIG. 2b may occupy one or more OFDM symbols. One OFDM symbol may occupy 4 microseconds ($\mu$s). Duration occupied by one OFDM symbol shown herein is merely an example, and should not be construed as a limitation on embodiments of this application.

For example, one EHT-LTF in the PPDU may occupy one OFDM symbol. The EHT-LTF may be repeated in time domain. As shown in FIG. 2a and FIG. 2b, a length of an OFDM symbol occupied by the EHT-LTF may be related to a guard interval (guard interval, GI) and an LTF mode. A quantity of OFDM symbols occupied by the field in the PPDU is not limited in embodiments of this application.

For example, there may be three types of EHT-LTF modes: 1xLTF, 2xLTF, and 4xLTF. 1xLTF represents an LTF sequence in a 1x mode. 2xLTF represents an LTF sequence in a 2x mode. 4xLTF represents an LTF sequence in a 4x mode.

For the IEEE 802.11be standard, a maximum bandwidth used to transmit a PPDU is 320 MHz. In other words, a maximum supported bandwidth of a PPDU is 320 MHz. In a 320 MHz PPDU, a 2x EHT-LTF sequence (EHTLTF - $_{2036,2036}$ as shown below) may be as follows:

$$EHTLTF_{-2036,2036} =$$

$$\{LTF_{80MHz\_2x}(1:245), \quad LTF_{80MHz\_2x}(246:500), \quad 0, \quad LTF_{80MHz\_2x}(502:756),$$
$$LTF_{80MHz\_2x}(757:1001), 0_{23},$$

$$LTF_{80MHz\_2x}(1:245), \quad -LTF_{80MHz\_2x}(246:500), \quad 0, \quad LTF_{80MHz\_2x}(502:756), \quad -$$
$$LTF_{80MHz\_2x}(757:1001), 0_{23},$$

$$LTF_{80MHz\_2x}(1:245), \quad -LTF_{80MHz\_2x}(246:500), \quad 0, \quad -LTF_{80MHz\_2x}(502:756),$$
$$LTF_{80MHz\_2x}(757:1001), 0_{23},$$

$$LTF_{80MHz\_2x}(1:245), \quad LTF_{80MHz\_2x}(246:500), \quad 0, \quad -LTF_{80MHz\_2x}(502:756), \quad -$$
$$LTF_{80MHz\_2x}(757:1001)\}$$

$0_{23}$ represents that 23 consecutive values are 0, or represents that 23 consecutive elements in the EHT-LTF sequence are 0. $LTF_{80MHz\_2x}(a:b)$ represents $a^{th}$ to $b^{th}$ elements in a sequence $LTF_{80MHz\_2x}$. The sequence $LTF_{80MHz\_2x}$ may be a basic LTF sequence corresponding to a basic subchannel. For example, a bandwidth of the basic subchannel may be 80 MHz.

For example, the basic LTF sequence (namely, $LTF_{80MHz\_2x}$) corresponding to the basic subchannel may be as follows:

$LTF_{80MHz\_2x} =$

{+1, 0, +1, 0, +1, 0, −1, 0, −1, 0, +1, 0, −1, 0, +1, 0, +1, 0, +1, 0, +1, 0, −1, 0, +1, 0, −1, 0,

+1, 0, +1, 0, −1, 0, −1, 0, +1, 0, −1, 0, −1, 0, −1, 0, −1, 0, +1, 0, −1, 0, +1, 0, −1, 0, +1, 0,

+1, 0, −1, 0, −1, 0, +1, 0, −1, 0, +1, 0, +1, 0, +1, 0, +1, 0, −1, 0, +1, 0, −1, 0, −1, 0, −1, 0, +1, 0,

+1, 0, −1, 0, +1, 0, +1, 0, +1, 0, +1, 0, +1, 0, −1, 0, +1, 0, −1, 0, −1, 0, −1, 0, −1, 0, −1, 0, +1, 0,

+1, 0, −1, 0, +1, 0, +1, 0, −1, 0, −1, 0, +1, 0, +1, 0, +1, 0, −1, 0, −1, 0, +1, 0, +1, 0, −1, 0, +1, 0,

−1, 0, −1, 0, −1, 0, −1, 0, +1, 0, −1, 0, +1, 0, −1, 0, −1, 0, +1, 0, +1, 0, −1, 0, +1, 0, +1, 0, +1, 0,

+1, 0, +1, 0, −1, 0, +1, 0, −1, 0, −1, 0, +1, 0, +1, 0, −1, 0, −1, 0, +1, 0, −1, 0, +1, 0, +1, 0, +1, 0,

+1, 0, −1, 0, +1, 0, −1, 0, −1, 0, −1, 0, +1, 0, +1, 0, −1, 0, +1, 0, +1, 0, +1, 0, +1, 0, +1, 0, −1, 0,

+1, 0, −1, 0, −1, 0, −1, 0, +1, 0, +1, 0, +1, 0, +1, 0, −1, 0, −1, 0, +1, 0, −1, 0, +1, 0, +1, 0, +1, 0,

+1, 0, −1, 0, +1, 0, +1, 0, +1, 0, +1, 0, −1, 0, −1, 0, +1, 0, −1, 0, −1, 0, −1, 0, −1, 0, −1, 0, +1, 0,

−1, 0, +1, 0, +1, 0, +1, 0, +1, 0, −1, 0, −1, 0, +1, 0, −1, 0, +1, 0, +1, 0, +1, 0, +1, 0, −1, 0, +1, 0,

−1, 0, −1, 0, −1, 0, +1, 0, +1, 0, −1, 0, +1, 0, +1, 0, +1, 0, +1, 0, +1, 0, −1, 0, +1, 0, −1, 0, +1, 0,

+1, 0, +1, 0, −1, 0, +1, 0, −1, 0, +1, 0, +1, 0, +1, 0, −1, 0, −1, 0, +1, 0, −1, 0, +1, 0, +1, 0, +1, 0,

−1, 0, −1, 0, +1, 0, −1, 0, +1, 0, +1, 0, +1, 0, +1, 0, −1, 0, +1, 0, +1, 0, +1, 0, +1, 0, −1, 0, −1, 0,

+1, 0, −1, 0, −1, 0, −1, 0, −1, 0, −1, 0, +1, 0, −1, 0, +1, 0, −1, 0, −1, 0, −1, 0, +1, 0, +1, 0, −1, 0,

+1, 0, −1, 0, −1, 0, −1, 0, −1, 0, +1, 0, −1, 0, +1, 0, +1, 0, +1, 0, −1, 0, −1, 0, +1, 0, −1, 0, −1, 0,

−1, 0, −1, 0, −1, 0, +1, 0, −1, 0, +1, 0, +1, 0, −1, 0, −1, 0, +1, 0, 0, 0, 0, 0, 0, 0, −1, 0, −1, 0, −1,

0, −1, 0, −1, 0, −1, 0, −1, 0, +1, 0, +1, 0, −1, 0, +1, 0, −1, 0, −1, 0, −1, 0, −1, 0, +1, 0, −1, 0, +1,

0, −1, 0, −1, 0, +1, 0, +1, 0, −1, 0, +1, 0, +1, 0, +1, 0, +1, 0, +1, 0, −1, 0, +1, 0, −1, 0, +1, 0, −1,

0, −1, 0, +1, 0, +1, 0, −1, 0, +1, 0, −1, 0, −1, 0, −1, 0, −1, 0, +1, 0, −1, 0, +1, 0, +1, 0, +1, 0, −1,

0, −1, 0, +1, 0, −1, 0, −1, 0, −1, 0, −1, 0, −1, 0, +1, 0, −1, 0, +1, 0, −1, 0, −1, 0, −1, 0, −1, 0, −1,

0, +1, 0, −1, 0, +1, 0, +1, 0, −1, 0, −1, 0, +1, 0, +1, 0, −1, 0, −1, 0, −1, 0, +1, 0, +1, 0, −1, 0, +1,

0, −1, 0, −1, 0, −1, 0, −1, 0, +1, 0, −1, 0, +1, 0, −1, 0, −1, 0, +1, 0, +1, 0, −1, 0, +1, 0, +1, 0, +1,

0, +1, 0, +1, 0, −1, 0, +1, 0, −1, 0, −1, 0, +1, 0, +1, 0, −1, 0, −1, 0, +1, 0, −1, 0, +1, 0, +1, 0, +1,

0, +1, 0, −1, 0, +1, 0, −1, 0, −1, 0, −1, 0, +1, 0, +1, 0, −1, 0, +1, 0, +1, 0, +1, 0, +1, 0, +1, 0, −1,

0, +1, 0, −1, 0, +1, 0, +1, 0, +1, 0, +1, 0, +1, 0, −1, 0, −1, 0, +1, 0, −1, 0, +1, 0, +1, 0, +1,

0, +1, 0, −1, 0, +1, 0, +1, 0, +1, 0, +1, 0, −1, 0, −1, 0, +1, 0, −1, 0, −1, 0, −1, 0, −1, 0, −1, 0, +1,

0, −1, 0, +1, 0, +1, 0, +1, 0, +1, 0, −1, 0, −1, 0, +1, 0, −1, 0, +1, 0, +1, 0, +1, 0, +1, 0, −1, 0, +1,

0, −1, 0, −1, 0, −1, 0, +1, 0, +1, 0, −1, 0, +1, 0, +1, 0, +1, 0, +1, 0, +1, 0, −1, 0, +1, 0, −1, 0, +1,

0, +1, 0, −1, 0, −1, 0, +1, 0, +1, 0, +1, 0, −1, 0, −1, 0, −1, 0, +1, 0, −1, 0, +1, 0, −1, 0, −1, 0, −1,

0, +1, 0, +1, 0, −1, 0, +1, 0, −1, 0, −1, 0, −1, 0, −1, 0, +1, 0, −1, 0, −1, 0, −1, 0, −1, 0, +1, 0, +1,

0, −1, 0, +1, 0, +1, 0, +1, 0, +1, 0, +1, 0, −1, 0, +1, 0, +1, 0, +1, 0, +1, 0, +1, 0, −1, 0, −1, 0, +1,

0, −1, 0, +1, 0, +1, 0, +1, 0, +1, 0, −1, 0, +1, 0, −1, 0, −1, 0, −1, 0, +1, 0, +1, 0, −1, 0, +1, 0, +1,

0, +1, 0, +1, 0, +1, 0, −1, 0, +1, 0, +1}

LTF$_{80MHz\_2x}$ shown above is merely an example. As the standard progresses, specific content of the basic LTF sequence may be updated. This is not limited in embodiments of this application. The basic LTF sequence may be used to represent LTF sequences at different bandwidths. As the basic LTF sequence changes, a representation form of the LTF sequence may also change. Therefore, the basic LTF sequence is not limited in embodiments of this application. Descriptions of the basic subchannel and the basic LTF sequence herein are also applicable below.

The LTF sequence shown above is inapplicable to a case in which a bandwidth of a PPDU is greater than 320 MHz. Therefore, embodiments of this application provide a communication method. An LTF sequence provided in the method can be effectively applied to the case in which the bandwidth of the PPDU is greater than 320 MHz, and compatible with various RUs, MRUs, or the like when the bandwidth of the PPDU is greater than 320 MHz.

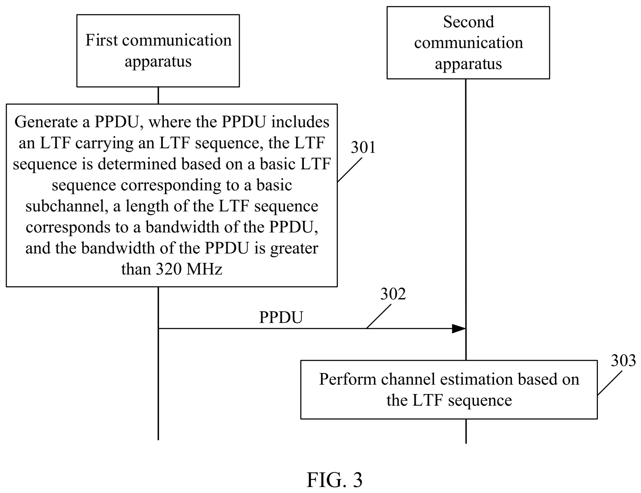

FIG. 3 is a schematic flowchart of a communication method according to an embodiment of this application. For related descriptions of a first communication apparatus and a second communication apparatus, refer to descriptions of the foregoing communication system. Details are not described herein again. As shown in FIG. 3, the method includes the following steps.

301: The first communication apparatus generates a PPDU. The PPDU includes an LTF carrying an LTF sequence. The LTF sequence is determined based on a basic LTF sequence corresponding to a basic subchannel. A length of the LTF sequence corresponds to a bandwidth of the PPDU. The bandwidth of the PPDU is greater than 320 MHz.

The following describes in detail terms in step 301.

1. PPDU

The PPDU may include the LTF. For example, the LTF may be an EHT-LTF, a UHR-LTF, a next-generation LTF, or the like. A specific name of the LTF is not limited in embodiments of this application. For ease of description, the following uses the UHR-LTF as an example for description when a specific example is used. In addition to the LTF, the PPDU may further include at least one of an L-STF, an L-LTF, an L-SIG field, an RL-SIG field, a U-SIG field, and a data field. For example, for an EHT PPDU or an EHT TB PPDU, the PPDU may further include an EHT-STF. For another example, for a UHR PPDU or a UHR TB PPDU, the PPDU may further include a UHR-STF. Other fields in the PPDU are not limited in embodiments of this application.

For example, each field in the PPDU may occupy one or more OFDM symbols in time domain. For example, the LTF provided in embodiments of this application may occupy one or more OFDM symbols. A quantity of OFDM symbols occupied by the LTF may be determined based on an LTF mode, for example, may be related to a GI and the LTF mode. Quantities of OFDM symbols occupied by different fields in the PPDU are not limited in embodiments of this application.

The bandwidth of the PPDU is greater than 320 MHz. For example, the bandwidth of the PPDU may also be referred to as a total transmission bandwidth used to transmit the PPDU. The total transmission bandwidth of the PPDU may also be referred to as a PPDU bandwidth or the like for short. A specific manner of describing the bandwidth is not limited in embodiments of this application. For example, in frequency domain, the bandwidth of the PPDU may include N subcarriers (or referred to as that the bandwidth of the PPDU is divided into N subcarriers). N is a positive integer. The N subcarriers may include a pilot subcarrier, a data subcarrier, a direct current subcarrier, and a guard subcarrier. For example, the guard subcarrier and the direct current subcarrier may carry no signal, or it may be considered that values of signals carried on the guard subcarrier and the direct current subcarrier are 0. The pilot subcarrier is used to carry a pilot signal. The data subcarrier is used to carry payload information.

For example, 80 MHz may include 1024 subcarriers. For example, 80 MHz includes 1024 subcarriers, such as including one 996-tone RU, 5 direct current subcarriers, and 23 guard subcarriers. N = Bandwidth of the PPDU/80 × 1024. For example, a relationship between the bandwidth of the PPDU and a quantity of subcarriers may be as follows:

In an example, the bandwidth of the PPDU may be 480 MHz. For example, the bandwidth of the PPDU may include 6144 (1024 × 6) subcarriers.

When the LTF sequence is an LTF sequence in a 2x mode, in the 6144 subcarriers except direct current (direct current, DC) subcarriers, null subcarriers, and guard subcarriers, one of two adjacent subcarriers is used for transmission. "Used for transmission" herein means that the subcarrier used for transmission may carry a non-zero value after modulation. For example, the 6144 subcarriers may include 23 guard subcarriers, 23 direct current subcarriers, and (23 × 4 + 5 × 6) null subcarriers. Quantities and positions of guard subcarriers and direct current subcarriers included in the 6144 subcarriers are not limited. For example, the first 12 subcarriers in the bandwidth of the PPDU may be guard subcarriers, and the last 11 subcarriers may be guard subcarriers. For example, 23 subcarriers in the middle of the bandwidth of the PPDU may be direct current subcarriers. For example, in the bandwidth of the PPDU, apart from the direct current subcarriers and the guard subcarriers, at least four consecutive subcarriers whose values are 0 may be null subcarriers.

In another example, the bandwidth of the PPDU may be 640 MHz. The bandwidth of the PPDU may include 8192 (1024 × 8) subcarriers. When the LTF sequence is an LTF sequence in a 2x mode, in the 8192 subcarriers except direct current subcarriers, null subcarriers, and guard subcarriers, one of two adjacent subcarriers is used for transmission. For example, the 8192 subcarriers may include 23 guard subcarriers, 23 direct current subcarriers, and $(23 \times 6 + 5 \times 8)$ null subcarriers. Quantities and positions of guard subcarriers and direct current subcarriers included in the 8192 subcarriers are not limited. For example, the first 12 subcarriers in the bandwidth of the PPDU may be guard subcarriers, and the last 11 subcarriers may be guard subcarriers. For example, 23 subcarriers in the middle of the bandwidth of the PPDU may be direct current subcarriers. For example, in the bandwidth of the PPDU, apart from the direct current subcarriers and the guard subcarriers, at least four consecutive subcarriers whose values are 0 may be null subcarriers.

That one of the two adjacent subcarriers is used for transmission may also be represented as follows: A value carried on one of the two adjacent subcarriers is 0, and a value carried on the other of the two adjacent subcarriers may be a non-zero value.

The bandwidth of the PPDU listed in embodiments of this application is merely an example, and should not be construed as a limitation on embodiments of this application.

2. Basic subchannel and basic LTF sequence

For example, a bandwidth of the basic subchannel may be 80 MHz. For the basic LTF sequence, refer to specific content of the foregoing sequence (namely, $\text{LTF}_{80MHz\_2x}$) corresponding to 80 MHz. Details are not described herein again.

3. LTF and LTF sequence

The LTF may be used to carry the LTF sequence. For example, the LTF may be obtained after the first communication apparatus modulates the LTF sequence to a corresponding frequency-domain subcarrier and performs inverse discrete Fourier transform (inverse discrete Fourier transform, IDFT) (for example, inverse fast Fourier transform (inverse fast Fourier transform, IFFT)). For another example, the first communication apparatus modulates the LTF sequence to a corresponding frequency-domain subcarrier to form a frequency-domain signal, performs IFFT to form a time-domain signal, and performs guard interval insertion and windowing (insert GI and window) on the time-domain signal to form an OFDM symbol. For specific descriptions of the LTF and the LTF sequence, refer to a related standard. Details are not described herein.

For example, the LTF sequence may be determined based on the basic LTF sequence. In an example, the bandwidth of the PPDU is 640 MHz. The LTF sequence (denoted as $\text{UHRLTF-}_{4084,4084}$ below) may be shown as a sequence (1). The bandwidth of the PPDU is 640 MHz. The bandwidth of the PPDU may include 8192 subcarriers. Apart from 23 subcarriers, there are 8192 - 23 = 8169 subcarriers. Indexes of the 8169 subcarriers may range from -4084 to 4084. The indexes may be represented as {-4084, 4084}. In another example, the bandwidth of the PPDU is 480 MHz. The LTF sequence may be shown as a sequence (2). The bandwidth of the PPDU is 480 MHz. The bandwidth of the PPDU may include 6144 subcarriers. Apart from 23 subcarriers, there are 6144 - 23 = 6121 subcarriers. Indexes of the 6121 subcarriers may range from -3060 to 3060. The indexes may be represented as {-3060, 3060}.

$$LTF_{-4084,4084} =$$

$$\{c_1*LTF_{80MHz\_2x}(1:245), \quad c_2*LTF_{80MHz\_2x}(246:500), \quad 0, \quad c_3*LTF_{80MHz\_2x}(502:756),$$
$$c_4*LTF_{80MHz\_2x}(757:1001), 0_{23},$$

$$c_5*LTF_{80MHz\_2x}(1:245), \quad c_6*LTF_{80MHz\_2x}(246:500), \quad 0, \quad c_7*LTF_{80MHz\_2x}(502:756),$$
$$c_8*LTF_{80MHz\_2x}(757:1001), 0_{23},$$

$$c_9*LTF_{80MHz\_2x}(1:245), \quad c_{10}*LTF_{80MHz\_2x}(246:500), \quad 0, \quad c_{11}*LTF_{80MHz\_2x}(502:756),$$
$$c_{12}*LTF_{80MHz\_2x}(757:1001), 0_{23},$$

$$c_{13}*LTF_{80MHz\_2x}(1:245), \quad c_{14}*LTF_{80MHz\_2x}(246:500), \quad 0, \quad c_{15}*LTF_{80MHz\_2x}(502:756),$$
$$c_{16}*LTF_{80MHz\_2x}(757:1001), 0_{23},$$

$$c_{17}*LTF_{80MHz\_2x}(1:245), \quad c_{18}*LTF_{80MHz\_2x}(246:500), \quad 0, \quad c_{19}*LTF_{80MHz\_2x}(502:756),$$
$$c_{20}*LTF_{80MHz\_2x}(757:1001), 0_{23},$$

$$c_{21}*LTF_{80MHz\_2x}(1:245), \quad c_{22}*LTF_{80MHz\_2x}(246:500), \quad 0, \quad c_{23}*LTF_{80MHz\_2x}(502:756),$$
$$c_{24}*LTF_{80MHz\_2x}(757:1001), 0_{23},$$

$$c_{25}*LTF_{80MHz\_2x}(1:245), \quad c_{26}*LTF_{80MHz\_2x}(246:500), \quad 0, \quad c_{27}*LTF_{80MHz\_2x}(502:756),$$
$$c_{28}*LTF_{80MHz\_2x}(757:1001), 0_{23},$$

$$c_{29}*LTF_{80MHz\_2x}(1:245), \quad c_{30}*LTF_{80MHz\_2x}(246:500), \quad 0, \quad c_{31}*LTF_{80MHz\_2x}(502:756),$$
$$c_{32}*LTF_{80MHz\_2x}(757:1001)\} \quad (1)$$

A modulus value of $c_j$ is 1. For example, $c_j = -1$ or $c_j = 1$, where $j = 1, 2, ..., 32$. $LTF_{80MHz\_2x}(a:b)$ represents $a^{th}$ to $b^{th}$ elements in a sequence $LTF_{80MHz\_2x}$. $0_{23}$ represents that 23 consecutive values are 0, or represents that 23 consecutive elements in the LTF sequence are 0. Subcarriers on which 23 consecutive 0s are located may be null subcarriers (null subcarriers). For example, for the basic subchannel (for example, its bandwidth is 80 MHz), the first 12 subcarriers and the last 11 subcarriers in subcarriers corresponding to the basic subchannel are all guard subcarriers. When there are two 80 MHz bandwidths, values carried on 23 subcarriers are all 0. The 23 subcarriers are referred to as null subcarriers. Because there are eight 80 MHz bandwidths in a 640 MHz bandwidth, and the first 12 subcarriers and the last 11 subcarriers in the 640 MHz bandwidth are guard subcarriers, there are seven $0_{23}$s in the LTF sequence. The guard subcarriers in the 640 MHz bandwidth are not shown in the foregoing sequence (1). When an index or a position of a guard subcarrier changes, a specific form of the foregoing sequence (1) may also change, for example, may change based on a specific form of the basic LTF sequence and the index of the guard subcarrier.

$$LTF_{-3060,3060} =$$

$$\{c_1*LTF_{80MHz\_2x}(1:245), \quad c_2*LTF_{80MHz\_2x}(246:500), \quad 0, \quad c_3*LTF_{80MHz\_2x}(502:756),$$

$$c_4*LTF_{80MHz\_2x}(757:1001), 0_{23},$$

$$c_5*LTF_{80MHz\_2x}(1:245), \quad c_6*LTF_{80MHz\_2x}(246:500), \quad 0, \quad c_7*LTF_{80MHz\_2x}(502:756),$$

$$c_8*LTF_{80MHz\_2x}(757:1001), 0_{23},$$

$$c_9*LTF_{80MHz\_2x}(1:245), \quad c_{10}*LTF_{80MHz\_2x}(246:500), \quad 0, \quad c_{11}*LTF_{80MHz\_2x}(502:756),$$

$$c_{12}*LTF_{80MHz\_2x}(757:1001), 0_{23},$$

$$c_{13}*LTF_{80MHz\_2x}(1:245), \quad c_{14}*LTF_{80MHz\_2x}(246:500), \quad 0, \quad c_{15}*LTF_{80MHz\_2x}(502:756),$$

$$c_{16}*LTF_{80MHz\_2x}(757:1001), 0_{23},$$

$$c_{17}*LTF_{80MHz\_2x}(1:245), \quad c_{18}*LTF_{80MHz\_2x}(246:500), \quad 0, \quad c_{19}*LTF_{80MHz\_2x}(502:756),$$

$$c_{20}*LTF_{80MHz\_2x}(757:1001), 0_{23},$$

$$c_{21}*LTF_{80MHz\_2x}(1:245), \quad c_{22}*LTF_{80MHz\_2x}(246:500), \quad 0, \quad c_{23}*LTF_{80MHz\_2x}(502:756),$$

$$c_{24}*LTF_{80MHz\_2x}(757:1001)\} \quad (2)$$

A modulus value of $c_j$ is 1. For example, $c_j = -1$ or $c_j = 1$, where j = 1, 2, ..., 24. For other descriptions of the sequence (2), refer to the sequence (1). Details are not described herein again. Although both the sequence (1) and the sequence (2) have $c_j$, where j = 12, ..., 24, it does not indicate that values of $c_j$ in the sequence (1) and the sequence (2) are completely the same.

4. Unit subchannel, sequence corresponding to the unit subchannel, and rotation factor sequence

For example, the LTF sequence may be determined based on the sequence corresponding to the unit subchannel. The sequence corresponding to the unit subchannel may be determined based on the basic LTF sequence. For example, a bandwidth of the unit subchannel may be any one of 20 MHz, 40 MHz, 80 MHz, 160 MHz, and 320 MHz. Generally, a smaller bandwidth of the unit subchannel indicates more rotation factors of the sequence corresponding to the unit subchannel, namely, a longer rotation factor sequence, so that the LTF sequence has better PAPR performance. For example, when the bandwidth of the PPDU is constant, a longer rotation factor sequence indicates a smaller bandwidth corresponding to each rotation factor, and phase reversal of a sequence (namely, the sequence corresponding to the unit subchannel) in a finer bandwidth can be performed, to obtain an LTF sequence with better PAPR performance. In embodiments of this application, an example in which the bandwidth of the unit subchannel is 20 MHz or 40 MHz is used for description. The rotation factor in embodiments of this application may be referred to as a frequency-domain rotation factor.

The sequence corresponding to the unit subchannel may be determined based on the basic LTF sequence and the bandwidth of the unit subchannel. In an example, the bandwidth of the unit subchannel is 40 MHz. In the foregoing sequence (1), $c_{2i-1} = c_{2i}$, where i = 1, 2, ..., 16. In the foregoing sequence (2), $c_{2i-1} = c_{2i}$, where i = 1, 2, ..., 12. The sequence corresponding to the unit subchannel may be $\{LTF_{80MHz\_2x}(1:245), LTF_{80MHz\_2x}(246:500)\}$ or $\{LTF_{80MHz\_2x}(502:756), LTF_{80MHz\_2x}(757:1001)\}$. In another example, the bandwidth of the unit subchannel is 20 MHz. In the foregoing sequence (1), $c_{2i-1} \neq c_{2i}$ may exist, where i = 1, 2, ..., 16. In the foregoing sequence (2), $c_{2i-1} \neq c_{2i}$ may exist, where i = 1, 2, ..., 12. The sequence corresponding to the unit subchannel may be $\{LTF_{80MHz\_2x}(1:245)\}$, $\{LTF_{80MHz\_2x}(246:500)\}$, $\{LTF_{80MHz\_2x}(502:756)\}$, or $\{LTF_{80MHz\_2x}(757:1001)\}$.

For example, the LTF sequence may be determined based on the sequence corresponding to the unit subchannel and the rotation factor sequence. The rotation factor sequence may be a sequence of rotation factors, or a sequence formed by rotation factors. A sequence corresponding to each unit subchannel may correspond to one rotation factor. A modulus value of the rotation factor may be 1. For example, the rotation factor may be 1 or -1. A length of the rotation factor sequence may be determined by the bandwidth of the PPDU and the bandwidth of the unit subchannel. For example, if the bandwidth of the PPDU is denoted as BW and the bandwidth of the unit subchannel is denoted as BW_{element}, the length of the rotation factor sequence may be equal to BW/BW_{element}. The length of the rotation factor sequence is an integer.

For example, the LTF sequence may be obtained based on periodic extension and phase reversal of the sequence corresponding to the unit subchannel in frequency domain. A quantity of times the periodic extension is performed is equal to the length of the rotation factor sequence. For example, 1 in the rotation factor sequence corresponds to not performing phase reversal on the sequence corresponding to the unit subchannel, and -1 in the rotation factor sequence corresponds to performing phase reversal on the sequence corresponding to the unit subchannel, such as performing phase rotation by 180° on the sequence corresponding to the unit subchannel. For another example, in the rotation factor sequence, j corresponds to performing phase rotation by 90° on the sequence corresponding to the unit subchannel, and -j corresponds to performing phase rotation by 270° on the sequence corresponding to the unit subchannel.

The following uses an example to describe a relationship between the unit subchannel, the sequence corresponding to the unit subchannel, and the rotation factor sequence.

In an example, if the bandwidth of the PPDU is 640 MHz and the bandwidth of the unit subchannel is 40 MHz, the length of the rotation factor sequence is 640 MHz/40 MHz = 16, that is, the rotation factor sequence includes 16 rotation factors. During construction of the LTF sequence, sequences corresponding to unit subchannels may be periodically extended for 16 times in sequence. Rotation factors of the sequences corresponding to the unit subchannels may correspond to elements in the rotation factor sequence in sequence. For example, $\{LTF_{80MHz\_2x}(1:245)\}$ is extended for the first time, and the rotation factor is the 1st element in the rotation factor sequence; $\{LTF80MHz\_2x(246:500)\}$ is extended for the first time, and the rotation factor is the 2nd element in the rotation factor sequence; $\{LTF_{80MHz\_2x}(502:756)\}$ is extended for the first time, and the rotation factor is the 3rd element in the rotation factor sequence; $\{LTF_{80MHz\_2x}(757:1001)\}$ is extended for the first time, and the rotation factor is the 4th element in the rotation factor sequence; $\{LTF_{80MHz\_2x}(1:245)\}$ is extended for the second time, and the rotation factor is the 5th element in the rotation factor sequence; $\{LTF_{80MHz\_2x}(246:500)\}$ is extended for the second time, and the rotation factor is the 6th element in the rotation factor sequence; $\{LTF_{80MHz\_2x}(502:756)\}$ is extended for the second time, and the rotation factor is the 7th element in the rotation factor sequence; $\{LTF_{80MHz\_2x}(757:1001)\}$ is extended for the second time, and the rotation factor is the 8th element in the rotation factor sequence; $\{LTF_{80MHz\_2x}(1:245)\}$ is extended for the third time, and the rotation factor is the 9th element in the rotation factor sequence; $\{LTF_{80MHz\_2x}(246:500)\}$ is extended for the third time, and the rotation factor is the 10th element in the rotation factor sequence; $\{LTF_{80MHz\_2x}(502:756)\}$ is extended for the third time, and the rotation factor is the 11th element in the rotation factor sequence; $\{LTF_{80MHz\_2x}(757:1001)\}$ is extended for the third time, and the rotation factor is the 12th element in the rotation factor sequence; $\{LTF_{80MHz\_2x}(1:245)\}$ is extended for the fourth time, and the rotation factor is the 13th element in the rotation factor sequence; $\{LTF_{80MHz\_2x}(246:500)\}$ is extended for the fourth time, and the rotation factor is the 14th element in the rotation factor sequence; $\{LTF_{80MHz\_2x}(502:756)\}$ is extended for the fourth time, and the rotation factor is the 15th element in the rotation factor sequence; and $\{LTF_{80MHz\_2x}(757:1001)\}$ is extended for the fourth time, and the rotation factor is the 16th element in the rotation factor sequence. A total quantity of times periodic extension is performed is 16. For the LTF sequence, refer to the following sequences (3), (5), and (6).

In another example, if the bandwidth of the PPDU is 640 MHz and the bandwidth of the unit subchannel is 20 MHz, the length of the rotation factor sequence is 640 MHz/20 MHz = 32, that is, the rotation factor sequence includes 32 rotation factors. For example, for the sequence (1), $c_j$ in the sequence (1) is a rotation factor, where j = 1, 2, ..., 32. For example, a rotation factor of the sequence $LTF_{80MHz\_2x}(1:245)$ corresponding to the unit subchannel is $c_1$, and a rotation factor of the sequence $LTF_{80MHz\_2x}(246:500)$ corresponding to the unit subchannel is $c_2$. The rest may be deduced by analogy and are not enumerated herein. For related descriptions of the sequence corresponding to the unit subchannel, the rotation factor, and the like, refer to the foregoing example. Details are not described herein again. For the LTF sequence, refer to the following sequences (3), (4), and (6).

In another example, if the bandwidth of the PPDU is 480 MHz and the bandwidth of the unit subchannel is 40 MHz, the length of the rotation factor sequence is 480 MHz/40 MHz = 12, that is, the rotation factor sequence includes 12 rotation factors. During construction of the LTF sequence, sequences corresponding to unit subchannels may be periodically extended for 12 times in sequence. Rotation factors of the sequences corresponding to the unit subchannels may correspond to elements in the rotation factor sequence in sequence. For example, $\{LTF_{80MHz\_2x}(1:245)\}$ is extended for the first time, and the rotation factor is the 1st element in the rotation factor sequence; $\{LTF_{80MHz\_2x}(246:500)\}$ is extended for the first time, and the rotation factor is the 2nd element in the rotation factor sequence; $\{LTF_{80MHz\_2x}(502:756)\}$ is extended for the first time, and the rotation factor is the 3rd element in the rotation factor sequence; $\{LTF_{80MHz\_2x}(757:1001)\}$ is extended for the first time, and the rotation factor is the 4th element in the rotation factor sequence; $\{LTF_{80MHz\_2x}(1:245)\}$ is extended for the second time, and the rotation factor is the 5th element in the rotation factor sequence; $\{LTF_{80MHz\_2x}(246:500)\}$ is extended for the second time, and the rotation factor is the 6th element in the rotation factor sequence; $\{LTF_{80MHz\_2x}(502:756)\}$ is extended for the second time, and the rotation factor is the 7th element in the rotation factor sequence; $\{LTF_{80MHz\_2x}(757:1001)\}$ is extended for the second time, and the rotation factor is the 8th element in the rotation factor sequence; $\{LTF_{80MHz\_2x}(1:245)\}$ is extended for the third time, and the rotation factor is the 9th element in the rotation factor sequence; $\{LTF_{80MHz\_2x}(246:500)\}$ is extended for the third time, and the rotation factor is the 10th element in the rotation factor sequence; $\{LTF_{80MHz\_2x}(502:756)\}$ is extended for the third time, and the rotation factor is

the 11th element in the rotation factor sequence; and {$LTF_{80MHz\_2x}(757:1001)$} is extended for the third time, and the rotation factor is the 12th element in the rotation factor sequence. A total quantity of times periodic extension is performed is 12. For the LTF sequence, refer to the following sequence (7).

In another example, if the bandwidth of the PPDU is 480 MHz and the bandwidth of the unit subchannel is 20MHz, the length of the rotation factor sequence is 480 MHz/20 MHz = 24, that is, the rotation factor sequence includes 24 rotation factors. For related descriptions of the sequence corresponding to the unit subchannel, the rotation factor, and the like, refer to the foregoing example. Details are not described herein again. For the LTF sequence, refer to the following sequence (8).

In embodiments of this application, the first communication apparatus may store the LTF sequence. For another example, the first communication apparatus may store the LTF sequence and the basic LTF sequence. For another example, the first communication apparatus may store the LTF sequence, the basic LTF sequence, and the rotation factor sequence. Examples are not enumerated herein. For specific content of the LTF sequence, refer to the following content.

302: The first communication apparatus sends the PPDU. Correspondingly, the second communication apparatus receives the PPDU.

303: The second communication apparatus performs channel estimation based on the LTF sequence.

For example, after receiving the PPDU, the second communication apparatus may perform channel estimation based on the LTF sequence. For example, the second communication apparatus may store an LTF sequence. The second communication apparatus may perform channel estimation under noise interference based on the PPDU it receives and the LTF sequence it stores. A specific channel estimation manner is not limited in embodiments of this application.

The following describes in detail the LTF sequence in embodiments of this application.

For example, the LTF sequence may be any one of the following sequences (3) to (8).

$$
\begin{aligned}
\pm\{ & LTF_{80MHz\_2x}(1:245), \quad LTF_{80MHz\_2x}(246:500), \quad 0, \quad -LTF_{80MHz\_2x}(502:756), \quad - \\
& LTF_{80MHz\_2x}(757:1001), 0_{23}, \\
& -LTF_{80MHz\_2x}(1:245), \quad -LTF_{80MHz\_2x}(246:500), \quad 0, \quad -LTF_{80MHz\_2x}(502:756), \quad - \\
& LTF_{80MHz\_2x}(757:1001), 0_{23}, \\
& -LTF_{80MHz\_2x}(1:245), \quad -LTF_{80MHz\_2x}(246:500), \quad 0, \quad LTF_{80MHz\_2x}(502:756), \\
& LTF_{80MHz\_2x}(757:1001), 0_{23}, \\
& -LTF_{80MHz\_2x}(1:245), \quad -LTF_{80MHz\_2x}(246:500), \quad 0, \quad -LTF_{80MHz\_2x}(502:756), \quad - \\
& LTF_{80MHz\_2x}(757:1001), 0_{23}, \\
& -LTF_{80MHz\_2x}(1:245), \quad -LTF_{80MHz\_2x}(246:500), \quad 0, \quad LTF_{80MHz\_2x}(502:756), \\
& LTF_{80MHz\_2x}(757:1001), 0_{23}, \\
& LTF_{80MHz\_2x}(1:245), \quad LTF_{80MHz\_2x}(246:500), \quad 0, \quad LTF_{80MHz\_2x}(502:756), \\
& LTF_{80MHz\_2x}(757:1001), 0_{23}, \\
& LTF_{80MHz\_2x}(1:245), \quad LTF_{80MHz\_2x}(246:500), \quad 0, \quad LTF_{80MHz\_2x}(502:756), \\
& LTF_{80MHz\_2x}(757:1001), 0_{23}, \\
& -LTF_{80MHz\_2x}(1:245), \quad -LTF_{80MHz\_2x}(246:500), \quad 0, \quad LTF_{80MHz\_2x}(502:756), \\
& LTF_{80MHz\_2x}(757:1001)\} \quad (3)
\end{aligned}
$$

For the sequence (3), the LTF sequence includes the following sequence (3a) or sequence (3b). In other words, the LTF sequence may be the following sequence (3a) or sequence (3b):

$$LTF_{-4084,4084} =$$

$\{LTF_{80MHz\_2x}(1:245), \quad LTF_{80MHz\_2x}(246:500), \quad 0, \quad -LTF_{80MHz\_2x}(502:756), \quad -LTF_{80MHz\_2x}(757:1001), 0_{23},$

$-LTF_{80MHz\_2x}(1:245), \quad -LTF_{80MHz\_2x}(246:500), \quad 0, \quad -LTF_{80MHz\_2x}(502:756), \quad -LTF_{80MHz\_2x}(757:1001), 0_{23},$

$-LTF_{80MHz\_2x}(1:245), \quad -LTF_{80MHz\_2x}(246:500), \quad 0, \quad LTF_{80MHz\_2x}(502:756), \quad LTF_{80MHz\_2x}(757:1001), 0_{23},$

$-LTF_{80MHz\_2x}(1:245), \quad -LTF_{80MHz\_2x}(246:500), \quad 0, \quad -LTF_{80MHz\_2x}(502:756), \quad -LTF_{80MHz\_2x}(757:1001), 0_{23},$

$-LTF_{80MHz\_2x}(1:245), \quad -LTF_{80MHz\_2x}(246:500), \quad 0, \quad LTF_{80MHz\_2x}(502:756), \quad LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$

$LTF_{80MHz\_2x}(757:1001)$, $0_{23}$,

$LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$-LTF_{80MHz\_2x}(1:245)$, $-LTF_{80MHz\_2x}(246:500)$, 0, $LTF_{80MHz\_2x}(502:756)$, $LTF_{80MHz\_2x}(757:1001)\}$ (3a)

$LTF_{-4084,4084} =$

$\{-LTF_{80MHz\_2x}(1:245)$, $-LTF_{80MHz\_2x}(246:500)$, 0, $LTF_{80MHz\_2x}(502:756)$, $LTF_{80MHz\_2x}(757:1001)$, $0_{23}$,

$LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$LTF_{80MHz\_2x}(1:245)$, $LTF_{80MHz\_2x}(246:500)$, 0, $-LTF_{80MHz\_2x}(502:756)$, $-LTF_{80MHz\_2x}(757:1001)$, $0_{23}$,

$LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$LTF_{80MHz\_2x}(1:245)$, $LTF_{80MHz\_2x}(246:500)$, 0, $-LTF_{80MHz\_2x}(502:756)$, $-LTF_{80MHz\_2x}(757:1001)$, $0_{23}$,

$-LTF_{80MHz\_2x}(1:245)$, $-LTF_{80MHz\_2x}(246:500)$, 0, $-LTF_{80MHz\_2x}(502:756)$, $-LTF_{80MHz\_2x}(757:1001)$, $0_{23}$,

$-LTF_{80MHz\_2x}(1:245)$, $-LTF_{80MHz\_2x}(246:500)$, 0, $-LTF_{80MHz\_2x}(502:756)$, $-LTF_{80MHz\_2x}(757:1001)$, $0_{23}$,

$LTF_{80MHz\_2x}(1:245)$, $LTF_{80MHz\_2x}(246:500)$, 0, $-LTF_{80MHz\_2x}(502:756)$, $-LTF_{80MHz\_2x}(757:1001)\}$ (3b)

For the sequences (3), (3a), and (3b), $LTF_{80MHz\_2x}(1:245)$ represents 1st to 245th elements in the basic LTF sequence, $LTF_{80MHz\_2x}(246:500)$ represents 246th to 500th elements in the basic LTF sequence, $LTF_{80MHz\_2x}(502:756)$ represents 502nd to 756th elements in the basic LTF sequence, and $LTF_{80MHz\_2x}(757:1001)$ represents 757th to 1001st elements in the basic LTF sequence. In other words, $LTF_{80MHz\_2x}(a:b)$ represents ath to bth elements in a sequence $LTF_{80MHz\_2x}$. $0_{23}$ represents that 23 consecutive elements in the LTF sequence are 0. For related descriptions of $0_{23}$, refer to FIG. 3. Details are not described herein again. For related descriptions of the basic LTF sequence, refer to the foregoing content. Details are not described herein again. Related descriptions of the sequence (3) herein, for example, descriptions of the sequence (3a), the sequence (3b), and parameters, are also applicable below.

For example, the foregoing sequence (3a) may also be understood as that when the bandwidth is 640 MHz, values of the LTF sequence in the 2x mode on subcarriers whose indexes are -4080 to 4080 are sequentially as follows:

{1, 0, 1, 0, –1, 0, 1, 0, 1, 0, 1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1, 0, 1, 0, 1, 0, –1, 0, –1, 0, –1, 0, –1, 0, 1, 0, 1, 0, 1, 0, 1, 0, –1, 0, 1, 0, 1, 0, 1, 0, –1, 0, 1, 0, –1, 0, –1, 0, 1, 0, –1, 0, –1, 0, –1, 0, 1, 0, 1, 0, –1, 0, –1, 0, –1, 0, 1, 0, –1, 0, –1, 0, 1, 0, –1, 0, 1, 0, 1, 0, –1, 0, 1, 0, 1, 0, –1, 0, 1, 0, 1, 0, –1, 0, 1, 0, –1, 0, –1, 0, –1, 0, 1, 0, –1, 0, –1, 0, –1, 0, –1, 0, 1, 0, –1, 0, –1, 0, 1, 0, 1, 0, –1, 0, 1, 0, 1, 0, 1, 0, –1, 0, –1, 0, –1, 0, –1, 0, 1, 0, –1, 0, 1, 0, 1, 0, 1, 0, –1, 0, 1, 0, 1, 0, 1, 0, 1, 0, –1, 0, –1, 0, –1, 0, 1, 0, 1, 0, 1, 0, –1, 0, –1, 0, 1, 0, 1, 0, 1, 0, –1, 0, 1, 0, 1, 0, –1, 0, 1, 0, –1, 0, –1, 0, –1, 0, –1, 0, 1, 0, –1, 0, –1, 0, –1, 0, 1, 0, –1, 0, 1, 0, 1, 0, –1, 0, 1, 0, 1, 0, –1, 0, –1, 0, –1, 0, 1, 0, –1, 0, –1, 0, –1, 0, 1, 0, –1, 0, 1, 0, 1, 0, –1, 0, 1, 0, 1, 0, 1, 0, –1, 0, –1, 0, 1, 0, 1, 0, 1, 0, –1, 0, 1, 0, 1, 0, –1, 0, 1, 0, –1, 0, –1, 0, 1, 0, –1, 0, 1, 0, 1, 0, 1, 0, –1, 0, 1, 0, 1, 0, 1, 0, 1, 0, 1, 0, –1, 0, –1, 0, –1, 0, 1, 0, –1, 0, –1, 0, 1, 0, 1, 0, –1, 0, 1, 0, 1, 0, 1, 0, –1, 0, –1, 0, –1, 0, –1, 0, –1, 0, 1, 0, 1, 0, 1, 0, –1, 0, –1, 0, –1, 0, 1, 0, –1, 0, –1, 0, –1, 0, 1, 0, –1, 0, 1, 0, 1, 0, 1, 0, –1, 0, –1, 0, 1, 0, 1, 0, 1, 0, –1, 0, 1, 0, 1, 0, –1, 0, 1, 0, –1, 0, –1, 0, –1, 0, –1, 0, 1, 0, –1, 0, 1, 0, –1, 0, –1, 0, 1, 0, –1, 0, 1, 0, 1, 0, –1, 0, 1, 0, 1, 0, –1, 0, 1, 0, 1, 0, –1, 0, –1, 0, 1, 0, –1, 0, –1, 0, 1, 0, –1, 0, 1, 0, 1, 0, 1, 0, 1, 0, –1, 0, 1, 0, –1, 0, –1, 0, –1, 0, 1, 0, –1, 0, –1, 0, –1, 0, –1, 0, 1, 0, 1, 0, 1, 0, 1, 0, –1, 0, –1, 0, –1, 0, 1, 0, 1, 0, 1, 0, 0, 0, 0, 0, 0, 0, –1, 0, 1, 0, 1, 0, –1, 0, –1, 0, 1, 0, –1, 0, 1, 0, 1, 0, 1, 0, –1, 0, –1, 0, –1, 0, 1, 0, –1, 0, –1, 0, –1, 0, 1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1, 0, 1, 0, –1, 0, 1, 0, 1, 0, –1, 0, 1, 0, –1, 0, –1, 0, 1, 0, –1, 0, –1, 0, 1, 0, –1, 0, –1, 0, –1, 0, –1, 0, 1, 0, –1, 0, 1, 0, 1, 0, –1, 0, 1, 0, 1, 0, 1, 0, –1, 0, –1, 0, 1, 0, 1, 0, 1, 0, –1, 0, 1, 0, –1, 0, –1, 0, –1, 0, 1, 0, –1, 0, –1, 0, –1, 0, –1, 0, 1, 0, 1, 0, 1, 0, –1, 0, –1, 0, –1, 0, 1, 0, 1, 0, 1, 0, –1, 0, 1, 0, 1, 0, –1, 0, –1, 0, 1, 0, –1, 0, –1, 0, –1, 0, 1, 0, 1, 0, 1, 0, 1, 0, –1, 0, 1, 0, 1, 0, 1, 0, –1, 0, 1, 0, –1, 0, –1, 0, 1, 0, –1, 0, 1, 0, 1, 0, –1, 0, 1, 0, 1, 0, 1, 0, –1, 0, 1, 0, 1, 0, 1, 0, –1, 0, 1, 0, 1, 0, –1, 0, 1, 0, –1, 0, –1, 0, –1, 0, 1, 0, –1, 0, –1, 0, –1, 0, 1, 0, –1, 0, 1, 0, –1, 0, –1, 0, 1, 0, –1, 0, 1, 0, 1, 0, 1, 0, –1, 0, 1, 0, 1, 0, 1, 0, 1, 0, –1, 0, 1, 0, –1, 0, –1, 0, 1, 0, 1, 0, –1, 0, –1, 0, –1, 0, 1, 0, 1, 0, –1, 0, –1, 0, –1, 0, 1, 0, 1, 0, 1, 0, –1, 0, –1, 0, –1, 0, –1, 0, 1, 0, –1, 0, –1, 0, –1, 0, 1, 0, –1, 0, –1, 0, –1, 0, 1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1, 0, 1, 0, 1, 0, –1, 0, 1, 0, 1, 0, 1, 0, –1, 0, 1, 0, 1, 0, –1, 0, 1, 0, –1, 0, –1, 0, 1, 0, –1, 0, –1, 0, 1, 0, –1, 0, 1, 0, 1, 0, 1, 0, –1, 0, 1, 0, 1, 0, 1, 0, 1, 0, –1, 0, –1, 0, –1, 0, 1, 0, –1, 0, –1, 0, –1, 0, 1, 0, 1, 0, –1, 0, 1, 0, 1, 0, 1, 0, –1, 0, –1, 0, –1, 0, 1, 0, –1, 0, –1, 0, 1, 0, 1, 0, 1, 0, –1, 0, 1, 0, 1, 0, 1, 0, –1, 0, –1, 0, –1, 0, –1, 0, 1, 0, –1, 0, –1, 0, –1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1, 0, 1, 0, 1, 0, –1, 0, –1, 0, –1, 0, 1, 0, –1, 0, –1, 0, 0, 0, 0, 0, 0, 0, 0, 0, 0, 0, 0, 0, 0, 0, 0, 0, 0, 0, 0, 0, 0, 0, 0, –1, 0, –1, 0, 1, 0, –1, 0, –1, 0, –1, 0, 1, 0, –1, 0, –1, 0, –1, 0, –1, 0, 1, 0, 1, 0, 1, 0, –1, 0, 1, 0, 1, 0, –1, 0, –1, 0, 1, 0, –1, 0, –1, 0, –1, 0, 1, 0, 1, 0, 1, 0, 1, 0, –1, 0, –1, 0, –1, 0, –1, 0, 1, 0, –1, 0, –1, 0, –1, 0, 1, 0, –1, 0, 1, 0, 1, 0, –1, 0, 1, 0, 1, 0, 1, 0, –1, 0, –1, 0, 1, 0, 1, 0, 1, 0, –1, 0, 1, 0, 1, 0, –1, 0, 1, 0, –1, 0, –1, 0, 1, 0, –1, 0, –1, 0, –1, 0, 1, 0, 1, 0, 1, 0, 1, 0, –1, 0, 1, 0, 1, 0, 1, 0, 1, 0, –1, 0, 1, 0, 1, 0, –1, 0, –1, 0, 1, 0, –1, 0, –1, 0, –1, 0, 1, 0, 1, 0, 1, 0, –

1, 0, –1, 0, –1, 0, 1, 0, 1, 0, –1, 0, –1, 0, –1, 0, 1, 0, –1, 0, –1, 0, 1, 0, –1, 0, 1, 0, 1, 0, 1, 0, 1, 0, –
1, 0, 1, 0, 1, 0, 1, 0, –1, 0, 1, 0, –1, 0, –1, 0, 1, 0, –1, 0, –1, 0, 1, 0, 1, 0, 1, 0, –1, 0, 1, 0, 1, 0, 1, 0,
–1, 0, 1, 0, –1, 0, –1, 0, 1, 0, –1, 0, –1, 0, –1, 0, 1, 0, 1, 0, –1, 0, –1, 0, –1, 0, 1, 0, –1, 0, –1, 0, 1, 0,
–1, 0, 1, 0, 1, 0, –1, 0, 1, 0, –1, 0, –1, 0, –1, 0, 1, 0, –1, 0, –1, 0, –1, 0, –1, 0, 1, 0, 1, 0, 1, 0, –1, 0,
1, 0, 1, 0, –1, 0, –1, 0, 1, 0, –1, 0, –1, 0, –1, 0, 1, 0, 1, 0, 1, 0, 1, 0, –1, 0, –1, 0, –1, 0, 1, 0, 1, 0, 1,
0, 1, 0, –1, 0, 1, 0, 1, 0, 1, 0, –1, 0, 1, 0, –1, 0, –1, 0, –1, 0, 1, 0, 1, 0, –1, 0, –1, 0, –1, 0, 1, 0, –1, 0,
–1, 0, 1, 0, –1, 0, 1, 0, 1, 0, 1, 0, 1, 0, –1, 0, 1, 0, 1, 0, 1, 0, –1, 0, 1, 0, –1, 0, –1, 0, 1, 0, –1, 0, –1,
0, 1, 0, –1, 0, –1, 0, 1, 0, 1, 0, –1, 0, 1, 0, 1, 0, 1, 0, –1, 0, –1, 0, –1, 0, –1, 0, 1, 0, –1, 0, 1, 0, 1, 0,
1, 0, –1, 0, 1, 0, 1, 0, 1, 0, 1, 0, –1, 0, –1, 0, –1, 0, 1, 0, 1, 0, 1, 0, –1, 0, –1, 0, –1, 0, 0, 0, 0, 0,
0, 0, 0, –1, 0, 1, 0, 1, 0, –1, 0, –1, 0, 1, 0, –1, 0, 1, 0, 1, 0, 1, 0, –1, 0, –1, 0, –1, 0, –1, 0, 1, 0, –1, 0,
–1, 0, –1, 0, 1, 0, –1, 0, 1, 0, 1, 0, 1, 0, 1, 0, –1, 0, –1, 0, –1, 0, 1, 0, –1, 0, –1, 0, 1, 0, 1, 0, –1, 0, –1,
0, 1, 0, –1, 0, –1, 0, 1, 0, 1, 0, –1, 0, 1, 0, 1, 0, 1, 0, –1, 0, –1, 0, –1, 0, –1, 0, 1, 0, –1, 0, 1, 0, 1, 0,
1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1,
0, 1, 0, –1, 0, 1, 0, 1, 0, –1, 0, 1, 0, –1, 0, –1, 0, –1, 0, 1, 0, –1, 0, –1, 0, –1, 0, –1, 0, 1, 0, –1, 0, 1,
0, 1, 0, –1, 0, –1, 0, 1, 0, 1, 0, –1, 0, 1, 0, 1, 0, 1, 0, –1, 0, –1, 0, –1, 0, –1, 0, 1, 0, –1, 0, 1, 0, 1, 0,
1, 0, –1, 0, 1, 0, 1, 0, 1, 0, 1, 0, –1, 0, –1, 0, –1, 0, 1, 0, 1, 0, 1, 0, –1, 0, –1, 0, –1, 0, 0, 0, 0,
0, 0, 0, –1, 0, 1, 0, 1, 0, –1, 0, –1, 0, 1, 0, –1, 0, 1, 0, 1, 0, 1, 0, –1, 0, –1, 0, –1, 0, –1, 0, 1, 0, –1, 0,
–1, 0, –1, 0, 1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1,
0, 1, 0, –1, 0, 1, 0, 1, 0, –1, 0, 1, 0, –1, 0, –1, 0, –1, 0, 1, 0, –1, 0, –1, 0, –1, 0, –1, 0, 1, 0, –1, 0, 1,
0, 1, 0, –1, 0, 1, 0, 1, 0, 1, 0, –1, 0, –1, 0, 1, 0, 1, 0, 1, 0, –1, 0, 1, 0, –1, 0, –1, 0, –1, 0, 1, 0, –1, 0,
–1, 0, –1, 0, –1, 0, 1, 0, 1, 0, 1, 0, –1, 0, –1, 0, –1, 0, –1, 0, 1, 0, 1, 0, 1, 0, –1, 0, 1, 0, 1, 0, –1, 0, –
1, 0, 1, 0, –1, 0, –1, 0, –1, 0, 1, 0, 1, 0, 1, 0, –1, 0, 1, 0, 1, 0, 1, 0, –1, 0, 1, 0, –1, 0, –1, 0, 1, 0,
–1, 0, 1, 0, 1, 0, –1, 0, 1, 0, 1, 0, 1, 0, –1, 0, –1, 0, 1, 0, 1, 0, 1, 0, –1, 0, 1, 0, 1, 0, –1, 0, 1, 0, –1, 0,
–1, 0, –1, 0, 1, 0, –1, 0, –1, 0, –1, 0, 1, 0, –1, 0, 1, 0, –1, 0, –1, 0, 1, 0, –1, 0, 1, 0, 1, 0, 1, 0, –1, 0,
1, 0, 1, 0, 1, 0, 1, 0, –1, 0, 1, 0, –1, 0, –1, 0, 1, 0, –1, 0, –1, 0, –1, 0, 1, 0, 1, 0, –1, 0, –1, 0, –1, 0, 1,
0, 1, 0, 1, 0, –1, 0, –1, 0, –1, 0, –1, 0, 1, 0, –1, 0, –1, 0, –1, 0, 1, 0, –1, 0, 1, 0, 1, 0, 1, 0, 1, 0, –1, 0,
–1, 0, –1, 0, 1, 0, –1, 0, –1, 0, 1, 0, 1, 0, –1, 0, 1, 0, 1, 0, 1, 0, 1, 0, –1, 0, 1, 0, 1, 0, 1, 0, –1, 0, 1, 0,
0, –1, 0, –1, 0, –1, 0, 1, 0, 1, 0, 1, 0, 1, 0, –1, 0, 1, 0, 1, 0, 1, 0, –1, 0, 1, 0, –1, 0, –1, 0, –1, 0, 1, 0,

1, 0, –1, 0, –1, 0, –1, 0, 1, 0, –1, 0, –1, 0, 1, 0, –1, 0, 1, 0, 1, 0, 1, 0, 1, 0, –1, 0, 1, 0, 1, 0, 1, 0, –1,
0, 1, 0, –1, 0, –1, 0, 1, 0, –1, 0, –1, 0, 1, 0, –1, 0, –1, 0, 1, 0, 1, 0, –1, 0, 1, 0, 1, 0, 1, 0, –1, 0, –1, 0,
–1, 0, –1, 0, 1, 0, –1, 0, 1, 0, 1, 0, 1, 0, –1, 0, 1, 0, 1, 0, 1, 0, 1, 0, –1, 0, –1, 0, –1, 0, –1, 0, 1, 0, 1,
0, 1, 0, –1, 0, –1, 0, –1, 0, 0, 0, 0, 0, 0, 0, 1, 0, –1, 0, –1, 0, 1, 0, 1, 0, –1, 0, 1, 0, –1, 0, –1, 0, –1, 0,
1, 0, 1, 0, 1, 0, 1, 0, –1, 0, 1, 0, 1, 0, 1, 0, –1, 0, 1, 0, –1, 0, –1, 0, –1, 0, –1, 0, 1, 0, 1, 0, 1, 0, –1, 0,
1, 0, 1, 0, –1, 0, –1, 0, 1, 0, –1, 0, –1, 0, 1, 0, –1, 0, –1, 0, 1, 0, –1, 0, 1, 0, 1, 0, 1, 0, –1, 0, 1, 0, 1,
0, 1, 0, 1, 0, –1, 0, 1, 0, –1, 0, –1, 0, 1, 0, –1, 0, –1, 0, –1, 0, 1, 0, 1, 0, –1, 0, –1, 0, –1, 0, 1, 0, –1,
0, 1, 0, 1, 0, 1, 0, –1, 0, 1, 0, 1, 0, 1, 0, –1, 0, –1, 0, –1, 0, 1, 0, 1, 0, 1, 0, 1, 0, –1, 0, –1, 0, –
1, 0, 1, 0, –1, 0, –1, 0, 1, 0, 1, 0, –1, 0, 1, 0, 1, 0, 1, 0, –1, 0, –1, 0, –1, 0, –1, 0, 1, 0, –1, 0, –1, 0, –
1, 0, 1, 0, –1, 0, 1, 0, 1, 0, –1, 0, 1, 0, –1, 0, –1, 0, 1, 0, –1, 0, –1, 0, –1, 0, 1, 0, 1, 0, –1, 0, –1, 0, –
1, 0, 1, 0, –1, 0, –1, 0, 1, 0, 1, 0, 1, 0, 1, 0, –1, 0, 1, 0, 1, 0, 1, 0, –1, 0, 1, 0, –1, 0, 1, 0, 1, 0,
–1, 0, 1, 0, –1, 0, –1, 0, –1, 0, 1, 0, –1, 0, –1, 0, –1, 0, –1, 0, 1, 0, –1, 0, 1, 0, 1, 0, –1, 0, 1, 0, 1, 0,
1, 0, –1, 0, –1, 0, 1, 0, 1, 0, 1, 0, –1, 0, –1, 0, –1, 0, 1, 0, 1, 0, 1, 0, 1, 0, –1, 0, 1, 0, 1, 0, 1, 0, –1, 0,
1, 0, –1, 0, –1, 0, –1, 0, –1, 0, 1, 0, 1, 0, 1, 0, –1, 0, 1, 0, 1, 0, –1, 0, –1, 0, 1, 0, –1, 0, –1, 0, –1, 0,
–1, 0, 1, 0, –1, 0, –1, 0, –1, 0, 1, 0, –1, 0, 1, 0, 1, 0, –1, 0, 1, 0, 1, 0, –1, 0, 1, 0, –1, 0, –1, 0, 1, 0, –
1, 0, –1, 0, –1, 0, 1, 0, 1, 0, –1, 0, –1, 0, –1, 0, 1, 0, –1, 0, –1, 0, 1, 0, –1, 0, 1, 0, 1, 0, 1, 0, –1, 0, 1,
0, 1, 0, 1, 0, 1, 0, –1, 0, –1, 0, –1, 0, –1, 0, 1, 0, 1, 0, 1, 0, –1, 0, 1, 0, 1, 0, –1, 0, –1, 0, 1, 0, –1, 0,
–1, 0, –1, 0, 1, 0, 1, 0, 1, 0, 1, 0, –1, 0, 1, 0, 1, 0, 1, 0, –1, 0, 1, 0, 1, 0, 0, 0, 0, 0, 0, 0, 0, 0, 0, 0,
0, 0, 0, 0, 0, 0, 0, 0, 0, 0, 0, –1, 0, –1, 0, 1, 0, –1, 0, –1, 0, –1, 0, 1, 0, –1, 0, –1, 0, –1, 0, –1, 0, 1, 0,
1, 0, 1, 0, –1, 0, 1, 0, 1, 0, –1, 0, –1, 0, 1, 0, –1, 0, –1, 0, –1, 0, 1, 0, 1, 0, 1, 0, 1, 0, –1, 0, –1, 0, –
1, 0, –1, 0, 1, 0, –1, 0, –1, 0, –1, 0, 1, 0, –1, 0, 1, 0, 1, 0, –1, 0, 1, 0, 1, 0, 1, 0, –1, 0, –1, 0, 1, 0, 1,
0, 1, 0, –1, 0, 1, 0, 1, 0, –1, 0, 1, 0, –1, 0, –1, 0, 1, 0, –1, 0, –1, 0, 1, 0, –1, 0, 1, 0, 1, 0, 1, 0, –1, 0,
1, 0, 1, 0, 1, 0, 1, 0, –1, 0, 1, 0, 1, 0, –1, 0, –1, 0, 1, 0, –1, 0, –1, 0, –1, 0, 1, 0, 1, 0, 1, 0, 1, 0, –1, 0,
1, 0, –1, 0, –1, 0, –1, 0, 1, 0, –1, 0, –1, 0, –1, 0, 1, 0, 1, 0, 1, 0, –1, 0, –1, 0, –1, 0, 1, 0, 1, 0,
–1, 0, –1, 0, –1, 0, 1, 0, –1, 0, –1, 0, 1, 0, –1, 0, 1, 0, 1, 0, 1, 0, –1, 0, 1, 0, 1, 0, 1, 0, –1, 0, 1,
0, –1, 0, –1, 0, 1, 0, –1, 0, –1, 0, 1, 0, 1, 0, 1, 0, –1, 0, 1, 0, 1, 0, 1, 0, –1, 0, 1, 0, –1, 0, –1, 0, 1, 0,
–1, 0, –1, 0, –1, 0, 1, 0, 1, 0, –1, 0, –1, 0, –1, 0, 1, 0, –1, 0, –1, 0, 1, 0, –1, 0, –1, 0, 1, 0, –1, 0, 1, 0,
–1, 0, –1, 0, –1, 0, 1, 0, 1, 0, 1, 0, 1, 0, –1, 0, –1, 0, –1, 0, 1, 0, 1, 0, 1, 0, 1, 0, –1, 0, 1, 0, 1, 0, 1, 0,
–1, 0, 1, 0, –1, 0, –1, 0, –1, 0, 1, 0, 1, 0, –1, 0, –1, 0, –1, 0, 1, 0, –1, 0, –1, 0, 1, 0, –1, 0, 1, 0, 1, 0,
1, 0, 1, 0, –1, 0, 1, 0, 1, 0, 1, 0, –1, 0, 1, 0, –1, 0, –1, 0, 1, 0, –1, 0, –1, 0, 1, 0, –1, 0, –1, 0, 1, 0, 1,
0, –1, 0, 1, 0, 1, 0, 1, 0, –1, 0, –1, 0, –1, 0, –1, 0, 1, 0, –1, 0, 1, 0, 1, 0, 1, 0, –1, 0, 1, 0, 1, 0, 1, 0, 1,
0, –1, 0, –1, 0, –1, 0, –1, 0, 1, 0, 1, 0, 1, 0, –1, 0, –1, 0, –1, 0, 0, 0, 0, 0, 0, 0, –1, 0, 1, 0, 1, 0, –1, 0,
–1, 0, 1, 0, –1, 0, 1, 0, 1, 0, 1, 0, –1, 0, –1, 0, –1, 0, –1, 0, 1, 0, –1, 0, –1, 0, –1, 0, 1, 0, –1, 0, 1, 0,
1, 0, 1, 0, 1, 0, –1, 0, –1, 0, –1, 0, 1, 0, –1, 0, –1, 0, 1, 0, 1, 0, –1, 0, 1, 0, 1, 0, –1, 0, 1, 0, 1, 0, –1,

0, 1, 0, –1, 0, –1, 0, –1, 0, 1, 0, –1, 0, –1, 0, –1, 0, –1, 0, 1, 0, –1, 0, 1, 0, 1, 0, –1, 0, 1, 0, 1, 0, 1, 0,
–1, 0, –1, 0, 1, 0, 1, 0, 1, 0, –1, 0, 1, 0, –1, 0, –1, 0, –1, 0, 1, 0, –1, 0, –1, 0, –1, 0, –1, 0, 1, 0, 1, 0,
1, 0, –1, 0, –1, 0, –1, 0, –1, 0, 1, 0, 1, 0, 1, 0, –1, 0, 1, 0, 1, 0, –1, 0, –1, 0, 1, 0, –1, 0, –1, 0, –1, 0,
1, 0, 1, 0, 1, 0, 1, 0, –1, 0, 1, 0, 1, 0, 1, 0, –1, 0, 1, 0, –1, 0, –1, 0, 1, 0, –1, 0, 1, 0, 1, 0, –1, 0, 1, 0,
1, 0, 1, 0, –1, 0, –1, 0, 1, 0, 1, 0, 1, 0, –1, 0, 1, 0, 1, 0, –1, 0, 1, 0, –1, 0, –1, 0, –1, 0, 1, 0, –1, 0, –
1, 0, –1, 0, 1, 0, –1, 0, 1, 0, –1, 0, –1, 0, 1, 0, –1, 0, 1, 0, 1, 0, 1, 0, –1, 0, 1, 0, 1, 0, 1, 0, 1, 0, –1, 0,
1, 0, –1, 0, –1, 0, 1, 0, –1, 0, –1, 0, –1, 0, 1, 0, 1, 0, –1, 0, –1, 0, –1, 0, 1, 0, 1, 0, 1, 0, –1, 0, –1, 0,
–1, 0, –1, 0, 1, 0, –1, 0, –1, 0, –1, 0, 1, 0, –1, 0, 1, 0, 1, 0, 1, 0, 1, 0, –1, 0, –1, 0, –1, 0, 1, 0, –1, 0,
–1, 0, 1, 0, 1, 0, –1, 0, 1, 0, 1, 0, 1, 0, 1, 0, –1, 0, 1, 0, 1, 0, 1, 0, –1, 0, 1, 0, –1, 0, –1, 0, 1, 0, –1, 0,
–1, 0, 1, 0, –1, 0, 1, 0, 1, 0, –1, 0, 1, 0, 1, 0, 1, 0, –1, 0, –1, 0, 1, 0, 1, 0, 1, 0, –1, 0, 1, 0, 1, 0, –1, 0,
1, 0, –1, 0, –1, 0, –1, 0, 1, 0, –1, 0, –1, 0, –1, 0, –1, 0, 1, 0, 1, 0, 1, 0, 1, 0, –1, 0, –1, 0, –1, 0, 1, 0,
–1, 0, –1, 0, 1, 0, 1, 0, –1, 0, 1, 0, 1, 0, 1, 0, –1, 0, –1, 0, –1, 0, –1, 0, 1, 0, –1, 0, –1, 0, –1, 0, 1, 0,
–1, 0, –1, 0, 0, 0, 0, 0, 0, 0, 0, 0, 0, 0, 0, 0, 0, 0, 0, 0, 0, 0, 0, 0, 0, 0, 0, 0, –1, 0, –1, 0, 1, 0, –1, 0, –1, 0,
–1, 0, 1, 0, –1, 0, –1, 0, –1, 0, –1, 0, 1, 0, 1, 0, 1, 0, –1, 0, 1, 0, 1, 0, –1, 0, –1, 0, 1, 0, –1, 0, –1, 0,
–1, 0, 1, 0, 1, 0, 1, 0, 1, 0, –1, 0, –1, 0, –1, 0, –1, 0, 1, 0, –1, 0, –1, 0, –1, 0, 1, 0, –1, 0, 1, 0, 1, 0, –
1, 0, 1, 0, 1, 0, 1, 0, –1, 0, –1, 0, 1, 0, 1, 0, 1, 0, –1, 0, 1, 0, 1, 0, –1, 0, 1, 0, –1, 0, –1, 0, 1, 0, –1, 0,
–1, 0, 1, 0, –1, 0, 1, 0, 1, 0, 1, 0, –1, 0, 1, 0, 1, 0, 1, 0, 1, 0, –1, 0, 1, 0, 1, 0, –1, 0, –1, 0, 1, 0, –1, 0,
–1, 0, –1, 0, 1, 0, 1, 0, 1, 0, 1, 0, –1, 0, 1, 0, –1, 0, –1, 0, –1, 0, 1, 0, –1, 0, –1, 0, –1, 0, –1, 0, 1, 0,
1, 0, 1, 0, –1, 0, –1, 0, –1, 0, 1, 0, 1, 0, –1, 0, –1, 0, –1, 0, 1, 0, –1, 0, –1, 0, 1, 0, –1, 0, 1, 0, 1, 0, 1,
0, 1, 0, –1, 0, 1, 0, 1, 0, 1, 0, –1, 0, 1, 0, –1, 0, –1, 0, 1, 0, –1, 0, –1, 0, 1, 0, 1, 0, 1, 0, –1, 0, 1, 0, 1,
0, 1, 0, –1, 0, 1, 0, –1, 0, –1, 0, 1, 0, –1, 0, –1, 0, –1, 0, 1, 0, 1, 0, –1, 0, –1, 0, –1, 0, 1, 0, –1, 0, –
1, 0, 1, 0, –1, 0, 1, 0, 1, 0, –1, 0, 1, 0, –1, 0, –1, 0, –1, 0, 1, 0, –1, 0, –1, 0, –1, 0, –1, 0, 1, 0, 1, 0, 1,
0, –1, 0, 1, 0, 1, 0, –1, 0, –1, 0, 1, 0, –1, 0, –1, 0, –1, 0, 1, 0, 1, 0, 1, 0, 1, 0, –1, 0, –1, 0, –1, 0, 1, 0,
1, 0, 1, 0, 1, 0, –1, 0, 1, 0, 1, 0, 1, 0, –1, 0, 1, 0, –1, 0, –1, 0, –1, 0, 1, 0, 1, 0, –1, 0, –1, 0, –1, 0, 1,
0, –1, 0, –1, 0, 1, 0, –1, 0, 1, 0, 1, 0, 1, 0, 1, 0, –1, 0, 1, 0, 1, 0, 1, 0, –1, 0, 1, 0, –1, 0, –1, 0, 1, 0, –
1, 0, –1, 0, 1, 0, –1, 0, –1, 0, 1, 0, 1, 0, –1, 0, 1, 0, 1, 0, 1, 0, –1, 0, –1, 0, –1, 0, –1, 0, 1, 0, –1, 0, 1,
0, 1, 0, 1, 0, –1, 0, 1, 0, 1, 0, 1, 0, 1, 0, –1, 0, –1, 0, –1, 0, –1, 0, 1, 0, 1, 0, 1, 0, –1, 0, –1, 0, –1, 0,
0, 0, 0, 0, 0, 0, 1, 0, –1, 0, –1, 0, 1, 0, 1, 0, –1, 0, 1, 0, –1, 0, –1, 0, –1, 0, 1, 0, 1, 0, 1, 0, 1, 0, –1, 0,
1, 0, 1, 0, 1, 0, –1, 0, 1, 0, –1, 0, –1, 0, –1, 0, –1, 0, 1, 0, 1, 0, 1, 0, –1, 0, 1, 0, 1, 0, –1, 0, –1, 0, 1,
0, –1, 0, –1, 0, 1, 0, –1, 0, –1, 0, 1, 0, –1, 0, 1, 0, 1, 0, 1, 0, –1, 0, 1, 0, 1, 0, 1, 0, 1, 0, –1, 0, 1, 0, –
1, 0, –1, 0, 1, 0, –1, 0, –1, 0, –1, 0, 1, 0, 1, 0, –1, 0, –1, 0, –1, 0, 1, 0, –1, 0, 1, 0, 1, 0, 1, 0, –1, 0, 1,
0, 1, 0, 1, 0, 1, 0, –1, 0, –1, 0, –1, 0, 1, 0, 1, 0, 1, 0, 1, 0, –1, 0, –1, 0, –1, 0, 1, 0, –1, 0, –1, 0, 1, 0,
1, 0, –1, 0, 1, 0, 1, 0, 1, 0, –1, 0, –1, 0, –1, 0, –1, 0, 1, 0, –1, 0, –1, 0, –1, 0, 1, 0, –1, 0, 1, 0, 1, 0, –
1, 0, 1, 0, –1, 0, –1, 0, 1, 0, –1, 0, –1, 0, –1, 0, 1, 0, 1, 0, –1, 0, –1, 0, –1, 0, 1, 0, –1, 0, –1, 0, 1, 0,
–1, 0, 1, 0, 1, 0, 1, 0, –1, 0, 1, 0, 1, 0, 1, 0, –1, 0, 1, 0, –1, 0, 1, 0, 1, 0, –1, 0, 1, 0, –1, 0, –1, 0, –1,

0, 1, 0, –1, 0, –1, 0, –1, 0, –1, 0, 1, 0, –1, 0, 1, 0, 1, 0, –1, 0, 1, 0, 1, 0, 1, 0, –1, 0, –1, 0, 1, 0, 1, 0, 1, 0, –1, 0, –1, 0, –1, 0, 1, 0, 1, 0, 1, 0, –1, 0, 1, 0, 1, 0, 1, 0, –1, 0, 1, 0, –1, 0, –1, 0, –1, 0, – 1, 0, 1, 0, 1, 0, 1, 0, –1, 0, 1, 0, 1, 0, –1, 0, –1, 0, 1, 0, –1, 0, –1, 0, –1, 0, –1, 0, 1, 0, –1, 0, –1, 0, – 1, 0, 1, 0, –1, 0, 1, 0, 1, 0, –1, 0, 1, 0, 1, 0, –1, 0, 1, 0, –1, 0, –1, 0, 1, 0, –1, 0, –1, 0, –1, 0, 1, 0, 1, 0, –1, 0, –1, 0, –1, 0, 1, 0, –1, 0, –1, 0, 1, 0, –1, 0, 1, 0, 1, 0, 1, 0, –1, 0, 1, 0, 1, 0, 1, 0, 1, 0, –1, 0, –1, 0, –1, 0, –1, 0, –1, 0, 1, 0, 1, 0, 1, 0, –1, 0, 1, 0, 1, 0, –1, 0, –1, 0, 1, 0, –1, 0, –1, 0, –1, 0, 1, 0, 1, 0, 1, 0, 1, 0, –1, 0, 1, 0, 1, 0, 1, 0, –1, 0, 1, 0, 1, 0, 0, 0, 0, 0, 0, 0, 0, 0, 0, 0, 0, 0, 0, 0, 0, 0, 0, 0, 0, 0, 0, 0, 0, 1, 0, 1, 0, –1, 0, 1, 0, 1, 0, 1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1, 0, 1, 0, 1, 0, –1, 0, –1, 0, –1, 0, 1, 0, 1, 0, 1, 0, 1, 0, –1, 0, 1, 0, 1, 0, 1, 0, – 1, 0, 1, 0, –1, 0, –1, 0, 1, 0, –1, 0, –1, 0, –1, 0, 1, 0, 1, 0, –1, 0, –1, 0, –1, 0, 1, 0, –1, 0, –1, 0, 1, 0, –1, 0, 1, 0, 1, 0, –1, 0, 1, 0, 1, 0, –1, 0, 1, 0, –1, 0, –1, 0, 1, 0, –1, 0, –1, 0, –1, 0, 1, 0, –1, 0, –1, 0, –1, 0, 1, 0, –1, 0, –1, 0, 1, 0, 1, 0, –1, 0, 1, 0, 1, 0, 1, 0, –1, 0, –1, 0, –1, 0, –1, 0, 1, 0, –1, 0, 1, 0, 1, 0, 1, 0, – 1, 0, 1, 0, 1, 0, 1, 0, 1, 0, –1, 0, –1, 0, –1, 0, 1, 0, 1, 0, 1, 0, –1, 0, –1, 0, 1, 0, 1, 0, 1, 0, –1, 0, 1, 0, 1, 0, –1, 0, 1, 0, –1, 0, –1, 0, –1, 0, –1, 0, 1, 0, –1, 0, –1, 0, –1, 0, 1, 0, –1, 0, 1, 0, 1, 0, –1, 0, 1, 0, 1, 0, –1, 0, –1, 0, –1, 0, 1, 0, –1, 0, –1, 0, –1, 0, 1, 0, –1, 0, 1, 0, 1, 0, –1, 0, 1, 0, 1, 0, 1, 0, –1, 0, – 1, 0, 1, 0, 1, 0, 1, 0, –1, 0, 1, 0, 1, 0, –1, 0, 1, 0, –1, 0, –1, 0, 1, 0, –1, 0, 1, 0, 1, 0, 1, 0, –1, 0, 1, 0, 1, 0, 1, 0, 1, 0, –1, 0, –1, 0, –1, 0, 1, 0, –1, 0, –1, 0, 1, 0, 1, 0, –1, 0, 1, 0, 1, 0, 1, 0, –1, 0, –1, 0, – 1, 0, –1, 0, 1, 0, 1, 0, 1, 0, –1, 0, –1, 0, –1, 0, –1, 0, 1, 0, –1, 0, –1, 0, –1, 0, 1, 0, –1, 0, 1, 0, 1, 0, 1, 0, –1, 0, –1, 0, 1, 0, 1, 0, 1, 0, –1, 0, 1, 0, 1, 0, –1, 0, 1, 0, –1, 0, –1, 0, –1, 0, –1, 0, 1, 0, –1, 0, –1, 0, –1, 0, 1, 0, –1, 0, 1, 0, 1, 0, –1, 0, 1, 0, 1, 0, –1, 0, –1, 0, 1, 0, –1, 0, –1, 0, –1, 0, 1, 0, 1, 0, 1, 0, 1, 0, –1, 0, 1, 0, –1, 0, –1, 0, –1, 0, 1, 0, –1, 0, –1, 0, –1, 0, –1, 0, 1, 0, 1, 0, 1, 0, 1, 0, –1, 0, –1, 0, –1, 0, 1, 0, 1, 0, 1, 0, 0, 0, 0, 0, 0, 0, 1, 0, –1, 0, –1, 0, 1, 0, 1, 0, –1, 0, 1, 0, –1, 0, – 1, 0, –1, 0, 1, 0, 1, 0, 1, 0, 1, 0, –1, 0, 1, 0, 1, 0, 1, 0, –1, 0, 1, 0, –1, 0, –1, 0, –1, 0, –1, 0, 1, 0, 1, 0, 1, 0, –1, 0, 1, 0, 1, 0, –1, 0, –1, 0, 1, 0, –1, 0, –1, 0, 1, 0, –1, 0, –1, 0, 1, 0, –1, 0, 1, 0, 1, 0, 1, 0, – 1, 0, 1, 0, 1, 0, 1, 0, 1, 0, –1, 0, 1, 0, –1, 0, –1, 0, 1, 0, –1, 0, –1, 0, –1, 0, 1, 0, 1, 0, –1, 0, –1, 0, – 1, 0, 1, 0, –1, 0, 1, 0, 1, 0, 1, 0, –1, 0, 1, 0, 1, 0, 1, 0, 1, 0, –1, 0, –1, 0, –1, 0, 1, 0, 1, 0, 1, 0, 1, 0, – 1, 0, –1, 0, –1, 0, 1, 0, –1, 0, –1, 0, 1, 0, 1, 0, –1, 0, 1, 0, 1, 0, 1, 0, –1, 0, –1, 0, –1, 0, –1, 0, 1, 0, – 1, 0, –1, 0, –1, 0, 1, 0, –1, 0, 1, 0, 1, 0, –1, 0, 1, 0, –1, 0, –1, 0, 1, 0, –1, 0, –1, 0, –1, 0, 1, 0, 1, 0, – 1, 0, –1, 0, –1, 0, 1, 0, –1, 0, –1, 0, 1, 0, –1, 0, 1, 0, 1, 0, 1, 0, –1, 0, 1, 0, 1, 0, 1, 0, –1, 0, 1, 0, –1, 0, 1, 0, 1, 0, –1, 0, 1, 0, –1, 0, –1, 0, –1, 0, 1, 0, –1, 0, –1, 0, –1, 0, –1, 0, 1, 0, –1, 0, 1, 0, 1, 0, –1, 0, 1, 0, 1, 0, 1, 0, –1, 0, –1, 0, 1, 0, 1, 0, 1, 0, –1, 0, –1, 0, –1, 0, 1, 0, 1, 0, 1, 0, 1, 0, –1, 0, 1, 0, 1, 0, 1, 0, –1, 0, 1, 0, –1, 0, –1, 0, –1, 0, –1, 0, 1, 0, 1, 0, 1, 0, –1, 0, 1, 0, 1, 0, –1, 0, –1, 0, 1, 0, –1, 0, –1, 0, – 1, 0, –1, 0, –1, 0, 1, 0, –1, 0, –1, 0, –1, 0, 1, 0, –1, 0, 1, 0, 1, 0, –1, 0, 1, 0, 1, 0, –1, 0, 1, 0, –1, 0, –1, 0, 1, 0, –1, 0, –1, 0, –1, 0, 1, 0, 1, 0, –1, 0, –1, 0, –1, 0, 1, 0, –1, 0, –1, 0, 1, 0, –1, 0, 1, 0, 1, 0, 1, 0, –1, 0, 1, 0, 1, 0, 1, 0, 1, 0, –1, 0, –1, 0, –1, 0, –1, 0, 1, 0, 1, 0, 1, 0, –1, 0, 1, 0, 1, 0, –1, 0, –1,

0, 1, 0, −1, 0, −1, 0, −1, 0, 1, 0, 1, 0, 1, 0, 1, 0, −1, 0, 1, 0, 1, 0, 1, 0, −1, 0, 1, 0, 1, 0, 0, 0, 0, 0, 0, 0, 0, 0, 0, 0, 0, 0, 0, 0, 0, 0, 0, 0, 0, 0, 0, 0, 1, 0, 1, 0, −1, 0, 1, 0, 1, 0, 1, 0, −1, 0, 1, 0, 1, 0, 1, 0, 1, 0, −1, 0, −1, 0, −1, 0, 1, 0, −1, 0, −1, 0, 1, 0, 1, 0, −1, 0, 1, 0, 1, 0, 1, 0, −1, 0, −1, 0, −1, 0, −1, 0, 1, 0, 1, 0, 1, 0, 1, 0, −1, 0, 1, 0, 1, 0, 1, 0, −1, 0, 1, 0, −1, 0, −1, 0, 1, 0, −1, 0, −1, 0, −1, 0, 1, 0, 1, 0, −1, 0, −1, 0, −1, 0, 1, 0, −1, 0, −1, 0, 1, 0, −1, 0, 1, 0, 1, 0, −1, 0, 1, 0, 1, 0, −1, 0, 1, 0, −1, 0, −1, 0, −1, 0, 1, 0, −1, 0, −1, 0, −1, 0, 1, 0, −1, 0, −1, 0, 1, 0, 1, 0, −1, 0, 1, 0, 1, 0, 1, 0, −1, 0, −1, 0, −1, 0, 1, 0, 1, 0, 1, 0, −1, 0, 1, 0, −1, 0, 1, 0, 1, 0, 1, 0, −1, 0, 1, 0, 1, 0, 1, 0, 1, 0, −1, 0, −1, 0, −1, 0, 1, 0, 1, 0, 1, 0, −, 1, 0, −1, 0, 1, 0, 1, 0, 1, 0, −1, 0, 1, 0, 1, 0, −1, 0, 1, 0, −1, 0, −1, 0, −1, 0, 1, 0, −1, 0, −1, 0, −, 1, 0, 1, 0, −1, 0, 1, 0, 1, 0, −1, 0, 1, 0, 1, 0, −1, 0, −1, 0, −1, 0, 1, 0, −1, 0, −1, 0, −1, 0, 1, 0, −1, 0, 1, 0, 1, 0, −1, 0, 1, 0, 1, 0, 1, 0, −1, 0, 1, 0, 1, 0, −1, 0, 1, 0, 1, 0, −1, 0, −1, 0, 1, 0, −1, 0, 1, 0, 1, 0, 1, 0, −1, 0, 1, 0, 1, 0, 1, 0, 1, 0, −1, 0, −1, 0, −1, 0, 1, 0, −1, 0, −1, 0, 1, 0, 1, 0, −, 1, 0, 1, 0, 1, 0, 1, 0, −1, 0, −1, 0, −1, 0, −1, 0, 1, 0, 1, 0, 1, 0, −1, 0, −1, 0, −1, 0, −1, 0, 1, 0, −1, 0, −, 1, 0, −1, 0, 1, 0, −1, 0, 1, 0, 1, 0, 1, 0, −1, 0, 1, 0, 1, 0, 1, 0, −1, 0, 1, 0, 1, 0, −1, 0, 1, 0, −1, 0, −1, 0, −1, 0, 1, 0, −1, 0, 1, 0, 1, 0, −1, 0, −1, 0, 1, 0, 1, 0, 1, 0, 1, 0, −1, 0, 1, 0, 1, 0, 1, 0, 1, 0, −1, 0, −1, 0, −1, 0, 1, 0, 1, 0, 1, 0, 1, 0, 1, 0, −1, 0, −1, 0, −1, 0, 1, 0, −1, 0, −1, 0, −1, 0, 1, 0, −1, 0, −, 1, 0, −1, 0, 1, 0, 1, 0, 1, 0, −1, 0, 1, 0, 1, 0, 1, 0, 1, 0, −1, 0, 1, 0, 1, 0, −1, 0, 1, 0, −1, 0, −1, 0, −1, 0, −1, 0, 1, 0, −1, 0, −1, 0, −1, 0, 1, 0, −1, 0, 1, 0, 1, 0, −1, 0, 1, 0, 1, 0, −1, 0, 1, 0, 1, 0, 1, 0, −, 1, 0, −1, 0, 1, 0, −1, 0, −1, 0, −1, 0, 1, 0, 1, 0, 1, 0, 1, 0, −1, 0, 1, 0, −1, 0, −1, 0, −1, 0, 1, 0, −1, 0, −, 1, 0, −1, 0, −1, 0, 1, 0, 1, 0, 1, 0, 1, 0, −1, 0, −1, 0, −1, 0, 1, 0, 1, 0, 1, 0, 0, 0, 0, 0, 0, 0, 1, 0, −1, 0, −1, 0, 1, 0, 1, 0, −1, 0, 1, 0, −1, 0, −1, 0, −1, 0, 1, 0, 1, 0, 1, 0, 1, 0, −1, 0, 1, 0, 1, 0, 1, 0, −1, 0, 1, 0, −1, 0, −1, 0, −1, 0, −1, 0, 1, 0, 1, 0, 1, 0, −1, 0, 1, 0, 1, 0, −1, 0, −1, 0, 1, 0, −1, 0, −1, 0, 1, 0, −1, 0, −1, 0, 1, 0, −1, 0, −1, 0, −1, 0, 1, 0, 1, 0, 1, 0, 1, 0, −1, 0, 1, 0, −1, 0, −1, 0, 1, 0, −1, 0, −1, 0, 1, 0, 1, 0, 1, 0, 1, 0, −1, 0, 1, 0, 1, 0, 1, 0, 1, 0, −1, 0, 1, 0, 1, 0, 1, 0, −1, 0, 1, 0, 1, 0, 1, 0, 1, 0, −1, 0, 1, 0, 1, 0, 1, 0, 1, 0, −1, 0, 1, 0, 1, 0, 1, 0, −1, 0, −1, 0, −1, 0, 1, 0, −1, 0, −1, 0, −1, 0, 1, 0, −1, 0, −1, 0, 1, 0, 1, 0, −1, 0, −1, 0, −1, 0, 1, 0, −1, 0, −1, 0, −1, 0, −, 1, 0, −1, 0, 1, 0, 1, 0, −1, 0, −1, 0, −1, 0, 1, 0, −1, 0, −1, 0, 1, 0, 1, 0, −1, 0, 1, 0, 1, 0, 1, 0, −1, 0, −1, 0, −1, 0, −1, 0, 1, 0, −1, 0, −1, 0, −1, 0, 1, 0, −1, 0, 1, 0, 1, 0, −1, 0, 1, 0, 1, 0, −1, 0, −1, 0, −1, 0, 1, 0, 1, 0, −1, 0, −1, 0, −1, 0, 1, 0, −1, 0, −1, 0, −1, 0, 1, 0, −1, 0, −1, 0, 1, 0, 1, 0, −1, 0, −1, 0, −1, 0, 1, 0, −1, 0, −1, 0, 1, 0, −1, 0, 1, 0, 1, 0, 1, 0, −1, 0, 1, 0, 1, 0, 1, 0, 1, 0, −1, 0, 1, 0, 1, 0, 1, 0, −1, 0, 1, 0, 1, 0, −1, 0, 1, 0, 1, 0, 1, 0, −1, 0, −1, 0, 1, 0, 1, 0, 1, 0, 1, 0, −1, 0, 1, 0, 1, 0, 1, 0, −1, 0, −1, 0, −1, 0, 1, 0, 1, 0, 1, 0, 1, 0, −1, 0, 1, 0, 1, 0, −1, 0, 1, 0, −1, 0, −1, 0, −1, 0, −1, 0, 1, 0, −1, 0, −1, 0, −1, 0, 1, 0, −1, 0, 1, 0, 1, 0, −1, 0, 1, 0, 1, 0, −1, 0, −1, 0, −1, 0, 1, 0, 1, 0, −1, 0, −1, 0, −1, 0, 1, 0, −1, 0, 1, 0, 1, 0, 1, 0, 1, 0, −1, 0, 1, 0, 1, 0, −1, 0, 1, 0, −1, 0, −1, 0, −1, 0, −1, 0, 1, 0, 1, 0, 1, 0, 1, 0, −1, 0, 1, 0, 1, 0, 1, 0, −1, 0, 1, 0, −1, 0, −1, 0, 1, 0, −1, 0, −1, 0, −1, 0, −1, 0, 1, 0, −1, 0, −1, 0, −1, 0, 1, 0, −1, 0, 1, 0, 1, 0, −1, 0, 1, 0, 1, 0, 1, 0, 1, 0, −1, 0, 1, 0, 1, 0, 1, 0, 1, 0, −1, 0, 1, 0, 1, 0, 1, 0, 1, 0, 0, 0, 0, 0, 0, 0, 0, 0, 0, 0, 0, 0, 0, 0, 0, 0, 0, 0, 0, 0, 0, 0, 0, 0, −1, 0, −1, 0, 1, 0, −1, 0, −1, 0, −1, 0, 1, 0, −1, 0, −1, 0, −1, 0, 1, 0, 1, 0, 1, 0, −1, 0, 1, 0, 1, 0, −1, 0, −1, 0, 1, 0, −1, 0, −1, 0, −1, 0, 1, 0, 1, 0, 1, 0, −1, 0, 1, 0, 1, 0, 1, 0, −1, 0, −1, 0, −1, 0, 1, 0, −1, 0, 1, 0, 1, 0, −, 1, 0, 1, 0, 1, 0, 1, 0, −1, 0, −1, 0, 1, 0, 1, 0, 1, 0, −1, 0, 1, 0, 1, 0, −1, 0, 1, 0, −1, 0, −1, 0, 1, 0, −1, 0, −1, 0, 1, 0, −1, 0, 1, 0, 1, 0, 1, 0, −1, 0, 1, 0, 1, 0, 1, 0, 1, 0, −1, 0, 1, 0, 1, 0, −1, 0, −1, 0, 1, 0, −1, 0,

−1, 0, −1, 0, 1, 0, 1, 0, 1, 0, 1, 0, −1, 0, 1, 0, −1, 0, −1, 0, −1, 0, 1, 0, −1, 0, −1, 0, −1, 0, −1, 0, 1, 0, 1, 0, 1, 0, −1, 0, −1, 0, −1, 0, 1, 0, 1, 0, −1, 0, −1, 0, −1, 0, 1, 0, −1, 0, −1, 0, 1, 0, −1, 0, 1, 0, 1, 0, 1, 0, 1, 0, −1, 0, 1, 0, 1, 0, 1, 0, −1, 0, 1, 0, −1, 0, −1, 0, 1, 0, −1, 0, −1, 0, 1, 0, 1, 0, 1, 0, −1, 0, 1, 0, 1, 0, 1, 0, −1, 0, 1, 0, −1, 0, −1, 0, 1, 0, −1, 0, −1, 0, −1, 0, 1, 0, 1, 0, −1, 0, −1, 0, −1, 0, 1, 0, −1, 0, −1, 0, 1, 0, 1, 0, −1, 0, 1, 0, −1, 0, −1, 0, −1, 0, 1, 0, −1, 0, −1, 0, −1, 0, −1, 0, 1, 0, 1, 0, 1, 0, −1, 0, 1, 0, 1, 0, −1, 0, −1, 0, 1, 0, −1, 0, −1, 0, −1, 0, 1, 0, 1, 0, 1, 0, 1, 0, −1, 0, −1, 0, −1, 0, 1, 0, 1, 0, 1, 0, 1, 0, −1, 0, 1, 0, 1, 0, 1, 0, −1, 0, 1, 0, −1, 0, −1, 0, −1, 0, 1, 0, 1, 0, −1, 0, −1, 0, −1, 0, 1, 0, −1, 0, −1, 0, 1, 0, −1, 0, 1, 0, 1, 0, 1, 0, −1, 0, 1, 0, 1, 0, 1, 0, −1, 0, 1, 0, −1, 0, −1, 0, 1, 0, −1, 0, −1, 0, 1, 0, −1, 0, −1, 0, 1, 0, 1, 0, −1, 0, 1, 0, 1, 0, 1, 0, −1, 0, −1, 0, −1, 0, −1, 0, 1, 0, −1, 0, 1, 0, 1, 0, 1, 0, −1, 0, 1, 0, 1, 0, 1, 0, 1, 0, −1, 0, −1, 0, −1, 0, −1, 0, 1, 0, 1, 0, 1, 0, −1, 0, −1, 0, −1, 0, 0, 0, 0, 0, 0, 0, 1, 0, −1, 0, −1, 0, 1, 0, 1, 0, −1, 0, 1, 0, −1, 0, −1, 0, −1, 0, 1, 0, 1, 0, 1, 0, 1, 0, −1, 0, 1, 0, 1, 0, 1, 0, −1, 0, 1, 0, −1, 0, −1, 0, −1, 0, −1, 0, 1, 0, 1, 0, 1, 0, −1, 0, 1, 0, 1, 0, −1, 0, −1, 0, 1, 0, −1, 0, −1, 0, 1, 0, −1, 0, −1, 0, 1, 0, 1, 0, 1, 0, −1, 0, 1, 0, 1, 0, 1, 0, 1, 0, −1, 0, 1, 0, −1, 0, −1, 0, −1, 0, 1, 0, 1, 0, −1, 0, −1, 0, −1, 0, 1, 0, −1, 0, 1, 0, 1, 0, 1, 0, −1, 0, 1, 0, 1, 0, 1, 0, −1, 0, −1, 0, −1, 0, 1, 0, 1, 0, 1, 0, −1, 0, −1, 0, −1, 0, 1, 0, −1, 0, −1, 0, 1, 0, 1, 0, −1, 0, −1, 0, −1, 0, −1, 0, 1, 0, −1, 0, −1, 0, −1, 0, 1, 0, −1, 0, −1, 0, 1, 0, 1, 0, −1, 0, 1, 0, 1, 0, 1, 0, −1, 0, 1, 0, 1, 0, 1, 0, −1, 0, 1, 0, −1, 0, 1, 0, 1, 0, −1, 0, 1, 0, −1, 0, 1, 0, 1, 0, −1, 0, 1, 0, −1, 0, −1, 0, −1, 0, 1, 0, 1, 0, −1, 0, −1, 0, −1, 0, 1, 0, −1, 0, −1, 0, 1, 0, 1, 0, −1, 0, −1, 0, −1, 0, −1, 0, 1, 0, −1, 0, 1, 0, 1, 0, 1, 0, −1, 0, −1, 0, 1, 0, 1, 0, 1, 0, −1, 0, 1, 0, −1, 0, −1, 0, −1, 0, 1, 0, 1, 0, 1, 0, −1, 0, 1, 0, −1, 0, −1, 0, −1, 0, −1, 0, 1, 0, 1, 0, 1, 0, −1, 0, 1, 0, 1, 0, −1, 0, 1, 0, 1, 0, −1, 0, −1, 0, 1, 0, −1, 0, −1, 0, −1, 0, −1, 0, 1, 0, −1, 0, −1, 0, −1, 0, 1, 0, −1, 0, 1, 0, 1, 0, −1, 0, 1, 0, 1, 0, −1, 0, 1, 0, 1, 0, −1, 0, 1, 0, −1, 0, −1, 0, 1, 0, −1, 0, −1, 0, −1, 0, 1, 0, −1, 0, −1, 0, −1, 0, 1, 0, 1, 0, 1, 0, −1, 0, −1, 0, −1, 0, 1, 0, −1, 0, −1, 0, 1, 0, −1, 0, −1, 0, 1, 0, −1, 0, −1, 0, 1, 0, 1, 0, 1, 0, −1, 0, 1, 0, 1, 0, 1, 0, −1, 0, 1, 0, 1

Sequences shown below may be expanded through a method similar to that for the sequence (3a). Details are not described below. When the basic LTF sequence changes, expanded content of the LTF sequence also changes.

$\pm\{$LTF$_{80MHz\_2x}(1{:}245),$ LTF$_{80MHz\_2x}(246{:}500),$ $0,$ LTF$_{80MHz\_2x}(502{:}756),$ LTF$_{80MHz\_2x}(757{:}1001), 0_{23},$

$-$LTF$_{80MHz\_2x}(1{:}245),$ $-$LTF$_{80MHz\_2x}(246{:}500),$ $0,$ LTF$_{80MHz\_2x}(502{:}756),$ LTF$_{80MHz\_2x}(757{:}1001), 0_{23},$

LTF$_{80MHz\_2x}(1{:}245),$ $-$LTF$_{80MHz\_2x}(246{:}500),$ $0,$ $-$LTF$_{80MHz\_2x}(502{:}756),$ LTF$_{80MHz\_2x}(757{:}1001), 0_{23},$

$-$LTF$_{80MHz\_2x}(1{:}245),$ LTF$_{80MHz\_2x}(246{:}500),$ $0,$ $-$LTF$_{80MHz\_2x}(502{:}756),$

LTF$_{80MHz\_2x}(757{:}1001), 0_{23},$

$-$LTF$_{80MHz\_2x}(1{:}245),$ LTF$_{80MHz\_2x}(246{:}500),$ $0,$ $-$LTF$_{80MHz\_2x}(502{:}756),$ LTF$_{80MHz\_2x}(757{:}1001), 0_{23},$

LTF$_{80MHz\_2x}(1{:}245),$ $-$LTF$_{80MHz\_2x}(246{:}500),$ $0,$ $-$LTF$_{80MHz\_2x}(502{:}756),$ LTF$_{80MHz\_2x}(757{:}1001), 0_{23},$

$-$LTF$_{80MHz\_2x}(1{:}245),$ $-$LTF$_{80MHz\_2x}(246{:}500),$ $0,$ LTF$_{80MHz\_2x}(502{:}756),$ LTF$_{80MHz\_2x}(757{:}1001), 0_{23},$

LTF$_{80MHz\_2x}(1{:}245),$ LTF$_{80MHz\_2x}(246{:}500),$ $0,$ LTF$_{80MHz\_2x}(502{:}756),$ LTF$_{80MHz\_2x}(757{:}1001)\}$ (4)

For the sequence (4), the LTF sequence may include the following sequence (4a) or sequence (4b):

$$\text{LTF}_{-4084,4084} =$$

$$\{\text{LTF}_{80\text{MHz\_2x}}(1{:}245), \quad \text{LTF}_{80\text{MHz\_2x}}(246{:}500), \quad 0, \quad \text{LTF}_{80\text{MHz\_2x}}(502{:}756),$$
$$\text{LTF}_{80\text{MHz\_2x}}(757{:}1001), 0_{23},$$

$$-\text{LTF}_{80\text{MHz\_2x}}(1{:}245), \quad -\text{LTF}_{80\text{MHz\_2x}}(246{:}500), \quad 0, \quad \text{LTF}_{80\text{MHz\_2x}}(502{:}756),$$
$$\text{LTF}_{80\text{MHz\_2x}}(757{:}1001), 0_{23},$$

$$\text{LTF}_{80\text{MHz\_2x}}(1{:}245), \quad -\text{LTF}_{80\text{MHz\_2x}}(246{:}500), \quad 0, \quad -\text{LTF}_{80\text{MHz\_2x}}(502{:}756),$$
$$\text{LTF}_{80\text{MHz\_2x}}(757{:}1001), 0_{23},$$

$$-\text{LTF}_{80\text{MHz\_2x}}(1{:}245), \quad \text{LTF}_{80\text{MHz\_2x}}(246{:}500), \quad 0, \quad -\text{LTF}_{80\text{MHz\_2x}}(502{:}756),$$
$$\text{LTF}_{80\text{MHz\_2x}}(757{:}1001), 0_{23},$$

$$-\text{LTF}_{80\text{MHz\_2x}}(1{:}245), \quad \text{LTF}_{80\text{MHz\_2x}}(246{:}500), \quad 0, \quad -\text{LTF}_{80\text{MHz\_2x}}(502{:}756),$$
$$\text{LTF}_{80\text{MHz\_2x}}(757{:}1001), 0_{23},$$

$$\text{LTF}_{80\text{MHz\_2x}}(1{:}245), \quad -\text{LTF}_{80\text{MHz\_2x}}(246{:}500), \quad 0, \quad -\text{LTF}_{80\text{MHz\_2x}}(502{:}756),$$
$$\text{LTF}_{80\text{MHz\_2x}}(757{:}1001), 0_{23},$$

$$-\text{LTF}_{80\text{MHz\_2x}}(1{:}245), \quad -\text{LTF}_{80\text{MHz\_2x}}(246{:}500), \quad 0, \quad \text{LTF}_{80\text{MHz\_2x}}(502{:}756),$$
$$\text{LTF}_{80\text{MHz\_2x}}(757{:}1001), 0_{23},$$

$$\text{LTF}_{80\text{MHz\_2x}}(1{:}245), \quad \text{LTF}_{80\text{MHz\_2x}}(246{:}500), \quad 0, \quad \text{LTF}_{80\text{MHz\_2x}}(502{:}756),$$
$$\text{LTF}_{80\text{MHz\_2x}}(757{:}1001)\} \quad (4a)$$

$$\text{LTF}_{-4084,4084} =$$

$$\{-\text{LTF}_{80\text{MHz\_2x}}(1{:}245), \quad -\text{LTF}_{80\text{MHz\_2x}}(246{:}500), \quad 0, \quad -\text{LTF}_{80\text{MHz\_2x}}(502{:}756), \quad -$$
$$\text{LTF}_{80\text{MHz\_2x}}(757{:}1001), 0_{23},$$

$$\text{LTF}_{80\text{MHz\_2x}}(1{:}245), \quad \text{LTF}_{80\text{MHz\_2x}}(246{:}500), \quad 0, \quad -\text{LTF}_{80\text{MHz\_2x}}(502{:}756), \quad -$$
$$\text{LTF}_{80\text{MHz\_2x}}(757{:}1001), 0_{23},$$

$$-\text{LTF}_{80\text{MHz\_2x}}(1{:}245), \quad \text{LTF}_{80\text{MHz\_2x}}(246{:}500), \quad 0, \quad \text{LTF}_{80\text{MHz\_2x}}(502{:}756), \quad -$$
$$\text{LTF}_{80\text{MHz\_2x}}(757{:}1001), 0_{23},$$

$LTF_{80MHz\_2x}(1:245)$, $-LTF_{80MHz\_2x}(246:500)$, 0, $LTF_{80MHz\_2x}(502:756)$, $-LTF_{80MHz\_2x}(757:1001)$, $0_{23}$,

$LTF_{80MHz\_2x}(1:245)$, $-LTF_{80MHz\_2x}(246:500)$, 0, $LTF_{80MHz\_2x}(502:756)$, $-LTF_{80MHz\_2x}(757:1001)$, $0_{23}$,

$-LTF_{80MHz\_2x}(1:245)$, $LTF_{80MHz\_2x}(246:500)$, 0, $LTF_{80MHz\_2x}(502:756)$, $-LTF_{80MHz\_2x}(757:1001)$, $0_{23}$,

$LTF_{80MHz\_2x}(1:245)$, $LTF_{80MHz\_2x}(246:500)$, 0, $-LTF_{80MHz\_2x}(502:756)$, $-LTF_{80MHz\_2x}(757:1001)$, $0_{23}$,

$-LTF_{80MHz\_2x}(1:245)$, $-LTF_{80MHz\_2x}(246:500)$, 0, $-LTF_{80MHz\_2x}(502:756)$, $-LTF_{80MHz\_2x}(757:1001)\}$ (4b)

For related descriptions between the sequences (4a) and (4b) and the sequence (4), refer to the description of the foregoing sequence (3). Details are not described herein again.

$\pm\{LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$-LTF_{80MHz\_2x}(1:245)$, $-LTF_{80MHz\_2x}(246:500)$, 0, $-LTF_{80MHz\_2x}(502:756)$, $-LTF_{80MHz\_2x}(757:1001)$, $0_{23}$,

$-LTF_{80MHz\_2x}(1:245)$, $-LTF_{80MHz\_2x}(246:500)$, 0, $-LTF_{80MHz\_2x}(502:756)$, $-LTF_{80MHz\_2x}(757:1001)$, $0_{23}$,

$-LTF_{80MHz\_2x}(1:245)$, $-LTF_{80MHz\_2x}(246:500)$, 0, $LTF_{80MHz\_2x}(502:756)$, $LTF_{80MHz\_2x}(757:1001)$, $0_{23}$,

$LTF_{80MHz\_2x}(1:245)$, $LTF_{80MHz\_2x}(246:500)$, 0, $-LTF_{80MHz\_2x}(502:756)$, $-LTF_{80MHz\_2x}(757:1001)$, $0_{23}$,

$LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$-LTF_{80MHz\_2x}(1:245)$, $-LTF_{80MHz\_2x}(246:500)$, 0, $-LTF_{80MHz\_2x}(502:756)$, $-LTF_{80MHz\_2x}(757:1001)\}$ (5)

For the sequence (5), the LTF sequence may include the following sequence (5a) or sequence (5b):

$$LTF_{-4084,4084} =$$

$$\{LTF_{80MHz\_2x}(1:245), \quad LTF_{80MHz\_2x}(246:500), \quad 0, \quad LTF_{80MHz\_2x}(502:756),$$

$$LTF_{80MHz\_2x}(757:1001), 0_{23},$$

$$-LTF_{80MHz\_2x}(1:245), \quad -LTF_{80MHz\_2x}(246:500), \quad 0, \quad -LTF_{80MHz\_2x}(502:756), \quad -$$

$$LTF_{80MHz\_2x}(757:1001), 0_{23},$$

$-\text{LTF}_{80\text{MHz}\_2x}(1{:}245),$ $\quad -\text{LTF}_{80\text{MHz}\_2x}(246{:}500),$ $\quad 0,$ $\quad -\text{LTF}_{80\text{MHz}\_2x}(502{:}756),$ $\quad -\text{LTF}_{80\text{MHz}\_2x}(757{:}1001), 0_{23},$

$-\text{LTF}_{80\text{MHz}\_2x}(1{:}245),$ $\quad -\text{LTF}_{80\text{MHz}\_2x}(246{:}500),$ $\quad 0,$ $\quad \text{LTF}_{80\text{MHz}\_2x}(502{:}756),$ $\text{LTF}_{80\text{MHz}\_2x}(757{:}1001), 0_{23},$

$\text{LTF}_{80\text{MHz}\_2x}(1{:}245),$ $\quad \text{LTF}_{80\text{MHz}\_2x}(246{:}500),$ $\quad 0,$ $\quad -\text{LTF}_{80\text{MHz}\_2x}(502{:}756),$ $\quad -\text{LTF}_{80\text{MHz}\_2x}(757{:}1001), 0_{23},$

$\text{LTF}_{80\text{MHz}\_2x}(1{:}245),$ $\quad \text{LTF}_{80\text{MHz}\_2x}(246{:}500),$ $\quad 0,$ $\quad \text{LTF}_{80\text{MHz}\_2x}(502{:}756),$ $\text{LTF}_{80\text{MHz}\_2x}(757{:}1001), 0_{23},$

$\text{LTF}_{80\text{MHz}\_2x}(1{:}245),$ $\quad \text{LTF}_{80\text{MHz}\_2x}(246{:}500),$ $\quad 0,$ $\quad \text{LTF}_{80\text{MHz}\_2x}(502{:}756),$ $\text{LTF}_{80\text{MHz}\_2x}(757{:}1001), 0_{23},$

$-\text{LTF}_{80\text{MHz}\_2x}(1{:}245),$ $\quad -\text{LTF}_{80\text{MHz}\_2x}(246{:}500),$ $\quad 0,$ $\quad -\text{LTF}_{80\text{MHz}\_2x}(502{:}756),$ $\quad -\text{LTF}_{80\text{MHz}\_2x}(757{:}1001)\}$ (5a)

$$\text{LTF}_{-4084,4084} =$$

$\{-\text{LTF}_{80\text{MHz}\_2x}(1{:}245),$ $\quad -\text{LTF}_{80\text{MHz}\_2x}(246{:}500),$ $\quad 0,$ $\quad -\text{LTF}_{80\text{MHz}\_2x}(502{:}756),$ $\quad -\text{LTF}_{80\text{MHz}\_2x}(757{:}1001), 0_{23},$

$\text{LTF}_{80\text{MHz}\_2x}(1{:}245),$ $\quad \text{LTF}_{80\text{MHz}\_2x}(246{:}500),$ $\quad 0,$ $\quad \text{LTF}_{80\text{MHz}\_2x}(502{:}756),$ $\text{LTF}_{80\text{MHz}\_2x}(757{:}1001), 0_{23},$

$\text{LTF}_{80\text{MHz}\_2x}(1{:}245),$ $\quad \text{LTF}_{80\text{MHz}\_2x}(246{:}500),$ $\quad 0,$ $\quad \text{LTF}_{80\text{MHz}\_2x}(502{:}756),$ $\text{LTF}_{80\text{MHz}\_2x}(757{:}1001), 0_{23},$

$\text{LTF}_{80\text{MHz}\_2x}(1{:}245),$ $\quad \text{LTF}_{80\text{MHz}\_2x}(246{:}500),$ $\quad 0,$ $\quad -\text{LTF}_{80\text{MHz}\_2x}(502{:}756),$ $\quad -\text{LTF}_{80\text{MHz}\_2x}(757{:}1001), 0_{23},$

$-\text{LTF}_{80\text{MHz}\_2x}(1{:}245),$ $\quad -\text{LTF}_{80\text{MHz}\_2x}(246{:}500),$ $\quad 0,$ $\quad \text{LTF}_{80\text{MHz}\_2x}(502{:}756),$ $\text{LTF}_{80\text{MHz}\_2x}(757{:}1001), 0_{23},$

$-\text{LTF}_{80\text{MHz}\_2x}(1{:}245),$ $\quad -\text{LTF}_{80\text{MHz}\_2x}(246{:}500),$ $\quad 0,$ $\quad -\text{LTF}_{80\text{MHz}\_2x}(502{:}756),$ $\quad -\text{LTF}_{80\text{MHz}\_2x}(757{:}1001), 0_{23},$

$-\text{LTF}_{80\text{MHz}\_2x}(1{:}245),$ $\quad -\text{LTF}_{80\text{MHz}\_2x}(246{:}500),$ $\quad 0,$ $\quad -\text{LTF}_{80\text{MHz}\_2x}(502{:}756),$ $\quad -\text{LTF}_{80\text{MHz}\_2x}(757{:}1001), 0_{23},$

$\text{LTF}_{80\text{MHz}\_2x}(1{:}245),$ $\quad \text{LTF}_{80\text{MHz}\_2x}(246{:}500),$ $\quad 0,$ $\quad \text{LTF}_{80\text{MHz}\_2x}(502{:}756),$ $\text{LTF}_{80\text{MHz}\_2x}(757{:}1001)\}$ (5b)

For related descriptions between the sequences (5a) and (5b) and the sequence (5), refer to the description of the foregoing sequence (3). Details are not described herein again.

$\pm\{\text{LTF}_{80\text{MHz\_2x}}(1:245), \quad \text{LTF}_{80\text{MHz\_2x}}(246:500), \quad 0, \quad \text{LTF}_{80\text{MHz\_2x}}(502:756),$
$\text{LTF}_{80\text{MHz\_2x}}(757:1001), 0_{23},$

$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$
$\text{LTF}_{80\text{MHz\_2x}}(757:1001), 0_{23},$

$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$
$\text{LTF}_{80\text{MHz\_2x}}(757:1001), 0_{23},$

$\text{LTF}_{80\text{MHz\_2x}}(1:245), \quad \text{LTF}_{80\text{MHz\_2x}}(246:500), \quad 0, \quad -\text{LTF}_{80\text{MHz\_2x}}(502:756), \quad -$
$\text{LTF}_{80\text{MHz\_2x}}(757:1001), 0_{23},$

$\text{LTF}_{80\text{MHz\_2x}}(1:245), \quad \text{LTF}_{80\text{MHz\_2x}}(246:500), \quad 0, \quad -\text{LTF}_{80\text{MHz\_2x}}(502:756), \quad -$
$\text{LTF}_{80\text{MHz\_2x}}(757:1001), 0_{23},$

$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$
$\text{LTF}_{80\text{MHz\_2x}}(757:1001), 0_{23},$

$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$
$\text{LTF}_{80\text{MHz\_2x}}(757:1001), 0_{23},$

$\text{LTF}_{80\text{MHz\_2x}}(1:245), \quad \text{LTF}_{80\text{MHz\_2x}}(246:500), \quad 0, \quad \text{LTF}_{80\text{MHz\_2x}}(502:756),$
$\text{LTF}_{80\text{MHz\_2x}}(757:1001)\} \quad (6)$

For the sequence (6), the LTF sequence may include the following sequence (6a) or sequence (6b):

$LTF_{-4084,4084} =$

$\{-LTF_{80MHz\_2x}(1{:}245), \quad -LTF_{80MHz\_2x}(246{:}500), \quad 0, \quad -LTF_{80MHz\_2x}(502{:}756), \quad -LTF_{80MHz\_2x}(757{:}1001), 0_{23},$

$LTF_{80MHz\_2x}(1{:}245), \quad LTF_{80MHz\_2x}(246{:}500), \quad 0, \quad LTF_{80MHz\_2x}(502{:}756), LTF_{80MHz\_2x}(757{:}1001), 0_{23},$

$LTF_{80MHz\_2x}(1{:}245), \quad LTF_{80MHz\_2x}(246{:}500), \quad 0, \quad LTF_{80MHz\_2x}(502{:}756), LTF_{80MHz\_2x}(757{:}1001), 0_{23},$

$-LTF_{80MHz\_2x}(1{:}245), \quad -LTF_{80MHz\_2x}(246{:}500), \quad 0, \quad LTF_{80MHz\_2x}(502{:}756), LTF_{80MHz\_2x}(757{:}1001), 0_{23},$

$-LTF_{80MHz\_2x}(1{:}245), \quad -LTF_{80MHz\_2x}(246{:}500), \quad 0, \quad LTF_{80MHz\_2x}(502{:}756), LTF_{80MHz\_2x}(757{:}1001), 0_{23},$

$LTF_{80MHz\_2x}(1{:}245), \quad LTF_{80MHz\_2x}(246{:}500), \quad 0, \quad LTF_{80MHz\_2x}(502{:}756), LTF_{80MHz\_2x}(757{:}1001), 0_{23},$

$LTF_{80MHz\_2x}(1{:}245), \quad LTF_{80MHz\_2x}(246{:}500), \quad 0, \quad LTF_{80MHz\_2x}(502{:}756), LTF_{80MHz\_2x}(757{:}1001), 0_{23},$

$-LTF_{80MHz\_2x}(1{:}245), \quad -LTF_{80MHz\_2x}(246{:}500), \quad 0, \quad -LTF_{80MHz\_2x}(502{:}756), \quad -LTF_{80MHz\_2x}(757{:}1001)\} \quad (6a)$

$LTF_{-4084,4084} =$

$\{LTF_{80MHz\_2x}(1{:}245), \quad LTF_{80MHz\_2x}(246{:}500), \quad 0, \quad LTF_{80MHz\_2x}(502{:}756), LTF_{80MHz\_2x}(757{:}1001), 0_{23},$

$-LTF_{80MHz\_2x}(1{:}245), \quad -LTF_{80MHz\_2x}(246{:}500), \quad 0, \quad -LTF_{80MHz\_2x}(502{:}756), \quad -$

$LTF_{80MHz\_2x}(757:1001), 0_{23},$

$-LTF_{80MHz\_2x}(1:245),$ $-LTF_{80MHz\_2x}(246:500),$ $0,$ $-LTF_{80MHz\_2x}(502:756),$ $-LTF_{80MHz\_2x}(757:1001), 0_{23},$

$LTF_{80MHz\_2x}(1:245),$ $LTF_{80MHz\_2x}(246:500),$ $0,$ $-LTF_{80MHz\_2x}(502:756),$ $-LTF_{80MHz\_2x}(757:1001), 0_{23},$

$LTF_{80MHz\_2x}(1:245),$ $LTF_{80MHz\_2x}(246:500),$ $0,$ $-LTF_{80MHz\_2x}(502:756),$ $-LTF_{80MHz\_2x}(757:1001), 0_{23},$

$-LTF_{80MHz\_2x}(1:245),$ $-LTF_{80MHz\_2x}(246:500),$ $0,$ $-LTF_{80MHz\_2x}(502:756),$ $-LTF_{80MHz\_2x}(757:1001), 0_{23},$

$-LTF_{80MHz\_2x}(1:245),$ $-LTF_{80MHz\_2x}(246:500),$ $0,$ $-LTF_{80MHz\_2x}(502:756),$ $-LTF_{80MHz\_2x}(757:1001), 0_{23},$

$LTF_{80MHz\_2x}(1:245),$ $LTF_{80MHz\_2x}(246:500),$ $0,$ $LTF_{80MHz\_2x}(502:756),$ $LTF_{80MHz\_2x}(757:1001)\}$ (6b)

For related descriptions between the sequences (6a) and (6b) and the sequence (6), refer to the description of the foregoing sequence (3). Details are not described herein again.

$\pm\{LTF_{80MHz\_2x}(1:245),$ $LTF_{80MHz\_2x}(246:500),$ $0,$ $-LTF_{80MHz\_2x}(502:756),$ $-LTF_{80MHz\_2x}(757:1001), 0_{23},$

$LTF_{80MHz\_2x}(1:245),$ $LTF_{80MHz\_2x}(246:500),$ $0,$ $LTF_{80MHz\_2x}(502:756),$ $LTF_{80MHz\_2x}(757:1001), 0_{23},$

$-LTF_{80MHz\_2x}(1:245),$ $-LTF_{80MHz\_2x}(246:500),$ $0,$ $-LTF_{80MHz\_2x}(502:756),$ $-LTF_{80MHz\_2x}(757:1001), 0_{23},$

$-LTF_{80MHz\_2x}(1:245),$ $-LTF_{80MHz\_2x}(246:500),$ $0,$ $-LTF_{80MHz\_2x}(502:756),$ $-LTF_{80MHz\_2x}(757:1001), 0_{23},$

$LTF_{80MHz\_2x}(1:245),$ $LTF_{80MHz\_2x}(246:500),$ $0,$ $LTF_{80MHz\_2x}(502:756),$ $LTF_{80MHz\_2x}(757:1001), 0_{23},$

$LTF_{80MHz\_2x}(1:245),$ $LTF_{80MHz\_2x}(246:500),$ $0,$ $-LTF_{80MHz\_2x}(502:756),$ $-LTF_{80MHz\_2x}(757:1001)\}$ (7)

For the sequence (7), the LTF sequence may include the following sequence (7a) or sequence (7b):

$$\text{LTF}_{-3060,3060} =$$

$$\{\text{LTF}_{80\text{MHz\_2x}}(1:245), \quad \text{LTF}_{80\text{MHz\_2x}}(246:500), \quad 0, \quad -\text{LTF}_{80\text{MHz\_2x}}(502:756), \quad -$$
$$\text{LTF}_{80\text{MHz\_2x}}(757:1001), 0_{23},$$

$$\text{LTF}_{80\text{MHz\_2x}}(1:245), \quad \text{LTF}_{80\text{MHz\_2x}}(246:500), \quad 0, \quad \text{LTF}_{80\text{MHz\_2x}}(502:756),$$
$$\text{LTF}_{80\text{MHz\_2x}}(757:1001), 0_{23},$$

$$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$$
$$\text{LTF}_{80\text{MHz\_2x}}(757:1001), 0_{23},$$

$$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$$
$$\text{LTF}_{80\text{MHz\_2x}}(757:1001), 0_{23},$$

$$\text{LTF}_{80\text{MHz\_2x}}(1:245), \quad \text{LTF}_{80\text{MHz\_2x}}(246:500), \quad 0, \quad \text{LTF}_{80\text{MHz\_2x}}(502:756),$$
$$\text{LTF}_{80\text{MHz\_2x}}(757:1001), 0_{23},$$

$$\text{LTF}_{80\text{MHz\_2x}}(1:245), \quad \text{LTF}_{80\text{MHz\_2x}}(246:500), \quad 0, \quad -\text{LTF}_{80\text{MHz\_2x}}(502:756), \quad -$$
$$\text{LTF}_{80\text{MHz\_2x}}(757:1001)\} \quad (7a)$$

$$\text{LTF}_{-3060,3060} =$$

$$\{-\text{LTF}_{80\text{MHz\_2x}}(1:245), \quad -\text{LTF}_{80\text{MHz\_2x}}(246:500), \quad 0, \quad \text{LTF}_{80\text{MHz\_2x}}(502:756),$$
$$\text{LTF}_{80\text{MHz\_2x}}(757:1001), 0_{23},$$

$$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$$
$$\text{LTF}_{80\text{MHz\_2x}}(757:1001), 0_{23},$$

$$\text{LTF}_{80\text{MHz\_2x}}(1:245), \quad \text{LTF}_{80\text{MHz\_2x}}(246:500), \quad 0, \quad \text{LTF}_{80\text{MHz\_2x}}(502:756),$$
$$\text{LTF}_{80\text{MHz\_2x}}(757:1001), 0_{23},$$

$$\text{LTF}_{80\text{MHz\_2x}}(1:245), \quad \text{LTF}_{80\text{MHz\_2x}}(246:500), \quad 0, \quad \text{LTF}_{80\text{MHz\_2x}}(502:756),$$
$$\text{LTF}_{80\text{MHz\_2x}}(757:1001), 0_{23},$$

$$-\text{LTF}_{80\text{MHz\_2x}}(1:245), \quad -\text{LTF}_{80\text{MHz\_2x}}(246:500), \quad 0, \quad -\text{LTF}_{80\text{MHz\_2x}}(502:756), \quad -$$
$$\text{LTF}_{80\text{MHz\_2x}}(757:1001), 0_{23},$$

$$-\text{LTF}_{80\text{MHz\_2x}}(1:245), \quad -\text{LTF}_{80\text{MHz\_2x}}(246:500), \quad 0, \quad \text{LTF}_{80\text{MHz\_2x}}(502:756),$$
$$\text{LTF}_{80\text{MHz\_2x}}(757:1001)\} \quad (7b)$$

For related descriptions between the sequences (7a) and (7b) and the sequence (7), refer to the description of the foregoing sequence (3). Details are not described herein again.

$\pm\{-LTF_{80MHz\_2x}(1:245), \quad -LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad -LTF_{80MHz\_2x}(246:500), \quad 0, \quad -LTF_{80MHz\_2x}(502:756), \quad -$
$LTF_{80MHz\_2x}(757:1001), 0_{23},$

$LTF_{80MHz\_2x}(1:245), \quad LTF_{80MHz\_2x}(246:500), \quad 0, \quad -LTF_{80MHz\_2x}(502:756), \quad -$
$LTF_{80MHz\_2x}(757:1001), 0_{23},$

$-LTF_{80MHz\_2x}(1:245), \quad LTF_{80MHz\_2x}(246:500), \quad 0, \quad LTF_{80MHz\_2x}(502:756), \quad -$
$LTF_{80MHz\_2x}(757:1001)\} \quad (8)$

For the sequence (8), the LTF sequence may include the following sequence (8a) or sequence (8b):

$$LTF_{-3060,3060} =$$

$\{-LTF_{80MHz\_2x}(1:245), \quad -LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad LTF_{80MHz\_2x}(246:500), \quad 0, \quad LTF_{80MHz\_2x}(502:756),$
$LTF_{80MHz\_2x}(757:1001), 0_{23},$

$LTF_{80MHz\_2x}(1:245), \quad -LTF_{80MHz\_2x}(246:500), \quad 0, \quad -LTF_{80MHz\_2x}(502:756), \quad -$
$LTF_{80MHz\_2x}(757:1001), 0_{23},$

$LTF_{80MHz\_2x}(1:245), \quad LTF_{80MHz\_2x}(246:500), \quad 0, \quad -LTF_{80MHz\_2x}(502:756), \quad -$
$LTF_{80MHz\_2x}(757:1001), 0_{23},$

$-LTF_{80MHz\_2x}(1:245), \quad LTF_{80MHz\_2x}(246:500), \quad 0, \quad LTF_{80MHz\_2x}(502:756), \quad -$
$LTF_{80MHz\_2x}(757:1001)\} \quad (8a)$

$$\text{LTF}_{-3060,3060} =$$

$$\{-\text{LTF}_{80\text{MHz\_2x}}(1{:}245), \quad -\text{LTF}_{80\text{MHz\_2x}}(246{:}500), \quad 0, \quad \text{LTF}_{80\text{MHz\_2x}}(502{:}756),$$

$$\text{LTF}_{80\text{MHz\_2x}}(757{:}1001), \quad 0_{23},$$

$$\text{LTF}_{80\text{MHz\_2x}}(1{:}245), \quad \text{LTF}_{80\text{MHz\_2x}}(246{:}500), \quad 0, \quad \text{LTF}_{80\text{MHz\_2x}}(502{:}756),$$

$$\text{LTF}_{80\text{MHz\_2x}}(757{:}1001), \quad 0_{23},$$

$$\text{LTF}_{80\text{MHz\_2x}}(1{:}245), \quad \text{LTF}_{80\text{MHz\_2x}}(246{:}500), \quad 0, \quad \text{LTF}_{80\text{MHz\_2x}}(502{:}756),$$

$$\text{LTF}_{80\text{MHz\_2x}}(757{:}1001), \quad 0_{23},$$

$$\text{LTF}_{80\text{MHz\_2x}}(1{:}245), \quad -\text{LTF}_{80\text{MHz\_2x}}(246{:}500), \quad 0, \quad -\text{LTF}_{80\text{MHz\_2x}}(502{:}756), \quad -$$

$$\text{LTF}_{80\text{MHz\_2x}}(757{:}1001), \quad 0_{23},$$

$$\text{LTF}_{80\text{MHz\_2x}}(1{:}245), \quad \text{LTF}_{80\text{MHz\_2x}}(246{:}500), \quad 0, \quad -\text{LTF}_{80\text{MHz\_2x}}(502{:}756), \quad -$$

$$\text{LTF}_{80\text{MHz\_2x}}(757{:}1001), \quad 0_{23},$$

$$-\text{LTF}_{80\text{MHz\_2x}}(1{:}245), \quad \text{LTF}_{80\text{MHz\_2x}}(246{:}500), \quad 0, \quad \text{LTF}_{80\text{MHz\_2x}}(502{:}756), \quad -$$

$$\text{LTF}_{80\text{MHz\_2x}}(757{:}1001)\} \quad (8b)$$

For related descriptions between the sequences (8a) and (8b) and the sequence (8), refer to the description of the foregoing sequence (3). Details are not described herein again.

For the LTF sequence shown in embodiments of this application, impact of MRUs or RUs on the sequence and impact of pilot rotation on the sequence are fully considered. Considering different MRUs or RUs and differences in data subcarriers and pilot subcarriers due to pilot rotation for each MRU enables the LTF sequence to be applicable to more types of MRUs or RUs, so that the LTF sequence can be compatible with various RUs or MRUs. The following separately describes MRUs and pilot rotation.

(1) MRUs/RUs

For example, an MRU of the PPDU includes an MRU with ($k \times 996 + m \times 484$) subcarriers. $k$ is an integer greater than or equal to 4. $m$ is equal to 0 or 1. PAPR performance of the LTF sequence on the MRU may vary with different positions and sizes of the MRU in the bandwidth of the PPDU. In addition, a tradeoff between signaling overheads for indicating the MRU and spectral efficiency further needs to be considered. Therefore, in embodiments of this application, PAPR performance, signaling overheads, and spectral efficiency are comprehensively considered, and two MRU modes (for example, a first MRU mode and a second MRU mode) are provided. Various MRUs are included in each mode. For example, the first MRU mode may also be understood as simple MRUs. In this mode, there are a few MRUs, and therefore signaling overheads are low. The second MRU mode may also be understood as detailed MRUs. In this mode, there are more MRUs and spectrum utilization is higher. Generally, a SIG field in the PPDU may include information for indicating the MRU. Therefore, the MRU mode is related to signaling of the SIG field in the PPDU. A name of the SIG field herein is merely an example. For example, the information for indicating the MRU may alternatively be carried by a UHR-SIG field, a next-generation SIG field, or the like.

LTF sequences constructed based on the first MRU mode and the second MRU mode are not limited to MRUs in the first MRU mode and the second MRU mode shown in embodiments of this application, and may alternatively be used for other MRUs. In other words, the LTF sequence shown in embodiments of this application can also well satisfy more MRUs. The MRU mode in embodiments of this application may also be referred to as an MRU pattern (pattern), an MRU style, an MRU type, or the like.

The following describes an MRU related to the PPDU in embodiments of this application.

In an example, when the bandwidth of the PPDU is 640 MHz, an MRU of the 640 MHz PPDU includes any one of the following:

an MRU with ($7 \times 996$) subcarriers (also referred to as a 7×996-tone MRU), an MRU with ($6 \times 996$) subcarriers (also referred to as a 6×996-tone MRU), an MRU with ($5 \times 996$) subcarriers (also referred to as a 5×996-tone MRU), an MRU with ($7 \times 996 + 484$) subcarriers (also referred to as a 7×996+484-tone MRU), an MRU with ($6 \times 996 + 484$) subcarriers (also referred to as a 6×996+484-tone MRU), an MRU with ($5 \times 996 + 484$) subcarriers (also referred to as a 5×996+484-tone MRU), or an MRU with ($4 \times 996 + 484$) subcarriers (also referred to as a $4\times996+484$-tone MRU).

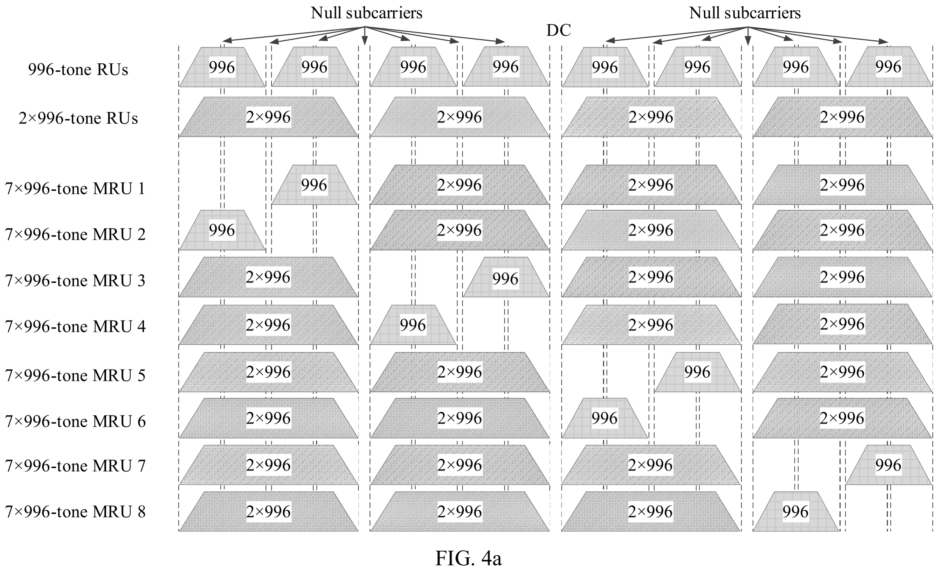

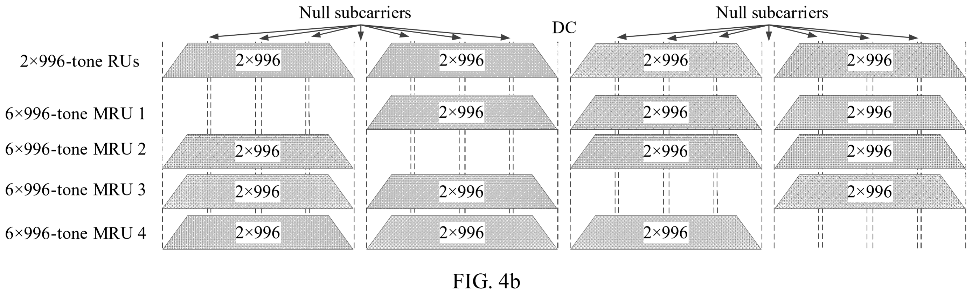

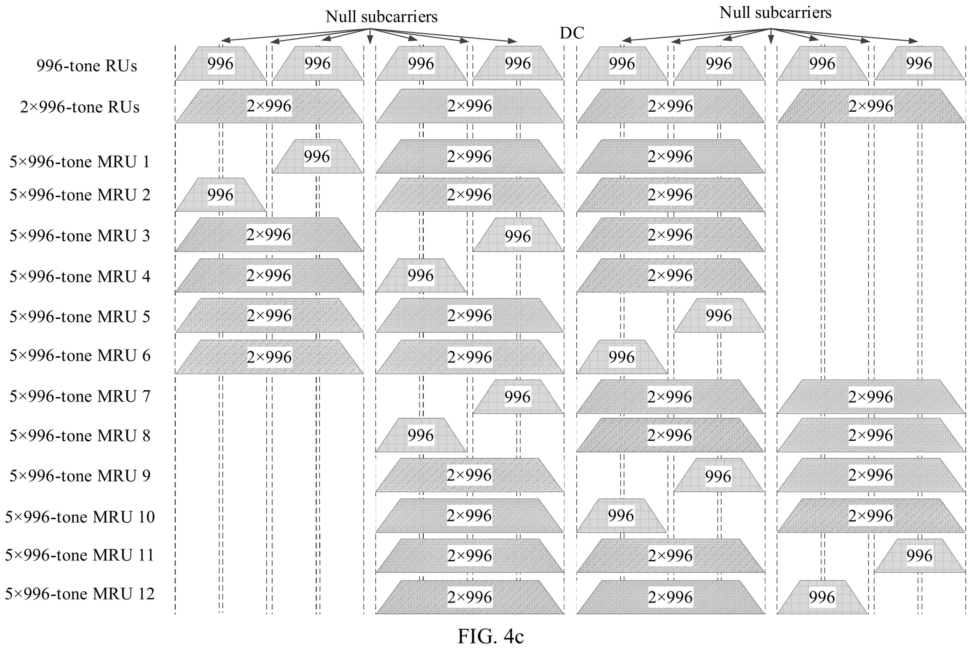

For example, if no 40 MHz subchannel is punctured in 640 MHz, the MRU includes any one of an MRU with ($7 \times 996$) subcarriers shown in FIG. 4a, an MRU with ($6 \times 996$) subcarriers shown in FIG. 4b, or an MRU with ($5 \times 996$) subcarriers shown in FIG. 4c. The MRUs shown in FIG. 4a to FIG. 4c may be understood as MRUs in the first MRU mode corresponding to 640 MHz.

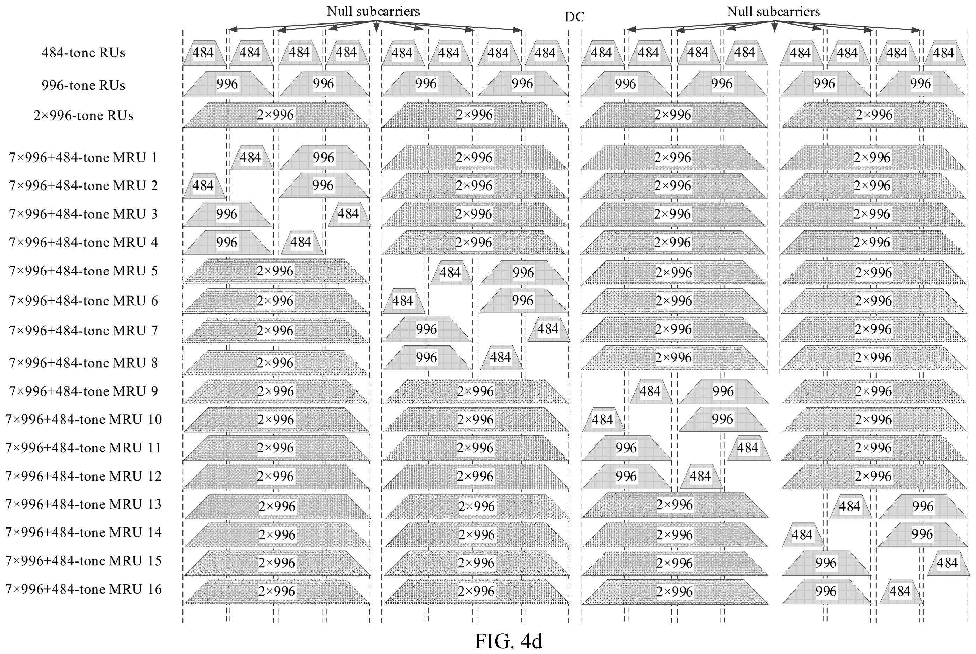

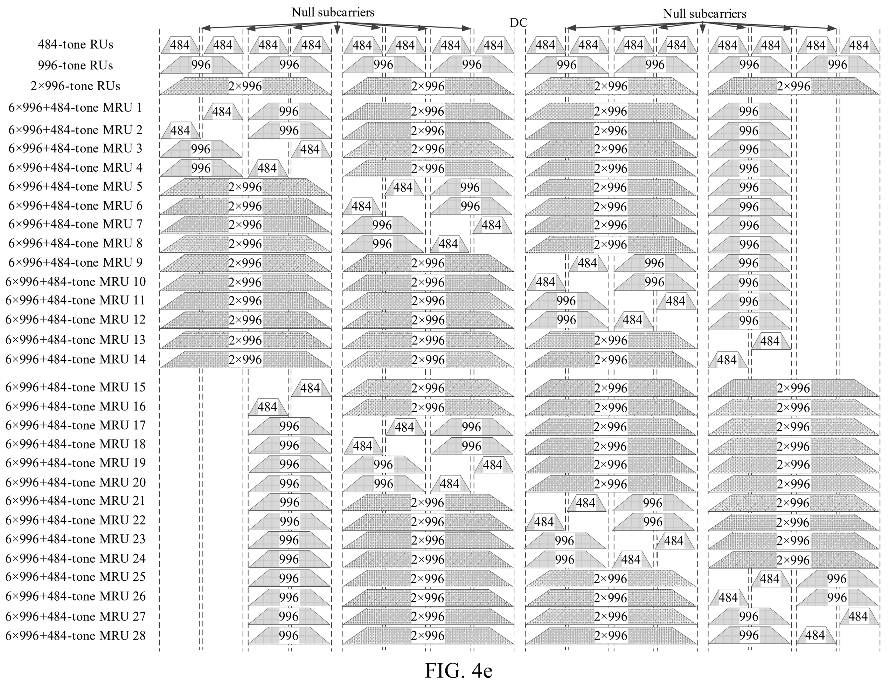

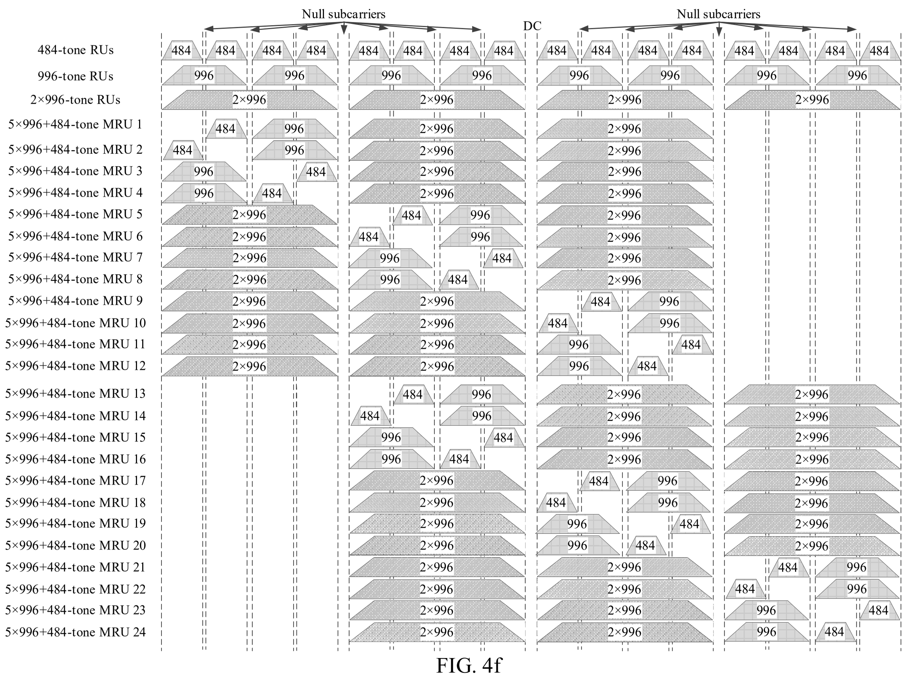

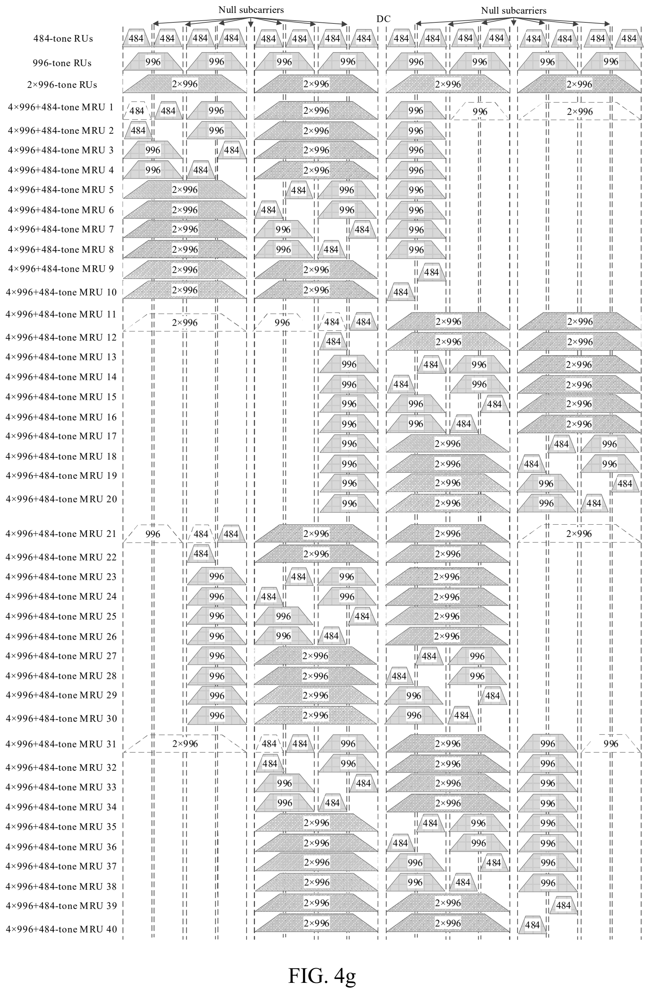

For example, if a punctured subchannel in 640 MHz includes a 40 MHz subchannel, the MRU includes any one of an MRU with ($7 \times 996 + 484$) subcarriers shown in FIG. 4d, an MRU with ($6 \times 996 + 484$) subcarriers shown in FIG. 4e, an MRU with ($5 \times 996 + 484$) subcarriers shown in FIG. 4f, or an MRU with ($4 \times 996 + 484$) subcarriers shown in FIG. 4g. The MRUs shown in FIG. 4d to FIG. 4g may be understood as MRUs in the second MRU mode corresponding to 640 MHz.

When the bandwidth of the PPDU is 640 MHz, effective bandwidths of the MRUs shown in FIG. 4a, FIG. 4b, FIG. 4d, and FIG. 4e are greater than or equal to 480 MHz. The effective bandwidth is a bandwidth remaining in the 640 MHz bandwidth except the punctured subchannel. For example, when the bandwidth of the PPDU is 640 MHz, effective bandwidths of the MRUs shown in FIG. 4c, FIG. 4f, and FIG. 4g are less than or equal to 480 MHz. Therefore, the MRUs shown in FIG. 4c, FIG. 4f, and FIG. 4g may also be reused for an MRU of a 480 MHz PPDU. This can effectively reduce MRU types of the PPDU, to reduce the signaling overheads for indicating the MRU. For example, the MRUs shown in FIG. 4c, FIG. 4f, and FIG. 4g may also be referred to as MRUs in a third MRU mode corresponding to 480 MHz.

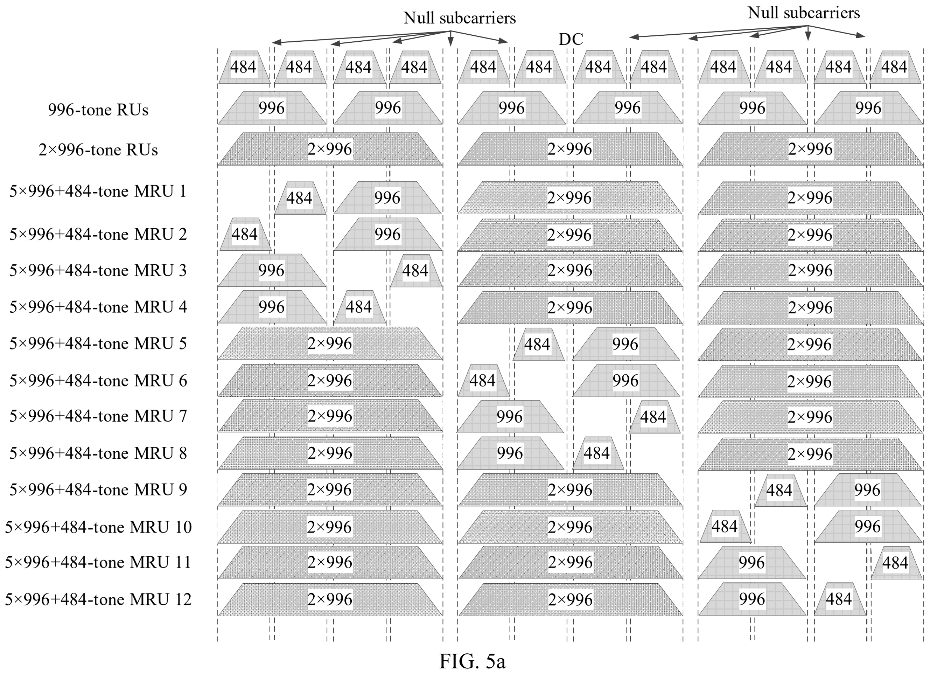

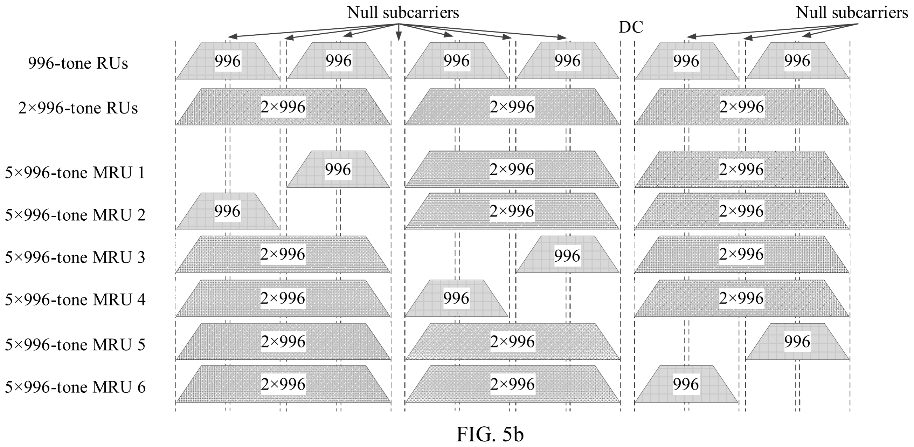

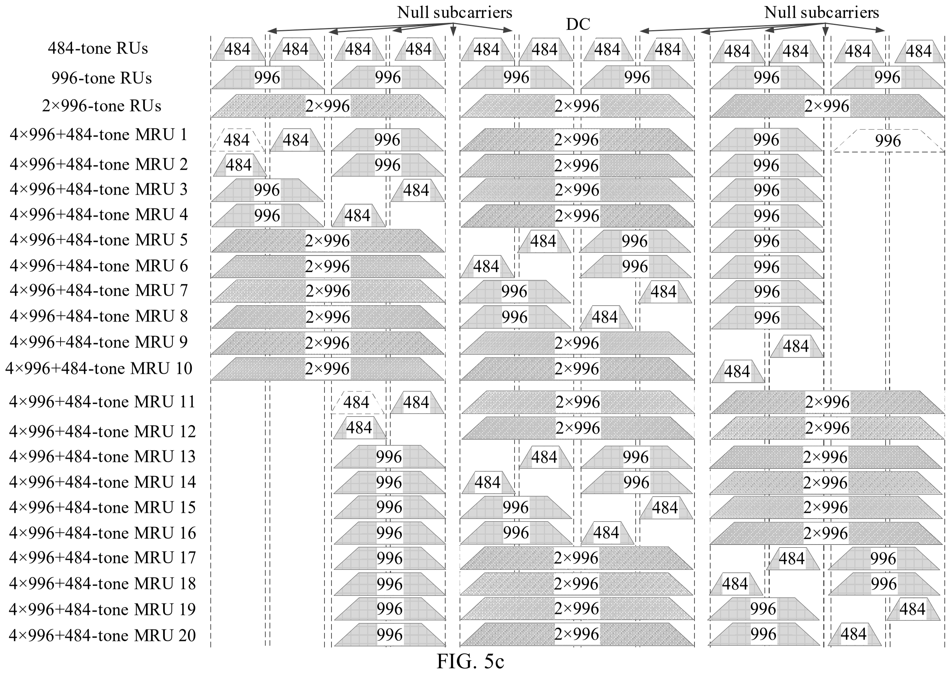

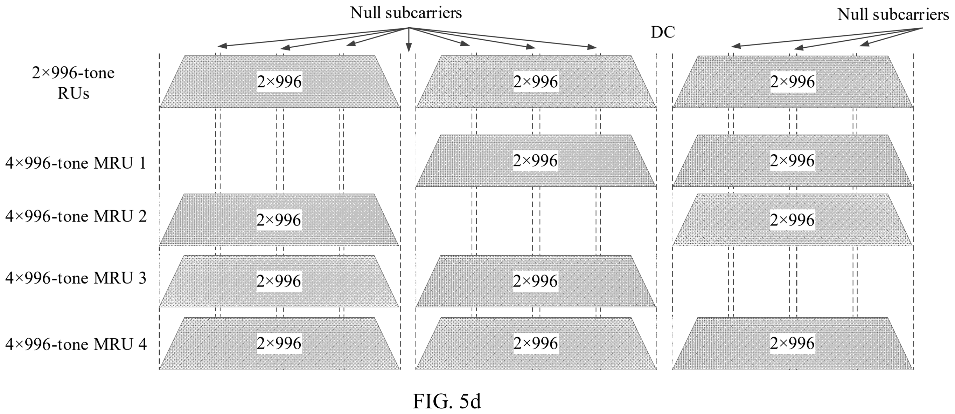

In another example, when the bandwidth of the PPDU is 480 MHz, an MRU of the 480 MHz PPDU includes an MRU with ($5 \times 996 + 484$) subcarriers shown in FIG. 5a, an MRU with ($5 \times 996$) subcarriers shown in FIG. 5b, an MRU with ($4 \times 996 + 484$) subcarriers shown in FIG. 5c, or an MRU with ($4 \times 996$) subcarriers shown in FIG. 5d. The MRUs shown in FIG. 5a to FIG. 5d may be referred to as MRUs in a fourth MRU mode corresponding to 480 MHz.

(2) Pilot rotation

Because duration occupied by an OFDM symbol of a 2xLTF sequence is greater than duration occupied by an OFDM symbol of a 1xLTF sequence, and phase noise is large, pilot rotation, for example, a P matrix ($P_{LTF}$ as shown below) and an R matrix ($R_{LTF}$ as shown below), is introduced for pilot correction. In other words, the first communication apparatus may generate the PPDU based on the LTF sequence, the matrix P, and the matrix R.

A corresponding spatial mapping (spatial mapping) matrix of pilot rotation during transmission of the LTF is as follows:

$$A_{LTF}^k = \begin{cases} R_{LTF}, & k \in K_{pilot} \text{ and 2xLTF uses a single} - \text{stream pilot} \\ P_{LTF}, & \text{other cases} \end{cases}$$

$K_{pilot}$ represents an index of a pilot subcarrier. $R_{LTF}$ is an $N_{LTF}^{SS} \times N_{LTF}^{SS}$ matrix. $N_{LTF}^{SS}$ represents a quantity of spatial streams corresponding to the LTF sequence.

For example, the following relationship may be satisfied between $R_{LTF}$ and $P_{LTF}$:

$$[R_{LTF}]_{m,n} = [P_{LTF}]_{m,1}, \quad 1 \leq m, n \leq N_{LTF}^{SS}$$

m represents an $m^{th}$ row of the matrix. n represents an $n^{th}$ column of the matrix.

For example, $P_{LTF}$ may be as follows:

$$P_{LTF} = \begin{cases} P_{4\times4}, & N_{LTF}^{SS} = 1,2,4 \\ P_{6\times6}, & N_{LTF}^{SS} = 6 \\ P_{8\times8}, & N1_{1-1LTF}^{SS} = 8 \end{cases}$$

For example, when the quantity of spatial streams is 3 or 4, the first communication apparatus may generate the PPDU by using the matrix $P_{4\times4}$. When the quantity of spatial streams is 5 or 6, the first communication apparatus may generate the PPDU by using the matrix $P_{6\times6}$. When the quantity of spatial streams is 7 or 8, the first communication apparatus may generate the PPDU by using the matrix $P_{8\times8}$. For example, the matrices $P_{4\times4}$, $P_{6\times6}$, and $P_{8\times8}$ are as follows:

$$P_{4\times4} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

$$P_{6\times6} = \begin{bmatrix} 1 & -1 & 1 & 1 & 1 & -1 \\ 1 & -w^1 & w^2 & w^3 & w^4 & -w^5 \\ 1 & -w^2 & w^4 & w^6 & w^8 & -w^{10} \\ 1 & -w^3 & w^6 & w^9 & w^{12} & -w^{15} \\ 1 & -w^4 & w^8 & w^{12} & w^{16} & -w^{20} \\ 1 & -w^5 & w^{10} & w^{15} & w^{20} & -w^{25} \end{bmatrix}, w = exp\left(-j2\pi/6\right)$$

$$P_{8\times8} = \begin{bmatrix} P_{4\times4} & P_{4\times4} \\ P_{4\times4} & P_{4\times4} \end{bmatrix}$$

It may be understood that the matrices $P_{4\times4}$, $P_{6\times6}$, and $P_{8\times8}$ shown above are merely examples. As the standard progresses, the foregoing matrices may also change. This is not limited in embodiments of this application. When the foregoing matrix changes, the LTF sequence may also be constructed based on a changed matrix, an MRU, and the like. The LTF sequence constructed in this case also falls within the protection scope of embodiments of this application.

In an example, when the bandwidth of the PPDU is 640 MHz, the LTF sequence may be any one of the sequences (3) to (6). For example, when the MRU mode of the 640 MHz PPDU is the first MRU mode, the LTF sequence may be the sequence (3) or sequence (4). For example, when the MRU mode of the 640 MHz PPDU is the second MRU mode, the LTF sequence may be the sequence (5) or sequence (1). For example, when an effective bandwidth of the 640 MHz PPDU is less than or equal to 480 MHz, the LTF sequence may be the sequence (6). To design the LTF sequence, different MRU designs are considered. This can better ensure PAPR performance and reduce a PAPR, to effectively reduce a requirement for a linear power amplifier.

In another example, when the bandwidth of the PPDU is 480 MHz, the LTF sequence may be the sequence (7) or sequence (8).

The MRUs shown in embodiments of this application are merely examples. During actual application, the PPDU may have more MRUs. This is not limited in embodiments of this application. In other words, when the bandwidth of the PPDU is 640 MHz or 480 MHz, both the first communication apparatus and the second communication apparatus can apply the LTF sequence provided in embodiments of this application.

In embodiments of this application, when a bandwidth of a PPDU is greater than 320 MHz, an LTF sequence that can be carried in an LTF is provided, so that the LTF sequence can be effectively applied to a large-bandwidth PPDU.

Based on the LTF sequence, the bandwidth of the PPDU, the MRU/RU, and pilot rotation in embodiments of this application, the method shown in FIG. 3 may be further understood as follows:

In an example, the first communication apparatus maps a sequence segment that is in the LTF sequence and that corresponds to a position of the RU/MRU to a subcarrier in the RU/MRU based on the bandwidth, a size of the RU/MRU, and the position of the RU/MRU. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8). The first communication apparatus sends the LTF sequence.

Correspondingly, the second communication apparatus may receive the LTF sequence carried by the LTF in the PPDU; and determine the LTF sequence corresponding to the RU/MRU based on the bandwidth, the size of the RU/MRU, and the position of the RU/MRU. The LTF sequence may be used to estimate a channel of the RU/MRU. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8).

In another example, the first communication apparatus maps a sequence segment that is in the LTF sequence and that corresponds to a position of a subcarrier in the RU/MRU included in the bandwidth to the subcarrier in the RU/MRU based on the bandwidth. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8). The first communication apparatus sends the LTF sequence.

Correspondingly, the second communication apparatus may receive the LTF sequence carried by the LTF in the PPDU; and determine the LTF sequence corresponding to the RU/MRU based on the bandwidth and the position of the subcarrier in the RU/MRU included in the bandwidth. The LTF sequence may be used to estimate a channel of the RU/MRU. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8).

For example, the second communication apparatus may estimate the channel of the RU/MRU based on the LTF sequence it receives and the LTF sequence it stores.

In another example, the first communication apparatus maps a sequence segment that is in the LTF sequence and that corresponds to a position of the RU/MRU to a subcarrier in the RU/MRU based on the bandwidth, a matrix (for example, the P matrix or the R matrix shown above) corresponding to pilot rotation, a size of the RU/MRU, and the position of the RU/MRU. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8). The first communication apparatus sends the LTF sequence.

Correspondingly, the second communication apparatus may receive the LTF sequence carried by the LTF in the PPDU; and determine the LTF sequence corresponding to the RU/MRU based on the bandwidth, the matrix (for example, the P matrix or the R matrix shown above) corresponding to pilot rotation, the size of the RU/MRU, and the position of the RU/MRU. The LTF sequence may be used to estimate a channel of the RU/MRU. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8).

In another example, the first communication apparatus maps a sequence segment that is in the LTF sequence and that corresponds to a position of a subcarrier in the RU/MRU included in the bandwidth to the subcarrier in the RU/MRU based on the bandwidth and a matrix corresponding to pilot rotation. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8). The first communication apparatus sends the LTF sequence.

Correspondingly, the second communication apparatus may receive the LTF sequence carried by the LTF in the PPDU; and determine the LTF sequence corresponding to the RU/MRU based on the bandwidth, the matrix corresponding to pilot rotation, and the position of the subcarrier in the RU/MRU included in the bandwidth. The LTF sequence may be used to estimate a channel of the RU/MRU. The RU/MRU is located in the bandwidth. The RU/MRU includes a plurality of consecutive subcarriers. When the bandwidth is greater than 320 MHz, the LTF sequence in the 2x mode is, for example, any one of the sequences (3) to (8).

The bandwidth shown above may be the bandwidth of the PPDU. The RU/MRU may be an RU/MRU of the PPDU.

For specific content of the LTF sequence, refer to the foregoing content. For a manner of constructing the LTF sequence, refer to the following content. Details are not described herein again.

The following describes the manner of constructing the LTF sequence provided in embodiments of this application.

Related descriptions of constructing the LTF sequence (or referred to as generating the LTF sequence) in embodiments of this application are merely an example. During specific implementation, each LTF sequence may be defined in a standard, or the like. In other words, steps in the following construction manner are merely an example. During specific implementation, both communication parties may not perform the following steps. For example, both communication parties may store an LTF sequence. It may be understood that the following construction manner is shown by using an example in which the bandwidth of the PPDU is 480 MHz or 640 MHz. However, embodiments of this application are also applicable to a manner of constructing the LTF sequence when the bandwidth of the PPDU is greater than 640 MHz. When the bandwidth of the PPDU is greater than 640 MHz or when the bandwidth of the PPDU is a bandwidth (for example, 540 MHz) greater than 320 MHz and other than 480 MHz and 640 MHz, an LTF sequence constructed based on the construction manner in embodiments of this application or the MRU shown above also falls within the protection scope of embodiments of this application.

To design the LTF, PAPRs corresponding to sequences of partial bandwidths used by all possible RUs and MRUs in the bandwidth need to be considered. The construction of the LTF sequence may be related to at least one of sizes and a quantity of MRUs, a quantity of spatial streams, and a puncturing position and size of the bandwidth of the PPDU. For a 640 MHz PPDU and 480 MHz PPDU with an ultra-large bandwidth that may appear in a next-generation WLAN, various new RUs and MRUs that may appear in the two PPDUs, RUs and MRUs that exist in 802.11be, and various pilot rotation manners are considered. The LTF sequence is constructed with an optimization objective of minimizing a maximum PAPR of an RU/MRU, to effectively reduce a requirement for a linear power amplifier. The LTF sequence in embodiments of this application can minimize a maximum value of PAPRs of sequences corresponding to all RUs or MRUs, or make a maximum value of PAPRs of sequences corresponding to all RUs or MRUs relatively small. For example, a sequence corresponding to the smallest value in maximum PAPRs of a plurality of sequences (which may also be referred to as candidate LTF sequences) is determined as the LTF sequence. The LTF sequence can better ensure PAPR performance of all RUs and MRUs, or can effectively ensure that a PAPR of each MRU in the bandwidth is as low as possible. Generally, various MRUs may exist in the bandwidth of the PPDU. Therefore, the determined LTF sequence can be compatible with more MRUs or RUs by ensuring that PAPR performance of an MRU with worst PAPR performance in the bandwidth is as good as possible. In addition to different RUs or MRUs, sequences corresponding to different unit subchannels are further considered in embodiments of this application. For example, a smaller bandwidth of a unit subchannel indicates a finer addition of a rotation factor of a sequence corresponding to the unit subchannel, so that the constructed LTF sequence has better PAPR performance.

The LTF sequence in embodiments of this application may be used for channel estimation of a next-generation large-bandwidth 640 MHz PPDU and 480 MHz PPDU.

For example, a procedure for constructing the LTF sequence may be as follows:

% Parameter initialization %

Set the bandwidth BW of the PPDU to 480 or 640 MHz

Set the bandwidth BW_{element} of the unit subchannel to 20 MHz or 40 MHz (which may alternatively be set to 80 MHz, 160 MHz, or the like)

Calculate a quantity of subchannels: BW/BW_{element}

Obtain a total of $2^{(BW/BW\_\{element\})}$ possible rotation factor sequences if a value corresponding to each unit subchannel in a frequency-domain rotation factor sequence has two possibilities: 1 or –1

% Calculation process for a 2xLTF sequence %

Start a loop

For each possible rotation factor sequence

For each RU/MRU

For a spatial stream corresponding to each type of pilot rotation

Calculate a PAPR of the 2xLTF sequence

Calculate a maximum PAPR of the rotation factor sequence for all RUs/MRUs and all types of pilot rotation

End the loop

Find the smallest value in the maximum PAPRs of all rotation factor sequences and the rotation factor sequence corresponding to the smallest value

The foregoing construction procedure is merely an example. The following describes the manner of constructing the LTF sequence with reference to a specific example.

The first MRU mode based on the 640 MHz PPDU may be understood as an MRU mode obtained by simply doubling MRUs in a 320 MHz PPDU in the 802.11be standard. For related descriptions of the first MRU mode, refer to the foregoing related descriptions of FIG. 4a to FIG. 4c. Details are not described herein again. The following separately provides descriptions by using an example in which the bandwidth of the unit subchannel is 20 MHz and an example in which the bandwidth of the unit subchannel is 40 MHz. The bandwidth of the unit subchannel in embodiments of this application is merely an example. During specific implementation, when the LTF sequence is constructed, the unit subchannel may alternatively have another bandwidth.

Embodiment 1: In the first MRU mode, the bandwidth of the unit subchannel is 40 MHz.

1A. When the bandwidth BW of the PPDU is 640 MHz and the bandwidth BW_{element} of the unit subchannel is 40 MHz, a quantity of sequences corresponding to the unit subchannel may be 640 MHz/40 MHz = 16, that is, BW/BW_{element} = 16. A value corresponding to each unit subchannel in a rotation factor sequence has two possibilities: 1 or -1. The rotation factor sequence is as follows: LTF_{40MHzrotation} = $\{a_1, ..., a_i, ..., a_{16}\}$, where $a_i = \pm 1$. In this case, a total of $2^{(BW/BW\_\{element\})}$ = 65536 possible rotation factor sequences are obtained. For example, $c_{2i-1} = c_{2i} = a_i$, where i = 1, 2, ..., 16. For related descriptions of $c_{2i-1} = c_{2i}$, refer to the description of the unit subchannel in step 301. Details are not described herein again. For ease of reference and brevity below, different representation manners (for example, 1A to 1D and 2A to 2D) are used in embodiments of this application to distinguish between different steps or different descriptions. However, differentiation between different steps or different descriptions in embodiments of this application should not be understood as a limitation on embodiments of this application.

1B. For any 2xLTF sequence, because one 2xLTF sequence may be divided into a plurality of subsequences during OFDMA transmission and preamble puncturing (preamble puncturing), each subsequence is transmitted on different RUs/MRUs. In this case, only a partial sequence on each RU/MRU is used for actual wireless transmission. Therefore, a PAPR may be calculated for subsequences occupied by different RUs/MRUs, so that the LTF sequence can be effectively determined. In the 640 MHz PPDU, in embodiments of this application, in addition to MRUs included in 640 MHz in the first MRU mode, RUs/MRUs defined in 802.11be are further considered, for example, including a 484+242-tone MRU, 996+484-tone MRU, 996+484+242-tone MRU, 2×996+484-tone MRU, 3×996-tone MRU, and 3×996+484-tone MRU, and RUs defined in 802.11be are further considered, for example, including a 996-tone RU, 2×996-tone RU, 3×996-tone RU, and 4×996-tone RU. Because a length of an OFDM symbol occupied by an LTF for carrying a 2xLTF sequence is greater than a length of an OFDM symbol occupied by an LTF for carrying a 1xLTF sequence, the LTF is easily affected by a non-ideal channel. Therefore, a pilot is needed for phase calibration. Different spatial stream matrices of a pilot subcarrier and a data subcarrier affect PAPR performance to some extent. Therefore, in embodiments of this application, for each candidate LTF sequence, pilot rotation manners corresponding to the foregoing matrices $P_{4\times4}$, $P_{6\times6}$, and $P_{8\times8}$ are further considered.

1C. For each candidate 2xLTF sequence, a plurality of MRU/RU patterns and pilot rotation manners corresponding to a plurality of spatial stream quantities are considered to separately calculate PAPRs.

The PAPR may satisfy the following formula:

$$\text{PAPR} = \frac{\max|IFFT(\text{LTF,N})|^2}{\overline{|IFFT(\text{LTF,N})|^2}}$$

The foregoing formula may also be expressed as PAPR = max(abs(ifft(LTF,N)).^2)/mean(abs(ifft(LTF,N)).^2). For example, IFFT(LTF,N) represents a calculation result of N-point inverse fast Fourier transform of the sequence. A value of N may be four times upsampling of a quantity of IFFT points needed by the sequence. abs() represents an absolute value of the sequence. x.^2 represents that each element of the sequence is squared. mean() represents an average value of the sequence. For example, a value of N may be $8 \times 1024 \times 4$, where 4 represents a sampling multiplier. To facilitate digital-to-analog conversion, the value of N may be multiplied by 4 (for illustrative purposes only). 1024 represents a quantity of subcarriers of an 80 MHz PPDU. Because the bandwidth of the PPDU in embodiments of this application is 640 MHz, the value of N needs to be multiplied by 8.

1D. For an $i^{th}$ 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{40MHzrotation} corresponding to the smallest value is obtained as ±{1, -1, -1, -1, -1, 1, -1, -1, -1, 1, 1, 1, 1, 1, - 1, 1}, as shown below:

$$\{-1, 1, 1, 1, 1, -1, 1, 1, 1, -1, -1, -1, -1, -1, 1, -1\};$$

or

$$\{1, -1, -1, -1, -1, 1, -1, -1, -1, 1, 1, 1, 1, 1, -1, 1\}.$$

For example, for {-1, 1, 1, 1, 1, -1, 1, 1, 1, -1, -1, -1, -1, -1, 1, -1}, sequences corresponding to unit subchannels may be periodically extended for 16 times.

{LTF_{80MHz_2x}(1:245)} is extended for the first time, the rotation factor is the 1st element -1 in the rotation factor sequence, and a sequence determined based on the sequence corresponding to the 1st unit subchannel in the LTF sequence and the rotation factor is -{LTF_{80MHz_2x}(1:245)}. {LTF_{80MHz_2x}(246:500)} is extended for the first time, the rotation factor is the 2nd element 1 in the rotation factor sequence, and a sequence determined based on the sequence corresponding to the 2nd unit subchannel in the LTF sequence and the rotation factor is {LTF_{80MHz_2x}(246:500)}. {LTF_{80MHz_2x}(502:756)} is extended for the first time, the rotation factor is the 3rd element 1 in the rotation factor sequence, and a sequence determined based on the sequence corresponding to the 3rd unit subchannel in the LTF sequence and the rotation factor is {LTF_{80MHz_2x}(502:756)}. {LTF_{80MHz_2x}(757:1001)} is extended for the first time, the rotation factor is the 4th element 1 in the rotation factor sequence, and a sequence determined based on the sequence corresponding to the 4th unit subchannel in the LTF sequence and the rotation factor is {LTF_{80MHz_2x}(757:1001)}. By analogy, {LTF_{80MHz_2x}(1:245)} is extended for the second time, and the rotation factor is the 5th element in the rotation factor sequence; {LTF$_{80MHz\_2x}$ (246:500)} is extended for the second time, and the rotation factor is the 6th element in the rotation factor sequence; {LTF$_{80MHz\_2x}$(502:756)} is extended for the second time, and the rotation factor is the 7th element in the rotation factor sequence; {LTF$_{80MHz\_2x}$(757:1001)} is extended for the second time, and the rotation factor is the 8th element in the rotation factor sequence; {LTF$_{80MHz\_2x}$(1:245)} is extended for the third time, the rotation factor is the 9th element in the rotation factor sequence; {LTF$_{80MHz\_2x}$(246:500)} is extended for the third time, and the rotation factor is the 10th element in the rotation factor sequence; {LTF$_{80MHz\_2x}$(502:756)} is extended for the third time, and the rotation factor is the 11th element in the rotation factor sequence; {LTF$_{80MHz\_2x}$(757:1001)} is extended for the third time, and the rotation factor is the 12th element in the rotation factor sequence; {LTF$_{80MHz\_2x}$(1:245)} is extended for the fourth time, and the rotation factor is the 13th element in the rotation factor sequence; {LTF$_{80MHz\_2x}$(246:500)} is extended for the fourth time, and the rotation factor is the 14th element in the rotation factor sequence; {LTF$_{80MHz\_2x}$(502:756)} is extended for the fourth time, and the rotation factor is the 15th element in the rotation factor sequence; and {LTF$_{80MHz\_2x}$(757:1001)} is extended for the fourth time, and the rotation factor is the 16th element in the rotation factor sequence. The LTF sequence shown in the foregoing sequence (3b) may be obtained in the foregoing manner.

The two rotation factor sequences are opposite to each other. Maximum PAPRs of the subchannels of the 2xLTF sequence corresponding to the rotation factor sequence are as follows:

80 MHz subchannel: 9.6367 dB.
160 MHz subchannel: 10.4040 dB.
320 MHz subchannel: 10.8630 dB.
640 MHz subchannel: 10.8988 dB.

For example, an RU or MRU whose bandwidth is less than or equal to 80 MHz, such as a 996-tone RU or a 484+242-tone MRU, is considered for the 80 MHz subchannel. An RU or MRU whose bandwidth is greater than 80 MHz and less than or equal to 160 MHz, such as a 2×996-tone RU, a 996+484-tone MRU, or a 996+484+242-tone MRU, is considered for the 160 MHz subchannel. An RU or MRU whose bandwidth is greater than 160 MHz and less than or equal to 320 MHz, such as a 4×996-tone RU, a 3×996+484-tone MRU, a 3×996-tone MRU, or a 2×996+484-tone MRU, is considered for the 320 MHz subchannel. An RU/MRU whose bandwidth is greater than 320 MHz and less than or equal to 640 MHz is considered for the 640 MHz subchannel, including an RU or MRU in the first MRU mode in embodiments of this application.

For MRUs/RUs included in 80 MHz subchannels, 160 MHz subchannels, 320 MHz subchannels, 640 MHz subchannels, and 480 MHz subchannels shown below, details are not described again. For example, an RU/MRU whose bandwidth is greater than 320 MHz and less than or equal to 480 MHz is considered for the 480 MHz subchannel shown below, and details are not described below again.

For specific content of the LTF sequence that is based on the first MRU mode and a rotation factor for a 40 MHz subchannel, refer to the foregoing sequence (3).

Embodiment 2: In the first MRU mode, the bandwidth of the unit subchannel is 20 MHz.

2A. When the bandwidth BW of the PPDU is 640 MHz and the bandwidth BW_{element} of the unit subchannel is 20 MHz, a quantity of sequences corresponding to the unit subchannel is BW/BW_{element} = 32. A value corresponding to each unit subchannel in a rotation factor sequence has two possibilities: 1 or -1: LTF_{20MHzrotation} = {$a_1$, ..., $a_i$, ..., $a_{32}$}, where $a_i$ = +1. For example, $c_i = a_i$, where i = 1, 2, ..., 32. In this case, a total of $2^{(BW/BW\_\{element\})} = 4295000000$ possible rotation factor sequences are obtained. The quantity is approximately 4.29 billion, resulting in extremely high computational complexity. Further, considering that there may be various MRUs/RUs for each sequence and various pilot rotation manners for each MRU/RU, actual computational complexity is far higher than a computer capability. Based on local symmetry shown in embodiments of this application, the complexity can be effectively reduced, to select a small quantity of candidate LTF sequences from candidate sequences based on the local symmetry.

Based on local symmetry, the rotation factor sequence in embodiments of this application meets at least one of the following:

1. In the rotation factor sequence, values of a first group of elements are the same as values of a second group of elements. Positions of the second group of elements are symmetrical to positions of the first group of elements with a central position of the rotation factor sequence as a symmetry axis. The first group of elements include a $(2 \times i - 1)$th element and a $(2 \times i)$th element. i is greater than 0 and less than or equal to 1/2 of the length of the rotation factor sequence (that is, less than or equal to BW/($2 \times$ BW_{element})). The local symmetry shown herein may be positive local symmetry. The positive local symmetry means that values of any $(2 \times i - 1)$th element and $(2 \times i)$th element in the rotation factor sequence are the same as values of two elements whose positions are symmetrical to those of these two elements in the sequence. For example, if BW = 640 MHz and BW_{element} = 20 MHz, i is less than or equal to 16. For example, if i = 1, the first group of elements are the 1st element and the 2nd element in the rotation factor sequence, and the second group of elements whose positions are symmetrical to those of the first group of elements may be the last element and the second-to-last element in the rotation factor sequence, namely, the 32nd element and the 31st element. For another example, if i = 2, the first group of elements are the 3rd element and the 4th element in the rotation factor sequence, and the second group of elements in the rotation factor sequence are the 30th element and the 29th element. The rest may be deduced by analogy and are not enumerated herein.

2. In the rotation factor sequence, values of a third group of elements are opposite to values of a fourth group of elements. Positions of the third group of elements are symmetrical to positions of the fourth group of elements with the central position of the rotation factor sequence as the symmetry axis. The third group of elements include a $(2 \times j - 1)^{th}$ element and a $(2 \times j)^{th}$ element. j is less than or equal to 1/2 of the length of the rotation factor sequence. i is not equal to j. The local symmetry shown herein may be negative local symmetry. The negative local symmetry means that values of any $(2 \times j - 1)^{th}$ element and $(2 \times j)^{th}$ element in the rotation factor sequence are opposite to values of two elements whose positions are symmetrical to those of these two elements in the sequence. i is not equal to j. For example, if BW = 640 MHz and BW_{element} = 20 MHz, j is less than or equal to 16. If i = 1, j is not equal to 1. If j = 3, the first group of elements may be the 5th element and the 6th element in the rotation factor sequence, and the second group of elements are the 28th element and the 27th element in the rotation factor sequence. A value of the 5th element and a value of the 28th element are opposite numbers. A value of the 6th element and a value of the 27th element are opposite numbers. The rest may be deduced by analogy and are not enumerated herein.

For example, based on the foregoing local symmetry, all possible values of two adjacent elements in any group and two elements at symmetric positions in the rotation factor sequence are shown in Table 1:

Table 1

| No. | $(2 \times i - 1)^{th}$ element | $(2 \times i)^{th}$ element | Symmetric position of the $(2 \times i)^{th}$ element | Symmetric position of the $(2 \times i - 1)^{th}$ element |
|---|---|---|---|---|
| 1 | 1 | 1 | 1 | 1 |
| 2 | 1 | 1 | -1 | -1 |
| 3 | -1 | -1 | -1 | -1 |
| 4 | -1 | -1 | 1 | 1 |
| 5 | 1 | -1 | -1 | 1 |
| 6 | 1 | -1 | 1 | -1 |
| 7 | -1 | 1 | 1 | -1 |
| 8 | -1 | 1 | -1 | 1 |

A bandwidth corresponding to each sequence in Table 1 is $20 \times 4 = 80$ MHz. The bandwidth has a total of eight groups of possible values. Therefore, there are $8^{(640/80)}$ = 16777216 possible rotation factor sequences for the 640 MHz PPDU. The quantity is approximately 16.8 million, which is greatly reduced compared with the original quantity 4.29 billion. After the LTF sequence is negated, a PAPR corresponding to the LTF sequence remains unchanged. Therefore, a quantity of candidate LTF sequences is further halved.

The local symmetry shown in embodiments of this application is not only applicable to Embodiment 2, but also applicable to other embodiments, such as Embodiment 1 and Embodiment 3 to Embodiment 8.

2B. For related descriptions of step 2B, refer to step 1B. Details are not described herein again.

2C. For related descriptions of step 2C, refer to step 1C. Details are not described herein again.

2D. For an $i^{th}$ 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{20MHzrotation} corresponding to the smallest value is obtained as $\pm$ {1, 1, 1, 1, -1, -1, 1, 1, 1, -1, -1, 1, -1, 1, -1, 1, -1, 1, -1, 1, 1, -1, -1, 1, -1, -1, 1, 1, 1, 1, 1, 1}, as shown below:

{1, 1, 1, 1, -1, -1, 1, 1, 1, -1, -1, 1, -1, 1, -1, 1, -1, 1, -1, 1, 1, -1, -1, 1, -1, -1, 1, 1, 1, 1, 1, 1};

or {-1, -1, -1, -1, 1, 1, -1, -1, -1, 1, 1, -1, 1, -1, 1, -1, 1, -1, 1, -1, -1, 1, 1, -1, 1, 1, -1, -1, -1, -1, -1, -1}.

The two rotation factor sequences are opposite to each other. Maximum PAPRs of the subchannels of the 640 MHz PPDU corresponding to the rotation factor sequence are as follows:

> 80 MHz subchannel: 9.6367 dB.
> 160 MHz subchannel: 10.4040 dB.
> 320 MHz subchannel: 10.6326 dB.
> 640 MHz subchannel: 10.8305 dB.

For specific content of the LTF sequence that is based on the first MRU mode and a rotation factor for a 20 MHz subchannel, refer to the foregoing sequence (4).

The second MRU mode based on the 640 MHz PPDU is more detailed MRUs constructed with 484-tone puncturing reserved. The following separately provides descriptions by using an example in which the bandwidth of the unit subchannel is 40 MHz and an example in which the bandwidth of the unit subchannel is 20 MHz. For related descriptions of the second MRU mode, refer to the foregoing related descriptions of FIG. 4d to FIG. 4g. Details are not described herein again.

Embodiment 3: In the second MRU mode, the bandwidth of the unit subchannel is 40 MHz.

3A. For specific descriptions of step 3A, refer to step 1A. Details are not described herein again.

3B. In the 640 MHz PPDU, in addition to MRUs included in 640 MHz in the second MRU mode, RUs/MRUs defined in 802.11be are further considered, for example, including a 484+242-tone MRU, 996+484-tone MRU, 996+484+242-tone MRU, $2\times996+484$-tone MRU, $3\times996$-tone MRU, and $3\times996+484$-tone MRU, and RUs defined in 802.11be are further considered, for example, including a 996-tone RU, $2\times996$-tone RU, $3\times996$-tone RU, and $4\times996$-tone RU.

For other descriptions of step 3B, refer to step 1B. Details are not described herein again.

3C. For related descriptions of step 3C, refer to step 1C. Details are not described herein again.

3D. For an $i^{th}$ 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{40MHzrotation} corresponding to the smallest value is obtained as $\pm$\{1, 1, -1, -1, -1, -1, -1, 1, 1, -1, 1, 1, 1, 1, - 1, -1\}, as shown below:

$$\{1,\ 1,\ -1,\ -1,\ -1,\ -1,\ -1,\ 1,\ 1,\ -1,\ 1,\ 1,\ 1,\ 1,\ -1,\ -1\};$$

or

$$\{-1,\ -1,\ 1,\ 1,\ 1,\ 1,\ 1,\ -1,\ -1,\ 1,\ -1,\ -1,\ -1,\ -1,\ 1,\ 1\}.$$

The two rotation factor sequences are opposite to each other. Maximum PAPRs of the subchannels of the 2xLTF sequence corresponding to the rotation factor sequence are as follows:

> 80 MHz subchannel: 9.6367 dB.
> 160 MHz subchannel: 10.9316 dB.
> 320 MHz subchannel: 10.7971 dB.
> 640 MHz subchannel: 11.0946 dB.

For specific content of the LTF sequence that is based on the second MRU mode and a rotation factor for a 40 MHz subchannel, refer to the foregoing sequence (5).

Embodiment 4: In the second MRU mode, the bandwidth of the unit subchannel is 20 MHz.

4A. For related descriptions of step 4A, refer to step 2A. Details are not described herein again.

For related descriptions of local symmetry in step 4A, refer to related descriptions in 2A or Table 1. Details are not described herein again.

4B. For related descriptions of step 4B, refer to step 3B. Details are not described herein again.

4C. For related descriptions of step 4C, refer to step 3C or step 1C. Details are not described herein again.

4D. For an $i^{th}$ 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{20MHzrotation} corresponding to the smallest value is obtained as $\pm$\{1, 1, 1, 1, -1, -1, -1, -1, -1, -1, -1, -1, -1, - 1, 1, 1, 1, 1, -1, -1, 1, 1, 1, 1, 1, 1, 1, 1, -1, -1, -1, -1\}, as shown below:

{1, 1, 1, 1, -1, -1, -1, -1, -1, -1, -1, -1, -1, -1, 1, 1, 1, 1, -1, -1, 1, 1, 1, 1, 1, 1, 1, 1, -1, -1, -1, -1};

or {-1, -1, -1, -1, 1, 1, 1, 1, 1, 1, 1, 1, 1, -1, -1, -1, -1, 1, 1, -1, -1, -1, -1, -1, -1, -1, -1, 1, 1, 1, 1}.

The two rotation factor sequences are opposite to each other. Maximum PAPRs of the subchannels of the 640 MHz PPDU corresponding to the rotation factor sequence are as follows:

    80 MHz subchannel: 9.6367 dB.
    160 MHz subchannel: 10.9316 dB.
    320 MHz subchannel: 10.7971 dB.
    640 MHz subchannel: 11.0946 dB.

For specific content of the LTF sequence that is based on the second MRU mode and a rotation factor for a 20 MHz subchannel, refer to the foregoing sequence (1).

An effective bandwidth of the 640 MHz PPDU is less than or equal to 480 MHz. For example, an outermost 160 MHz subchannel in an MRU of the 640 MHz PPDU is punctured. Therefore, the foregoing sequence (6) may also be applicable to a PPDU when an effective bandwidth of a 640 MHz PPDU is less than or equal to 480 MHz. For related descriptions of MRUs when the effective bandwidth of the 640 MHz PPDU is less than or equal to 480 MHz, refer to the following related descriptions of {6×996-tone MRU 1 and 6×996-tone MRU 4} in FIG. 4c, FIG. 4f, FIG. 4g, and FIG. 4b. Details are not described herein again. Embodiment 5 and Embodiment 6 shown below may be understood as a manner of constructing an LTF sequence when an effective bandwidth of a 640 MHz PPDU is less than or equal to 480 MHz. Because the effective bandwidth is less than or equal to 480 MHz, Embodiment 5 and Embodiment 6 shown below are not only applicable to a manner of constructing an LTF of a 640 MHz PPDU, but also applicable to a manner of constructing an LTF sequence of a 480 MHz PPDU. Embodiment 5 and Embodiment 6 shown below may be a manner of constructing an LTF sequence of a 480 MHz PPDU in the third MRU mode. Embodiment 1 to Embodiment 4 above may be a manner of constructing an LTF sequence when an effective bandwidth of a 640 MHz PPDU is greater than or equal to 480 MHz.

The third MRU mode (an MRU pattern 3) reuses {6×996-tone MRU 1 and 6×996-tone MRU 4 (as shown in FIG. 4b), 5×996+484-tone MRU (as shown in FIG. 4f), 5×996-tone MRU (as shown in FIG. 4c), and 4×996+484-tone MRU (as shown in FIG. 4g)} in the 640 MHz PPDU. In the 640 MHz PPDU, for the 5×996+484-tone MRU (as shown in FIG. 4f), 5×996-tone MRU (as shown in FIG. 4c), 4×996+484-tone MRU (as shown in FIG. 4g), 6×996-tone MRU 1 (as shown in FIG. 4b), and 6×996-tone MRU 4 (as shown in FIG. 4b) in the MRU pattern 3, an actual effective transmission bandwidth is less than or equal to 480 MHz because an outermost 160 MHz channel is punctured. Therefore, these MRUs can be used to transmit a 480 MHz PPDU. Because the effective bandwidth is greater than the maximum PPDU bandwidth 320 MHz in the 802.11be standard, compatibility with RUs/MRUs in the 802.11be is also needed.

During 2xLTF sequence design for a 480 MHz PPDU based on the MRU pattern 3, in embodiments of this application, 2xLTF sequences are separately constructed based on a 20 MHz unit subchannel and a 40 MHz unit subchannel. Because the MRU pattern 3 reuses some MRUs in 640 MHz, an expression manner of the LTF sequence constructed in embodiments of this application may be the same as that of the foregoing sequence (1).

Embodiment 5: In the third MRU mode, the bandwidth of the unit subchannel is 40 MHz.

5A. The MRU pattern 3 reuses some MRUs in the 640 MHz PPDU. Therefore, the bandwidth BW of the PPDU is 640 MHz. When the bandwidth BW_{element} of the unit subchannel is 40 MHz, a quantity of sequences corresponding to the unit subchannel is BW/BW_{element} = 16. A value corresponding to each unit subchannel in a rotation factor sequence has two possibilities: 1 or -1: LTF_{40MHzrotation} = {$a_1$, ..., $a_i$, ..., $a_{16}$}, where $a_i$ = ±1. In this case, a total of $2^{(BW/BW\_\{element\})}$ = 65536 possible rotation factor sequences are obtained.

For related descriptions of step 5A, refer to step 1A or the like. Details are not described herein again.

5B. In the 640 MHz PPDU, in addition to MRUs included in 640 MHz in the third MRU mode, RUs/MRUs defined in 802.11be are further considered, for example, including a 484+242-tone MRU, 996+484-tone MRU, 996+484+242-tone MRU, 2×996+484-tone MRU, 3×996-tone MRU, and 3×996+484-tone MRU, and RUs defined in 802.11be are further considered, for example, including a 996-tone RU, 2×996-tone RU, 3×996-tone RU, and 4×996-tone RU.

For related descriptions of pilot rotation, the P matrix, the R matrix, and the like, refer to step 1B or the like. Details are not described herein again.

5C. For related descriptions of step 5C, refer to step 1C or the like. Details are not described herein again.

5D. For an ith 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{40MHzrotation} corresponding to the smallest value is obtained as ±{-1, -1, 1, 1, 1, 1, -1, 1, -1, 1, 1, 1, 1, -1, - 1}, as shown below:

$$\{1, 1, -1, -1, -1, -1, 1, -1, 1, -1, -1, -1, -1, -1, 1, 1\};$$

or

$$\{-1, -1, 1, 1, 1, 1, -1, 1, -1, 1, 1, 1, 1, 1, -1, -1\}.$$

The two rotation factor sequences are opposite to each other. Maximum PAPRs of the subchannels of the 2xLTF sequence corresponding to the rotation factor sequence are as follows:

  80 MHz subchannel: 9.6367 dB.
  160 MHz subchannel: 10.9316 dB.
  320 MHz subchannel: 10.2876 dB.
  640 MHz subchannel: 10.9297 dB.

For specific content of the LTF sequence that is based on the third MRU mode and a rotation factor for a 40 MHz subchannel, refer to the foregoing sequence (6).

Embodiment 6: In the third MRU mode, the bandwidth of the unit subchannel is 20 MHz.

6A. The MRU pattern 3 reuses some MRUs in the 640 MHz PPDU. Therefore, the bandwidth BW of the PPDU is 640 MHz. When the bandwidth BW_{element} of the unit subchannel is 20 MHz, a quantity of unit subchannels is BW/BW_{element} = 32.

For related descriptions of step 6A, refer to step 2A, for example, refer to related descriptions of local symmetry, positive local symmetry, negative local symmetry, and Table 1 in step 2A. Details are not described herein again.

6B. For related descriptions of step 6B, refer to step 5B, step 1B, or the like. Details are not described herein again.

6C. For related descriptions of step 6C, refer to step 1C or the like. Details are not described herein again.

6D. For an $i^{th}$ 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{20MHzrotation} corresponding to the smallest value is obtained as ±{1, 1, 1, 1, -1, -1, -1, -1, -1, -1, -1, -1, 1, 1, -1, -1, 1, 1, -1, -1, -1, -1, -1, -1, -1, - 1, -1, -1, 1, 1, 1, 1}, as shown below:

{1, 1, 1, 1, -1, -1, -1, -1, -1, -1, -1, -1, 1, 1, -1, -1, 1, 1, -1, -1, -1, -1, -1, -1, -1, - 1, -1, -1, 1, 1, 1, 1};

or {-1, -1, -1, -1, 1, 1, 1, 1, 1, 1, 1, 1, -1, -1, 1, 1, -1, -1, 1, 1, 1, 1, 1, 1, 1, 1, 1, 1, -1, - 1, -1, -1}.

The two rotation factor sequences are opposite to each other. Maximum PAPRs of the subchannels of the 640 MHz PPDU corresponding to the rotation factor sequence are as follows:

  80 MHz subchannel: 9.6367 dB.
  160 MHz subchannel: 10.9316 dB.
  320 MHz subchannel: 10.2876 dB.
  640 MHz subchannel: 10.9297 dB.

For specific content of the LTF sequence that is based on the third MRU mode and a rotation factor for a 20 MHz subchannel, refer to the foregoing sequence (6).

For MRUs based on a 480 MHz PPDU, refer to related descriptions of FIG. 5a to FIG. 5d. Details are not described herein again. In Embodiment 7 and Embodiment 8 shown below, construction is based on an MRU of a 480 MHz PPDU, or based on the fourth MRU mode of a 480 MHz PPDU. The fourth MRU mode is as follows: {5×996+484-tone MRU (as shown in FIG. 5a), 5×996-tone MRU (as shown in FIG. 5b), 4×996+484-tone MRU (as shown in FIG. 5c), and 4×996-tone MRU (as shown in FIG. 5d)}. Construction manners shown in Embodiment 7 and Embodiment 8 are applicable to a 480 MHz PPDU.

Embodiment 7: In the fourth MRU mode, the bandwidth of the unit subchannel is 40 MHz.

7A. When the bandwidth BW of the PPDU is 480 MHz and the bandwidth BW_{element} of the unit subchannel is 40 MHz, a quantity of unit subchannels is BW/BW_{element}=12. A value corresponding to each unit subchannel in a frequency-domain rotation factor sequence has two possibilities: 1 or -1: LTF_{40MHzrotation} = $\{a_1, ..., a_i, ..., a_{12}\}$, where $a_i = \pm 1$. In this case, a total of $2^{(BW/BW\_\{element\})} = 4096$ possible rotation factor sequences are obtained. For example, $c_{2i-1} = c_{2i} = a_i$, where i = 1, 2, ..., 12.

For other descriptions of step 7A, refer to step 1A or the like. Details are not described herein again.

7B. In the 480 MHz PPDU, in embodiments of this application, in addition to an MRU pattern 4 based on the 480 MHz PPDU, RUs/MRUs defined in 802.11be are further considered, for example, including a 484+242-tone MRU, 996+484-tone MRU, 996+484+242-tone MRU, 2×996+484-tone MRU, 3×996-tone MRU, and 3×996+484-tone MRU, and RUs defined in 802.11be are further considered, for example, including a 996-tone RU, 2×996-tone RU, 3×996-tone RU, and 4×996-tone RU.

For other descriptions of step 7B, refer to step 6B, step 1B, or the like. Details are not described herein again.

7C. For related descriptions of step 7C, refer to step 6C, step 1C, or the like. Details are not described herein again.

7D. For an $i^{th}$ 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{40MHzrotation} corresponding to the smallest value is obtained as $\pm\{1, -1, 1, 1, -1, -1, -1, -1, 1, 1, 1, -1\}$, as shown below:

$$\{1, -1, 1, 1, -1, -1, -1, -1, 1, 1, 1, -1\};$$

or

$$\{-1, 1, -1, -1, 1, 1, 1, 1, -1, -1, -1, 1\}.$$

The two rotation factor sequences are opposite to each other. Maximum PAPRs of the subchannels of the 2xLTF sequence corresponding to the rotation factor sequence are as follows:

80 MHz subchannel: 9.6367 dB.
160 MHz subchannel: 10.3499 dB.
320 MHz subchannel: 10.2876 dB.
480 MHz subchannel: 10.8107 dB.

For specific content of the LTF sequence that is based on the third MRU mode and a rotation factor for a 40 MHz subchannel, refer to the foregoing sequence (7).

Embodiment 8: In the fourth MRU mode, the bandwidth of the unit subchannel is 20 MHz.

8A. When the bandwidth BW of the PPDU is 480 MHz and the bandwidth BW_{element} of the unit subchannel is 20 MHz, a quantity of sequences corresponding to the unit subchannel is BW/BW_{element} = 24. A value corresponding to each unit subchannel in a rotation factor sequence has two possibilities: 1 or -1: LTF_{20MHzrotation} = $\{a_1, ..., a_i, ..., a_{24}\}$, where $a_i = \pm 1$. In this case, a total of $2^{(BW/BW\_\{element\})} = 16777216$ possible rotation factor sequences are obtained. The quantity is approximately 16.78 million. For example, $c_i = a_i$, where i = 1, 2, ..., 24.

8B. For related descriptions of step 8B, refer to step 7B. Details are not described herein again.

8C. For related descriptions of step 8C, refer to step 7C and the like. Details are not described herein again.

8D. For an $i^{th}$ 2xLTF sequence, PAPRs for all RU/MRU patterns and pilot rotation manners corresponding to all the foregoing spatial mapping matrices are calculated, and a maximum value PAPR_{max,i} is selected. In all maximum values PAPR_{max,i}, the smallest value {PAPR_{max,i}}_{min} is calculated. A rotation factor sequence LTF_{20MHzrotation} corresponding to the smallest value is obtained as $\pm\{-1, -1, 1, 1, 1, 1, 1, 1, 1, 1, 1, 1, 1, -1, -1, -1, 1, 1, -1, -1, -1, 1, 1, -1\}$, as shown below:

$$\{-1, -1, 1, 1, 1, 1, 1, 1, 1, 1, 1, 1, 1, -1, -1, -1, 1, 1, -1, -1, -1, 1, 1, -1\};$$

or

$$\{1, 1, -1, -1, -1, -1, -1, -1, -1, -1, -1, -1, -1, 1, 1, 1, -1, -1, 1, 1, 1, -1, -1, 1\}.$$

The two rotation factor sequences are opposite to each other. Maximum PAPRs of the subchannels of the 2xLTF sequence corresponding to the rotation factor sequence are as follows:

> 80 MHz subchannel: 9.6367 dB.
> 160 MHz subchannel: 10.4040 dB.
> 320 MHz subchannel: 10.4665 dB.
> 480 MHz subchannel: 10.5380 dB.

For specific content of the LTF sequence that is based on the fourth MRU mode and a rotation factor for a 20 MHz subchannel, refer to the foregoing sequence (8).

The foregoing manner of reducing the complexity through local symmetry to select a small quantity of candidate LTF sequences from the candidate sequences is merely an example. For example, the following manner may alternatively be used to reduce the complexity.

For example, a time-domain signal of an even-symmetric frequency-domain sequence includes only a real part. The real part signal is the same as a real part of a time-domain signal corresponding to a half-sequence (for example, a partial sequence in the frequency-domain sequence) of a frequency-domain signal. A time domain signal of an odd-symmetric frequency-domain sequence includes only an imaginary part. The imaginary part signal is the same as an imaginary part of a time-domain signal corresponding to a half-sequence of the frequency-domain sequence. Therefore, when the odd-symmetric sequence and the even-symmetric sequence are superposed together, a time-domain signal corresponding to a combined sequence approximates a time domain signal corresponding to two half-sequences, and a PAPR is low.

Therefore, when the rotation factor sequence also meets the foregoing relationship of the frequency-domain sequence, a PAPR may also be low. For example,

$$[c_{4i+1}, c_{4i+2}, c_{4i+3}, c_{4i+4}] = \pm[-c_{N+1-(4i+1)}, c_{N+1-(4i+2)}, -c_{N+1-(4i+3)}, c_{N+1-(4i+4)}].$$

N represents the length of the rotation factor sequence. i is an integer greater than or equal to 0 and less than (N/4 - 1).

In the foregoing manner, for example, sequences based on a rotation factor for a 20 MHz subchannel in the first MRU mode, the second MRU mode, and the third MRU mode and corresponding PAPRs are as follows:

In the first MRU mode, when the bandwidth of the unit subchannel is 20 MHz, the rotation factor sequence may be $\pm$\{1, 1, 1, 1, -1, -1, 1, 1, 1, -1, -1, -1, -1, 1, -1, -1, 1, -1, -1, - 1, -1, 1, -1, -1, -1, 1, 1, -1, 1, -1, 1, -1\}.

Maximum PAPRs of the subchannels of the 2xLTF sequence corresponding to the rotation factor sequence are as follows:

> 80 MHz subchannel: 9.6367 dB.
> 160 MHz subchannel: 10.6559 dB.
> 320 MHz subchannel: 10.9196 dB.
> 640 MHz subchannel: 10.9602 dB.

In the second MRU mode, when the bandwidth of the unit subchannel is 20 MHz, the rotation factor sequence may be $\pm$\{-1, 1, -1, 1, 1, 1, 1, -1, -1, 1, -1, -1, -1, 1, 1, 1, 1, -1, 1, 1, - 1, 1, 1, 1, 1, 1, -1, 1, -1, -1, -1, -1\}.

Maximum PAPRs of the subchannels of the 2xLTF sequence corresponding to the rotation factor sequence are as follows:

> 80 MHz subchannel: 10.5309 dB.
> 160 MHz subchannel: 11.0047 dB.
> 320 MHz subchannel: 10.4322 dB.
> 640 MHz subchannel: 11.1040 dB.

In the third MRU mode, when the bandwidth of the unit subchannel is 20 MHz, the rotation factor sequence may be $\pm$\{1, -1, 1, -1, -1, -1, -1, 1, 1, -1, 1, 1, 1, -1, -1, -1, -1, 1, -1, - 1, 1, -1, -1, -1, -1, -1, 1, -1, 1, 1, 1, 1\}.

Maximum PAPRs of the subchannels of the 2xLTF sequence corresponding to the rotation factor sequence are as follows:

> 80 MHz subchannel: 10.5309 dB.
> 160 MHz subchannel: 11.0047 dB.
> 320 MHz subchannel: 10.4322 dB.

640 MHz subchannel: 10.9325 dB.

Specific content of the LTF sequence corresponding to the foregoing rotation factor sequence is not shown in embodiments of this application. The specific content of the LTF sequence may be expanded through a method in Embodiment 1 to Embodiment 8. Details are not described herein again.

It may be understood that the foregoing manner of constructing the LTF sequence is shown by using an example in which the bandwidth of the PPDU is 480 MHz or 640 MHz. During specific implementation, the bandwidth of the PPDU may alternatively be larger. An LTF sequence constructed when the bandwidth of the PPDU is greater than 640 MHz may also be determined in the foregoing construction manner, or another LTF sequence that is not shown when the bandwidth of the PPDU is 480 MHz or 640 MHz may also be determined in the foregoing construction manner. Therefore, all LTF sequences obtained in the foregoing construction manner fall within the protection scope of embodiments of this application.

The following describes communication apparatuses provided in embodiments of this application.

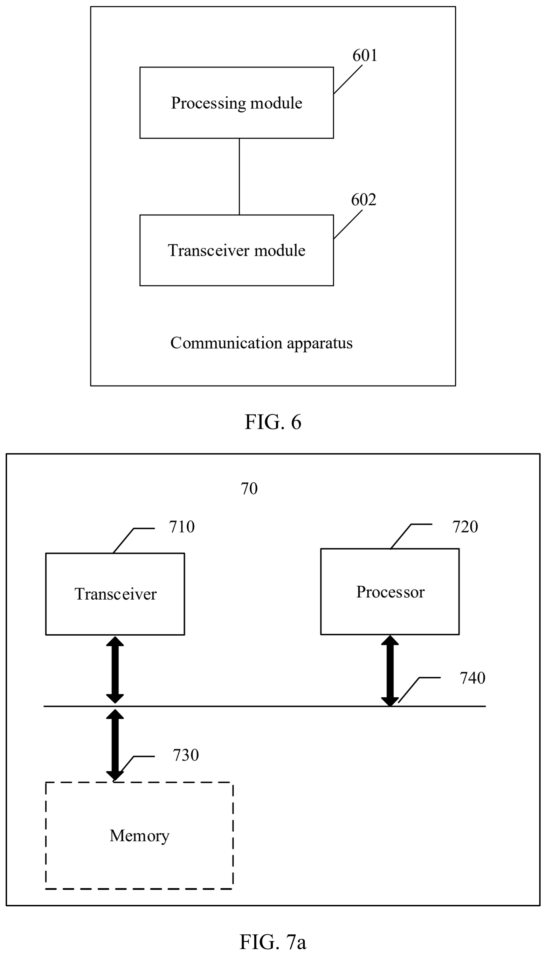

In this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that in this application, division into the modules is an example, and is merely logical function division. During actual implementation, another division manner may be used. The communication apparatuses in embodiments of this application are described below in detail with reference to FIG. 6 to FIG. 8.

FIG. 6 is a diagram of a structure of a communication apparatus according to an embodiment of this application. As shown in FIG. 6, the communication apparatus includes a processing module 601 and a transceiver module 602. The transceiver module 602 may implement a corresponding communication function. The processing module 601 is configured to process data. For example, the transceiver module 602 may also be referred to as a communication interface, a communication module, or the like.

In some embodiments of this application, the communication apparatus may be configured to perform actions performed by the first communication apparatus in the foregoing method embodiments. In this case, the communication apparatus may be a WLAN device, a chip or functional module configured in the WLAN device, or the like. The transceiver module 602 is configured to perform a receiving/transmitting-related operation of the first communication apparatus in the foregoing method embodiments. The processing module 601 is configured to perform a processing-related operation of the first communication apparatus in the foregoing method embodiments.

For example, the processing module 601 is configured to generate a PPDU; and the transceiver module 602 is configured to send or output the PPDU.

It may be understood that the transceiver module 602 may send the PPDU to another communication apparatus, or the transceiver module 602 outputs the PPDU from the processing module 601 to another component, another functional module, or the like in the first communication apparatus. Related descriptions of outputting other information by the transceiver module are similar. Details are not described below again.

In some other embodiments of this application, the communication apparatus may be configured to perform actions performed by the second communication apparatus in the foregoing method embodiments. In this case, the communication apparatus may be a WLAN device, a chip or functional module configured in the WLAN device, or the like. The transceiver module 602 is configured to perform a receiving/transmitting-related operation of the second communication apparatus in the foregoing method embodiments. The processing module 601 is configured to perform a processing-related operation of the second communication apparatus in the foregoing method embodiments.

The transceiver module 602 is configured to receive or input a PPDU; and the processing module 601 is configured to perform channel estimation based on an LTF sequence.

Optionally, the communication apparatus may further include a storage module. The storage module may be configured to store instructions and/or data. The processing module 601 may read the instructions and/or the data in the storage module, so that the communication apparatus implements the foregoing method embodiments. For example, the storage module may be configured to store information such as an LTF sequence.

It may be understood that specific descriptions of the transceiver module and the processing module in embodiments of this application are merely examples. For specific functions, steps, or the like performed by the transceiver module and the processing module, refer to the foregoing method embodiments. Details are not described herein again.

In the foregoing embodiments, for descriptions of the PPDU, the LTF sequence, and the like, refer to the descriptions in the foregoing method embodiments. Details are not described herein again.

The foregoing describes the communication apparatus in this embodiment of this application. The following describes possible product forms of the communication apparatus. It should be understood that a product in any form that has a function of the communication apparatus in FIG. 6 falls within the protection scope of embodiments of this application. It should be further understood that the following description is merely an example, and does not limit a product form of the communication apparatus in embodiments of this application.

In a possible implementation, in the communication apparatus shown in FIG. 6, the processing module 601 may be one or more processors. The transceiver module 602 may be a transceiver. Alternatively, the transceiver module 602 may be a sending module and a receiving module. The sending module may be a transmitter. The receiving module may be a receiver. The sending module and the receiving module are integrated into one device, for example, a transceiver. In this embodiment of this application, the processor and the transceiver may be coupled, or the like. A manner of a connection between the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information, and then processed information is input into the processor.

As shown in FIG. 7a, a communication apparatus 70 includes one or more processors 720 and a transceiver 710.

In some embodiments of this application, the communication apparatus may be configured to perform steps, functions, or the like performed by the first communication apparatus in the foregoing method embodiments.

For example, the processor 720 is configured to generate a PPDU; and the transceiver 710 is configured to send the PPDU.

In some other embodiments of this application, the communication apparatus may be configured to perform steps, functions, or the like performed by the second communication apparatus in the foregoing method embodiments.

The transceiver 710 is configured to receive a PPDU; and the processor 720 is configured to perform channel estimation based on an LTF sequence.

It may be understood that specific descriptions of the transceiver and the processor in embodiments of this application are merely examples. For specific functions, steps, or the like performed by the transceiver and the processor, refer to the foregoing method embodiments. Details are not described herein again.

In the foregoing embodiments, for descriptions of the PPDU, the LTF sequence, and the like, refer to the descriptions in the foregoing method embodiments. Details are not described herein again.

In various implementations of the communication apparatus shown in FIG. 7a, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 70 may further include one or more memories 730, configured to store program instructions, data, and/or the like. The memory 730 is coupled to the processor 720. The coupling in embodiments of this application may be an indirect coupling or a communication connection between apparatuses, units, or modules in an electrical form, a mechanical form, or another form, and is used for information exchange between the apparatuses, the units, or the modules. The processor 720 may cooperate with the memory 730. The processor 720 may execute the program instructions stored in the memory 730. Optionally, at least one of the one or more memories may be included in the processor. For example, the memory may be configured to store an LTF sequence and the like.

A specific connection medium between the transceiver 710, the processor 720, and the memory 730 is not limited in embodiments of this application. In embodiments of this application, in FIG. 7a, the memory 730, the processor 720, and the transceiver 710 are connected through a bus 740. The bus is represented by a bold line in FIG. 7a. A manner of a connection between other components is merely an example for description, and is not limited thereto. The bus may be classified as an address bus, a data bus, a control bus, or the like. For ease of representation, only one bold line is used for representation in FIG. 7a, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and may implement or perform the method, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module, or the like.

In embodiments of this application, the memory may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), or a compact disc read-only memory (compact disc read-only memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 720 is mainly configured to: process a communication protocol and communication data, control the entire communication apparatus, perform a software program, and process data of the software program. The memory 730 is mainly configured to store the software program and the data. The transceiver 710 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

After the communication apparatus is powered on, the processor 720 may read the software program in the memory 730, interpret and execute an instruction of the software program, and process data of the software program. When the data needs to be sent in a wireless manner, the processor 720 performs baseband processing on to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 720. The processor 720 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in embodiments of this application may alternatively include more components than those shown in FIG. 7a, or the like. This is not limited in embodiments of this application. The method performed by the processor and the transceiver is merely an example. For specific steps performed by the processor and the transceiver, refer to the method described above.

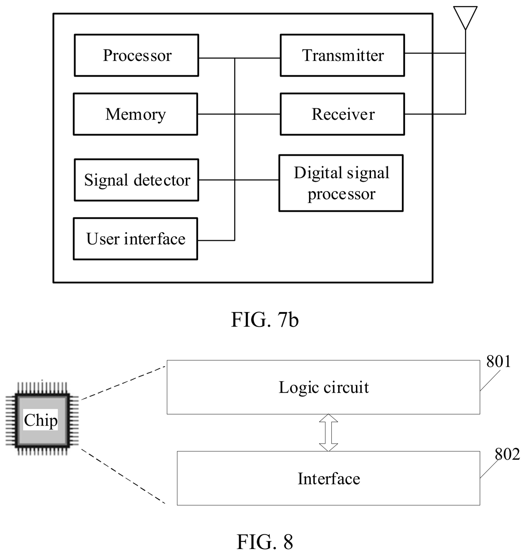

FIG. 7b is a diagram of a structure of another communication apparatus according to an embodiment of this application. As shown in FIG. 7b, the communication apparatus may include at least one of a processor, a memory, a transmitter, a receiver, a signal detector, a digital signal processor, and a display (configured to display a user interface). For related descriptions of the processor, the memory, the transmitter, the receiver, and the display, refer to FIG. 7a. Details are not described herein again. The signal detector may be configured to detect a signal, for example, detect a reference signal, a demodulation signal, or the like. The digital signal processor may be configured to process data input to or output by the communication apparatus. Descriptions of the signal detector and the digital signal processor are not limited in embodiments of this application.

In another possible implementation, in the communication apparatus shown in FIG. 6, the processing module 601 may be one or more logic circuits, and the transceiver module 602 may be an input/output interface that is also referred to as a communication interface, an interface circuit, an interface, or the like. Alternatively, the transceiver module 602 may be a sending module and a receiving module. The sending module may be an output interface. The receiving module may be an input interface. The sending module and the receiving module are integrated into one module, for example, an input/output interface. As shown in FIG. 8, a communication apparatus shown in FIG. 8 includes a logic circuit 801 and an interface 802. That is, the processing module 601 may be implemented by using the logic circuit 801, and the transceiver module 602 may be implemented by using the interface 802. The logic circuit 801 may be a chip, a processing circuit, an integrated circuit, a system on chip (system on chip, SoC), or the like. The interface 802 may be a communication interface, an input/output interface, a pin, or the like. For example, FIG. 8 is an example in which the foregoing communication apparatus is a chip. The chip includes the logic circuit 801 and the interface 802.

In embodiments of this application, the logic circuit and the interface may be further coupled to each other. A specific manner of a connection between the logic circuit and the interface is not limited in embodiments of this application.

In some embodiments of this application, the communication apparatus may be configured to perform steps, functions, or the like performed by the first communication apparatus in the foregoing method embodiments.

For example, the logic circuit 801 is configured to generate a PPDU; and the interface 802 is configured to output the PPDU.

In some other embodiments of this application, the communication apparatus may be configured to perform steps, functions, or the like performed by the second communication apparatus in the foregoing method embodiments.

The interface 802 is configured to input a PPDU; and the logic circuit 801 is configured to perform channel estimation based on an LTF sequence.

It may be understood that specific descriptions of the logic circuit and the interface in embodiments of this application are merely examples. For specific functions, steps, or the like performed by the logic circuit and the interface, refer to the foregoing method embodiments. Details are not described herein again.

For example, the chip may further include a memory. The memory may be configured to store an LTF sequence.

In the foregoing embodiments, for descriptions of the PPDU, the LTF sequence frame, and the like, refer to the descriptions in the foregoing method embodiments. Details are not described herein again.

It may be understood that the communication apparatus shown in embodiments of this application may implement the method provided in embodiments of this application in a form of hardware or in a form of software. This is not limited in embodiments of this application.

Embodiments of this application further provide a communication system. The communication system includes a first communication apparatus and a second communication apparatus. For descriptions of the first communication apparatus and the second communication apparatus, refer to the foregoing descriptions.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are performed.

This application further provides a computer program product. The computer program product includes computer code or a computer program. When the computer code or the computer program is run on a computer, operations and/or processing performed by the second communication apparatus in the method provided in this application are performed.

In the several embodiments provided in this application, it should be understood that the disclosed system, apparatus, and method may be implemented in other manners. For example, the described apparatus embodiments are merely examples. For example, division into the modules may be logical function division. During actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in a form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, a network device, or the like) to perform all or some of the steps in the method described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

generating a physical layer protocol data unit PPDU, wherein the PPDU comprises a long training field LTF carrying an LTF sequence, a length of the LTF sequence corresponds to a bandwidth of the PPDU, the LTF sequence is determined based on a basic LTF sequence corresponding to a basic subchannel, the bandwidth of the PPDU is greater than 320 MHz, and the LTF sequence is a sequence in a 2x mode; and
sending the PPDU.

2. A communication method, wherein the method comprises:

receiving a physical layer protocol data unit PPDU, wherein the PPDU comprises a long training field LTF carrying an LTF sequence, a length of the LTF sequence corresponds to a bandwidth of the PPDU, the LTF sequence is determined based on a basic LTF sequence corresponding to a basic subchannel, the bandwidth of the PPDU is greater than 320 MHz, and the LTF sequence is a sequence in a 2x mode; and
performing channel estimation based on the LTF sequence.

3. The method according to claim 1 or 2, wherein the LTF sequence is determined based on a sequence corresponding to the unit subchannel, and the sequence corresponding to the unit subchannel is determined based on the basic LTF sequence.

4. The method according to claim 3, wherein a modulus value of a rotation factor of the sequence corresponding to the unit subchannel is 1, and a bandwidth of the unit subchannel is any one of 20 MHz and 40 MHz.

5. The method according to claim 3 or 4, wherein the LTF sequence is determined based on the sequence corresponding to the unit subchannel and a rotation factor sequence, and the rotation factor sequence is a sequence formed by rotation factors.

6. The method according to claim 4 or 5, wherein that the modulus value of the rotation factor of the sequence corresponding to the unit subchannel is 1 comprises: the rotation factor of the sequence corresponding to the unit subchannel is 1 or -1.

7. The method according to claim 6, wherein the LTF sequence is obtained based on periodic extension and phase reversal of the sequence corresponding to the unit subchannel in frequency domain; and
a quantity of times the periodic extension is performed is equal to a length of the rotation factor sequence, 1 in the rotation factor sequence corresponds to not performing phase reversal on the sequence corresponding to the unit subchannel, and -1 in the rotation factor sequence corresponds to performing phase reversal on the sequence corresponding to the unit subchannel.

8. The method according to any one of claims 5 to 7, wherein the length of the rotation factor sequence is determined by the bandwidth of the PPDU and the bandwidth of the unit subchannel.

9. The method according to any one of claims 5 to 8, wherein the rotation factor sequence meets at least one of the following:

in the rotation factor sequence, values of a first group of elements are the same as values of a second group of elements, positions of the second group of elements are symmetrical to positions of the first group of elements with a central position of the rotation factor sequence as a symmetry axis, the first group of elements comprise a $(2 \times i - 1)^{th}$ element and a $(2 \times i)^{th}$ element, and i is less than or equal to 1/2 of the length of the rotation factor sequence; and
in the rotation factor sequence, values of a third group of elements are opposite to values of a fourth group of elements, positions of the third group of elements are symmetrical to positions of the fourth group of elements with the central position of the rotation factor sequence as the symmetry axis, the third group of elements comprise a $(2 \times j - 1)^{th}$ element and a $(2 \times j)^{th}$ element, j is less than or equal to 1/2 of the length of the rotation factor sequence, and i is not equal to j.

10. The method according to any one of claims 1 to 9, wherein the bandwidth of the PPDU is 640 MHz, and the LTF sequence comprises any one of the following:

$\pm\{LTF_{80MHz\_2x}(1:245),\quad LTF_{80MHz\_2x}(246:500),\quad 0,\quad -LTF_{80MHz\_2x}(502:756),\quad -LTF_{80MHz\_2x}(757:1001), 0_{23},$

$-LTF_{80MHz\_2x}(1:245),\quad -LTF_{80MHz\_2x}(246:500),\quad 0,\quad -LTF_{80MHz\_2x}(502:756),\quad -LTF_{80MHz\_2x}(757:1001), 0_{23},$

$-LTF_{80MHz\_2x}(1:245),\quad -LTF_{80MHz\_2x}(246:500),\quad 0,\quad LTF_{80MHz\_2x}(502:756),\quad LTF_{80MHz\_2x}(757:1001), 0_{23},$

$-LTF_{80MHz\_2x}(1:245),\quad -LTF_{80MHz\_2x}(246:500),\quad 0,\quad -LTF_{80MHz\_2x}(502:756),\quad -LTF_{80MHz\_2x}(757:1001), 0_{23},$

$-LTF_{80MHz\_2x}(1:245),\quad -LTF_{80MHz\_2x}(246:500),\quad 0,\quad LTF_{80MHz\_2x}(502:756),\quad LTF_{80MHz\_2x}(757:1001), 0_{23},$

$LTF_{80MHz\_2x}(1:245), LTF_{80MHz\_2x}(246:500), 0, LTF_{80MHz\_2x}(502:756), LTF_{80MHz\_2x}(757:1001), 0_{23},$

$LTF_{80MHz\_2x}(1:245), LTF_{80MHz\_2x}(246:500), 0, LTF_{80MHz\_2x}(502:756), LTF_{80MHz\_2x}(757:1001), 0_{23},$

$-LTF_{80MHz\_2x}(1:245),\quad -LTF_{80MHz\_2x}(246:500),\quad 0,\quad LTF_{80MHz\_2x}(502:756),\quad LTF_{80MHz\_2x}(757:1001)\};$

$\pm\{LTF_{80MHz\_2x}(1:245),\quad LTF_{80MHz\_2x}(246:500),\quad 0,\quad LTF_{80MHz\_2x}(502:756),\quad LTF_{80MHz\_2x}(757:1001), 0_{23},$

$-LTF_{80MHz\_2x}(1:245),\quad -LTF_{80MHz\_2x}(246:500),\quad 0,\quad LTF_{80MHz\_2x}(502:756),$

$\text{LTF}_{80\text{MHz}\_2x}(757{:}1001)$, $0_{23}$,

$\text{LTF}_{80\text{MHz}\_2x}(1{:}245)$, $-\text{LTF}_{80\text{MHz}\_2x}(246{:}500)$, $0$, $-\text{LTF}_{80\text{MHz}\_2x}(502{:}756)$, $\text{LTF}_{80\text{MHz}\_2x}(757{:}1001)$, $0_{23}$,

$-\text{LTF}_{80\text{MHz}\_2x}(1{:}245)$, $\text{LTF}_{80\text{MHz}\_2x}(246{:}500)$, $0$, $-\text{LTF}_{80\text{MHz}\_2x}(502{:}756)$, $\text{LTF}_{80\text{MHz}\_2x}(757{:}1001)$, $0_{23}$,

$-\text{LTF}_{80\text{MHz}\_2x}(1{:}245)$, $\text{LTF}_{80\text{MHz}\_2x}(246{:}500)$, $0$, $-\text{LTF}_{80\text{MHz}\_2x}(502{:}756)$, $\text{LTF}_{80\text{MHz}\_2x}(757{:}1001)$, $0_{23}$,

$\text{LTF}_{80\text{MHz}\_2x}(1{:}245)$, $-\text{LTF}_{80\text{MHz}\_2x}(246{:}500)$, $0$, $-\text{LTF}_{80\text{MHz}\_2x}(502{:}756)$, $\text{LTF}_{80\text{MHz}\_2x}(757{:}1001)$, $0_{23}$,

$-\text{LTF}_{80\text{MHz}\_2x}(1{:}245)$, $-\text{LTF}_{80\text{MHz}\_2x}(246{:}500)$, $0$, $\text{LTF}_{80\text{MHz}\_2x}(502{:}756)$, $\text{LTF}_{80\text{MHz}\_2x}(757{:}1001)$, $0_{23}$,

$\text{LTF}_{80\text{MHz}\_2x}(1{:}245)$, $\text{LTF}_{80\text{MHz}\_2x}(246{:}500)$, $0$, $\text{LTF}_{80\text{MHz}\_2x}(502{:}756)$, $\text{LTF}_{80\text{MHz}\_2x}(757{:}1001)\}$;

$\pm\{\text{LTF}_{80\text{MHz}\_2x}(1{:}245)$, $\text{LTF}_{80\text{MHz}\_2x}(246{:}500)$, $0$, $\text{LTF}_{80\text{MHz}\_2x}(502{:}756)$, $\text{LTF}_{80\text{MHz}\_2x}(757{:}1001)$, $0_{23}$,

$-\text{LTF}_{80\text{MHz}\_2x}(1{:}245)$, $-\text{LTF}_{80\text{MHz}\_2x}(246{:}500)$, $0$, $-\text{LTF}_{80\text{MHz}\_2x}(502{:}756)$, $-\text{LTF}_{80\text{MHz}\_2x}(757{:}1001)$, $0_{23}$,

$-\text{LTF}_{80\text{MHz}\_2x}(1{:}245)$, $-\text{LTF}_{80\text{MHz}\_2x}(246{:}500)$, $0$, $-\text{LTF}_{80\text{MHz}\_2x}(502{:}756)$, $-\text{LTF}_{80\text{MHz}\_2x}(757{:}1001)$, $0_{23}$,

$-\text{LTF}_{80\text{MHz}\_2x}(1{:}245)$, $-\text{LTF}_{80\text{MHz}\_2x}(246{:}500)$, $0$, $\text{LTF}_{80\text{MHz}\_2x}(502{:}756)$, $\text{LTF}_{80\text{MHz}\_2x}(757{:}1001)$, $0_{23}$,

$\text{LTF}_{80\text{MHz}\_2x}(1{:}245)$, $\text{LTF}_{80\text{MHz}\_2x}(246{:}500)$, $0$, $-\text{LTF}_{80\text{MHz}\_2x}(502{:}756)$, $-\text{LTF}_{80\text{MHz}\_2x}(757{:}1001)$, $0_{23}$,

$\text{LTF}_{80\text{MHz}\_2x}(1{:}245)$, $\text{LTF}_{80\text{MHz}\_2x}(246{:}500)$, $0$, $\text{LTF}_{80\text{MHz}\_2x}(502{:}756)$, $\text{LTF}_{80\text{MHz}\_2x}(757{:}1001)$, $0_{23}$,

$\text{LTF}_{80\text{MHz}\_2x}(1{:}245)$, $\text{LTF}_{80\text{MHz}\_2x}(246{:}500)$, $0$, $\text{LTF}_{80\text{MHz}\_2x}(502{:}756)$, $\text{LTF}_{80\text{MHz}\_2x}(757{:}1001)$, $0_{23}$,

$-\text{LTF}_{80\text{MHz}\_2x}(1{:}245)$, $-\text{LTF}_{80\text{MHz}\_2x}(246{:}500)$, $0$, $-\text{LTF}_{80\text{MHz}\_2x}(502{:}756)$, $-\text{LTF}_{80\text{MHz}\_2x}(757{:}1001)\}$; or

$\pm\{\text{LTF}_{80\text{MHz}\_2x}(1{:}245)$, $\text{LTF}_{80\text{MHz}\_2x}(246{:}500)$, $0$, $\text{LTF}_{80\text{MHz}\_2x}(502{:}756)$, $\text{LTF}_{80\text{MHz}\_2x}(757{:}1001)$, $0_{23}$,

$-\text{LTF}_{80\text{MHz}\_2x}(1{:}245)$, $-\text{LTF}_{80\text{MHz}\_2x}(246{:}500)$, $0$, $-\text{LTF}_{80\text{MHz}\_2x}(502{:}756)$, $-\text{LTF}_{80\text{MHz}\_2x}(757{:}1001)$, $0_{23}$,

$-\text{LTF}_{80\text{MHz}\_2x}(1{:}245)$, $-\text{LTF}_{80\text{MHz}\_2x}(246{:}500)$, $0$, $-\text{LTF}_{80\text{MHz}\_2x}(502{:}756)$, $-\text{LTF}_{80\text{MHz}\_2x}(757{:}1001)$, $0_{23}$,

$\text{LTF}_{80\text{MHz}\_2x}(1{:}245)$, $\text{LTF}_{80\text{MHz}\_2x}(246{:}500)$, $0$, $-\text{LTF}_{80\text{MHz}\_2x}(502{:}756)$, $-$

$LTF_{80MHz\_2x}(757:1001)$, $0_{23}$,

$\quad$ $LTF_{80MHz\_2x}(1:245)$, $\quad$ $LTF_{80MHz\_2x}(246:500)$, $\quad$ 0, $\quad$ $-LTF_{80MHz\_2x}(502:756)$, $\quad$ $-LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $\quad$ $-LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $\quad$ $-LTF_{80MHz\_2x}(757:1001)$, $0_{23}$,

$\quad$ $LTF_{80MHz\_2x}(1:245)$, $LTF_{80MHz\_2x}(246:500)$, 0, $LTF_{80MHz\_2x}(502:756)$, $LTF_{80MHz\_2x}(757:1001)\}$;

wherein
$LTF_{80MHz\_2x}(1:245)$ represents 1st to 245th elements in a sequence $LTF_{80MHz\_2x}$, $LTF_{80MHz\_2x}(246:500)$ represents 246th to 500th elements in the sequence $LTF_{80MHz\_2x}$, $LTF_{80MHz\_2x}(502:756)$ represents 502nd to 756th elements in the sequence $LTF_{80MHz\_2x}$, $LTF_{80MHz\_2x}(757:1001)$ represents 757th to 1001st elements in the sequence $LTF_{80MHz\_2x}$, the sequence $LTF_{80MHz\_2x}$ is a basic LTF sequence in the 2x mode, and $0_{23}$ represents that 23 consecutive elements in the LTF sequence are 0.

11. The method according to any one of claims 1 to 9, wherein the bandwidth of the PPDU is 480 MHz, and the LTF sequence comprises any one of the following:

$\quad$ $\pm\{LTF_{80MHz\_2x}(1:245)$, $\quad$ $LTF_{80MHz\_2x}(246:500)$, $\quad$ 0, $\quad$ $-LTF_{80MHz\_2x}(502:756)$, $\quad$ $-LTF_{80MHz\_2x}(757:1001)$, $0_{23}$,

$\quad$ $LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $\quad$ $-LTF_{80MHz\_2x}(757:1001)$, $0_{23}$,

$\quad$ $-LTF_{80MHz\_2x}(1:245)$, $\quad$ $-LTF_{80MHz\_2x}(246:500)$, $\quad$ 0, $\quad$ $-LTF_{80MHz\_2x}(502:756)$, $\quad$ $-LTF_{80MHz\_2x}(757:1001)$, $0_{23}$,

$\quad$ $LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$\quad$ $LTF_{80MHz\_2x}(1:245)$, $\quad$ $LTF_{80MHz\_2x}(246:500)$, $\quad$ 0, $\quad$ $-LTF_{80MHz\_2x}(502:756)$, $\quad$ $-LTF_{80MHz\_2x}(757:1001)\}$; or

$\quad$ $\pm\{-LTF_{80MHz\_2x}(1:245)$, $\quad$ $-LTF_{80MHz\_2x}(246:500)$, $\quad$ 0, $\quad$ $LTF_{80MHz\_2x}(502:756)$, $\quad$ $LTF_{80MHz\_2x}(757:1001)$, $0_{23}$,

$\quad$ $LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$\quad$ $LTF_{80MHz\_2x}(1:245)$, $LTF_{80MHz\_2x}(246:500)$, 0, $LTF_{80MHz\_2x}(502:756)$, $LTF_{80MHz\_2x}(757:1001)$, $0_{23}$,

$LTF_{80MHz\_2x}(1:245)$, $-LTF_{80MHz\_2x}(246:500)$, 0, $-LTF_{80MHz\_2x}(502:756)$, $-LTF_{80MHz\_2x}(757:1001)$, $0_{23}$,

$LTF_{80MHz\_2x}(1:245)$, $LTF_{80MHz\_2x}(246:500)$, 0, $-LTF_{80MHz\_2x}(502:756)$, $-LTF_{80MHz\_2x}(757:1001)$, $0_{23}$,

$-LTF_{80MHz\_2x}(1:245)$, $LTF_{80MHz\_2x}(246:500)$, 0, $LTF_{80MHz\_2x}(502:756)$, $-LTF_{80MHz\_2x}(757:1001)$}; wherein

$LTF_{80MHz\_2x}(1:245)$ represents $1^{st}$ to $245^{th}$ elements in a sequence $LTF_{80MHz\_2x}$, $LTF_{80MHz\_2x}(246:500)$ represents $246^{th}$ to $500^{th}$ elements in the sequence $LTF_{80MHz\_2x}$, $LTF_{80MHz\_2x}(502:756)$ represents $502^{nd}$ to $756^{th}$ elements in the sequence $LTF_{80MHz\_2x}$, $LTF_{80MHz\_2x}(757:1001)$ represents $757^{th}$ to $1001^{st}$ elements in the sequence $LTF_{80MHz\_2x}$, the sequence $LTF_{80MHz\_2x}$ is a basic LTF sequence in the 2x mode, and $0_{23}$ represents that 23 consecutive elements in the LTF sequence are 0.

12. A communication apparatus, comprising a module configured to perform the method according to any one of claims 1 to 11.

13. A communication apparatus, comprising a processor, wherein the processor is configured to perform the method according to any one of claims 1 to 11.

14. A communication apparatus, comprising a logic circuit and an interface, wherein the logic circuit is coupled to the interface; and
the interface is configured to input and/or output information, and the logic circuit is configured to perform the method according to any one of claims 1 to 11.

15. A computer-readable storage medium, wherein the computer-readable storage medium is configured to store a computer program, and when the computer program is executed, the method according to any one of claims 1 to 11 is performed.

16. A communication method, comprising the method according to any one of claims 1 to 11.

17. A communication system, comprising a first communication apparatus and a second communication apparatus, wherein the first communication apparatus is configured to perform the method according to any one of claims 1 and 3 to 11, and the second communication apparatus is configured to perform the method according to any one of claims 2 to 11.

STA3

AP1

STA1

STA2

FIG. 1

EP 4 718 790 A1

A symbol length of the EHT-LTF is
related to a GI and an LTF type

| 8 μs | 8 μs | 4 μs | 4 μs | 8 μs: 4 μs per symbol | 4 μs per symbol | 4 μs | | | | |
|------|------|------|------|------|------|------|------|------|------|------|
| L-STF | L-LTF | L-SIG | RL-SIG | U-SIG | EHT-SIG | EHT-STF | EHT-LTF | EHT-LTF | Data (data) | PE |

FIG. 2a

EP 4 718 790 A1

| 8 μs | 8 μs | 4 μs | 4 μs | 8 μs: 4 μs per symbol | 8 μs | | | | |
|---|---|---|---|---|---|---|---|---|---|
| L-STF | L-LTF | L-SIG | RL-SIG | U-SIG | EHT-STF | EHT-LTF | EHT-LTF | Data | PE |

A symbol length of the EHT-LTF is related to a GI and an LTF type

FIG. 2b

First communication apparatus

Second communication apparatus

Generate a PPDU, where the PPDU includes an LTF carrying an LTF sequence, the LTF sequence is determined based on a basic LTF sequence corresponding to a basic subchannel, a length of the LTF sequence corresponds to a bandwidth of the PPDU, and the bandwidth of the PPDU is greater than 320 MHz

301

PPDU

302

Perform channel estimation based on the LTF sequence

303

FIG. 3

FIG. 4a

FIG. 4b

996-tone RUs

2×996-tone RUs

5×996-tone MRU 1

5×996-tone MRU 2

5×996-tone MRU 3

5×996-tone MRU 4

5×996-tone MRU 5

5×996-tone MRU 6

5×996-tone MRU 7

5×996-tone MRU 8

5×996-tone MRU 9

5×996-tone MRU 10

5×996-tone MRU 11

5×996-tone MRU 12

Null subcarriers

DC

FIG. 4c

FIG. 4d

EP 4 718 790 A1

FIG. 4e

484-tone RUs
996-tone RUs
2×996-tone RUs
5×996+484-tone MRU 1
5×996+484-tone MRU 2
5×996+484-tone MRU 3
5×996+484-tone MRU 4
5×996+484-tone MRU 5
5×996+484-tone MRU 6
5×996+484-tone MRU 7
5×996+484-tone MRU 8
5×996+484-tone MRU 9
5×996+484-tone MRU 10
5×996+484-tone MRU 11
5×996+484-tone MRU 12
5×996+484-tone MRU 13
5×996+484-tone MRU 14
5×996+484-tone MRU 15
5×996+484-tone MRU 16
5×996+484-tone MRU 17
5×996+484-tone MRU 18
5×996+484-tone MRU 19
5×996+484-tone MRU 20
5×996+484-tone MRU 21
5×996+484-tone MRU 22
5×996+484-tone MRU 23
5×996+484-tone MRU 24

Null subcarriers

DC

FIG. 4f

FIG. 4g

FIG. 5a

FIG. 5b

Null subcarriers

DC

Null subcarriers

484-tone RUs
996-tone RUs
2×996-tone RUs
4×996+484-tone MRU 1
4×996+484-tone MRU 2
4×996+484-tone MRU 3
4×996+484-tone MRU 4
4×996+484-tone MRU 5
4×996+484-tone MRU 6
4×996+484-tone MRU 7
4×996+484-tone MRU 8
4×996+484-tone MRU 9
4×996+484-tone MRU 10
4×996+484-tone MRU 11
4×996+484-tone MRU 12
4×996+484-tone MRU 13
4×996+484-tone MRU 14
4×996+484-tone MRU 15
4×996+484-tone MRU 16
4×996+484-tone MRU 17
4×996+484-tone MRU 18
4×996+484-tone MRU 19
4×996+484-tone MRU 20

FIG. 5c

FIG. 5d

601

Processing module

602

Transceiver module

Communication apparatus

FIG. 6

70

710

Transceiver

720

Processor

740

730

Memory

FIG. 7a

| Processor | | Transmitter |
|---|---|---|
| Memory | | Receiver |
| Signal detector | | Digital signal processor |
| User interface | | |

FIG. 7b

Chip

Logic circuit 801

Interface 802

FIG. 8

## INTERNATIONAL SEARCH REPORT

| International application No. |
|---|
| **PCT/CN2024/100659** |

**A. CLASSIFICATION OF SUBJECT MATTER**

H04L 25/02(2006.01)i; H04L 5/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS: CNTXT; CNKI; VEN; DWPI; USTXT; EPTXT; WOTXT; 3GPP; IEEE: 无线局域网, 物理层协议数据单元, 长训练, 序列, 带宽, 大, 旋转, 子信道, 子载波, WLAN, PPDU, LTF, sequence, bandwidth, tone

**C. DOCUMENTS CONSIDERED TO BE RELEVANT**

| Category* | Citation of document, with indication, where appropriate, of the relevant passages | Relevant to claim No. |
|---|---|---|
| A | CN 113923082 A (HUAWEI TECHNOLOGIES CO., LTD.) 11 January 2022 (2022-01-11) description, paragraphs [0081]-[04432] and [0545]-[0563] | 1-17 |
| A | CN 116015579 A (HUAWEI TECHNOLOGIES CO., LTD.) 25 April 2023 (2023-04-25) entire document | 1-17 |
| A | CN 115299017 A (LG ELECTRONICS INC.) 04 November 2022 (2022-11-04) entire document | 1-17 |
| A | US 2023104295 A1 (QUALCOMM INC.) 06 April 2023 (2023-04-06) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 September 2024** | **11 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/100659**

| Patent document cited in search report | | | Publication date (day/month/year) | Patent family member(s) | | | Publication date (day/month/year) |
|---|---|---|---|---|---|---|---|
| CN | 113923082 | A | 11 January 2022 | WO | 2022007870 | A1 | 13 January 2022 |
| | | | | EP | 4167534 | A1 | 19 April 2023 |
| | | | | CN | 113923082 | B | 10 March 2023 |
| CN | 116015579 | A | 25 April 2023 | WO | 2022028369 | A1 | 10 February 2022 |
| | | | | EP | 4156535 | A1 | 29 March 2023 |
| CN | 115299017 | A | 04 November 2022 | WO | 2021187854 | A1 | 23 September 2021 |
| | | | | KR | 20220132613 | A | 30 September 2022 |
| | | | | JP | 2023518733 | A | 08 May 2023 |
| | | | | US | 2023327932 | A1 | 12 October 2023 |
| | | | | US | 12021675 | B2 | 25 June 2024 |
| | | | | US | 2023127103 | A1 | 27 April 2023 |
| | | | | EP | 4096179 | A1 | 30 November 2022 |
| | | | | EP | 4096179 | A4 | 14 June 2023 |
| US | 2023104295 | A1 | 06 April 2023 | US | 11711184 | B2 | 25 July 2023 |
| | | | | TW | 202324959 | A | 16 June 2023 |
| | | | | WO | 2023059403 | A1 | 13 April 2023 |
| | | | | US | 2024007241 | A1 | 04 January 2024 |
| | | | | US | 12058064 | B2 | 06 August 2024 |
| | | | | EP | 4413706 | A1 | 14 August 2024 |

Form PCT/ISA/210 (patent family annex) (July 2022)

**EP 4 718 790 A1**

**Patent documents cited in the description**

- CN 202310810353